(19) Europäisches Patentamt
European Patent Office
Office européen des brevets

(11) Veröffentlichungsnummer: **0 000 024**
**A1**

(12) # EUROPÄISCHE PATENTANMELDUNG

(21) Anmeldenummer: **78100036.9**

(22) Anmeldetag: **01.06.78**

(51) Int. Cl.²: **G 08 G 79/04,** C 06 G 79/04, C 08 K 5/53, C 07 F 9/28, C 07 F 9/32, C 07 F 9/40, D 06 M 16/62

(30) Priorität: **11.06.77 DE 2726478**

(43) Veröffentlichungstag der Anmeldung: **20.12.78 Patentblatt 78/1**

(84) Benannte Vertragsstaaten: **BE CH DE FR GB NL**

(71) Anmelder: **Hoechst Aktiengesellschaft, Postfach 80 03 20, D-6230 Frankfurt/Main 80 (DE)**

(72) Erfinder: **Dürsch, Walter, Dr., In der Braubach 4, D-6240 Königstein/Taunus (DE)**

(72) Erfinder: **Kleiner, Hans-Jerg, Dr., Altkönigstrasse 11a, D-6242 Kronberg/Taunus (DE)**

(72) Erfinder: **Linke, Fritz, Dr., Im Flemetz 8, D-6240 Königstein/Taunus (DE)**

(54) **Phosphor enthaltende Polyaddukte und Verfahren zu deren Herstellung sowie deren Verwendung zur flammhemmenden Ausrüstung von Textilmaterial.**

(57) Mischungen oligomerer Phosphorverbindungen, die erhalten werden durch Umsetzung in der 1. Stufe eines 1 bis 6 wertigen Alkohols mit Phosphin – Phosphon- und Phosphorsäurederivaten, die mindestens ein Anhydrid-Sauerstoff enthalten und noch endständige saure P-OH Reste enthalten können und anschließende Umsetzung in der 2. Stufe mit Alkylenoxiden oder Alkylencarbonaten. Diese Phosphorverbindungen, die Hydroxyalkylphosphonester-gruppen enthalten, eignen sich direkt als Flammschutzmittel für Textilien oder als Vorprodukte hierzu.

EP 0 000 024 A1

HOECHST AKTIENGESELLSCHAFT HOE 77/F 119 Dr.OT/jk

Phosphor enthaltende Polyaddukte und Verfahren zu deren Herstellung sowie deren Verwendung zur flammhemmenden Ausrüstung von Textilmaterial

Die Herstellung von Hydroxyalkyl-Polyphosphaten durch Umsetzung von Polyphosphorsäure und Alkylenoxiden wurde bereits (im US 3 099 676) beschrieben. Die Reaktionsprodukte weisen alle relativ sehr hohe Hydroxyl-Zahlen auf. Dadurch wird eine waschfeste Fixierung, z. B. mit Hilfe von Methylolmelamin-Derivaten sehr erschwert. Durch Erhitzen von Vinylphosphonsäure-bis-chloräthylester wurden unter Abspaltung von 1,2-Dichloräthan oligomere Vinylphosphonsäureester erhalten, die gegebenenfalls nachoxalkyliert wurden und nach radikalischer Vernetzung als Flammhemmausrüstungen dienten (DOS 2 228 698). Beim Aushärten können jedoch durch Sauerstoff-Inhibierung Schwierigkeiten auftreten.
Ferner wurden bereits Phosphonsäure-dialkylester durch Einwirkung von Di-halogen-alkanen bei Temperaturen um 180 °C in oligomere Phosphonsäure-ester überführt, die gegebenenfalls noch nachoxalkyliert wurden (US 3 956 431). Bei dieser Verfahrensweise entstehen als unerwünschte Nebenprodukte meist Methylchlorid oder Methylbromid. Beides sind leicht flüchtige toxische Verbindungen, die aus Umweltschutzgründen - relativ umständlich - absorbiert werden müssen und dadurch eine Produktion erheblich erschweren.
Ausgehend von den Umsetzungsprodukten aus Tris-halogenphosphaten und Polyphosphorsäuren und gegebenenfalls zusätzlich

Phosphorpentoxid, wurden durch nachfolgende Einwirkung von Alkylenoxiden - (gemäß DOS 2 036 595) - bereits halogenhaltige Oligophosphorsäureester erhalten. Die Reaktionsprodukte mit hinreichend niederen Hydroxylzahlen sind jedoch wasserunlöslich. Sie sind daher z. B. für Flammhemmausrüstungen nicht geeignet. Wasserlösliche Derivate hingegen weisen wiederum unerwünscht hohe Hydroxyl-Zahlen auf und sind aus diesem Grund schwer waschfest fixierbar.

Für optimale permanente Flammhemmausrüstungen, vor allem von textilen Bodenbelägen, sind je nach chemischer Substrat-Beschaffenheit "maßgeschneiderte" wasserlösliche oligomere Phosphorverbindungen mit speziellen niederen oder höheren Hydroxyl-Zahlen, mit speziellen Phosphorbindungsarten und Verzweigungsgraden notwendig.

Gegenstand der Erfindung sind Gemische (I) mit einer sehr großen Variationsbreite bezüglich ihrer Zusammensetzung und ihrer physikalischen, chemischen und flammhemmenden Eigenschaften, bestehend aus oligomeren Phosphorverbindungen der allgemeinen Formeln $I_Z$, $I_A$, $I_K$ und $I_{bo}$.

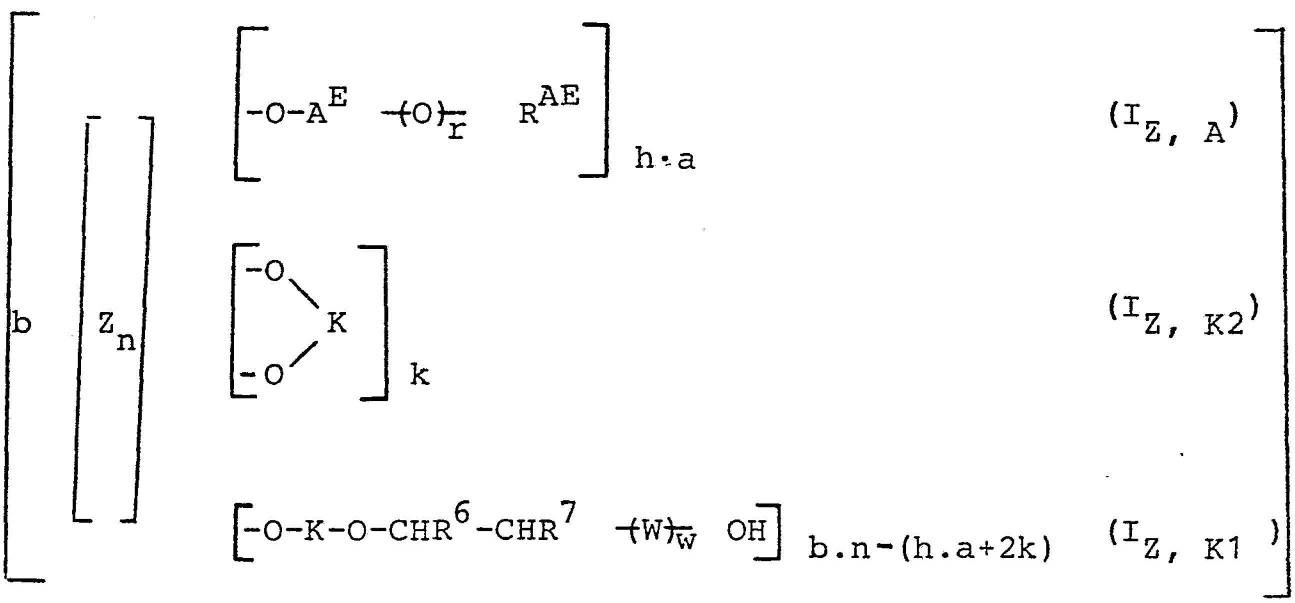

$(I_Z)$

$$+ h\cdot(2-a) \quad R^{AE} -(O)_r- A^E-O-CHR^6-CHR^7 -(W)_w- OH \qquad (I_A)$$

$$+ k + \frac{h.a}{2} \quad K -(O-CHR^6-CHR^7 -(W)_w- OH)_2 \qquad (I_K)$$

$$+ j \quad R^{AE} -(O)_r- A^E-O-CHR^6-CHR^7-O-K-O-CHR^6-CHR^7 -(W)_w OH$$

(I

Hierbei bedeuten:

$A^E$ eine Gruppe der Formeln

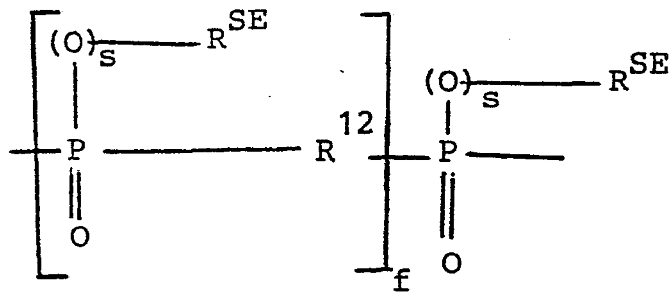

oder

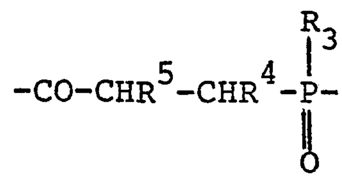

K eine Gruppe der Formeln

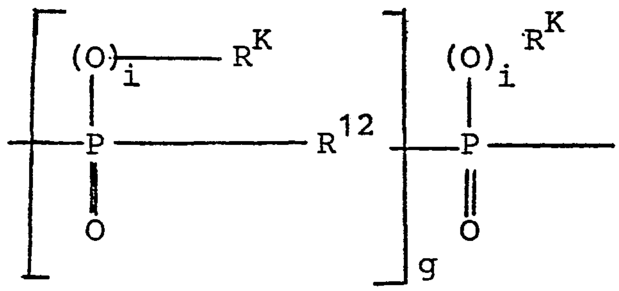

$(=K^P)$ oder

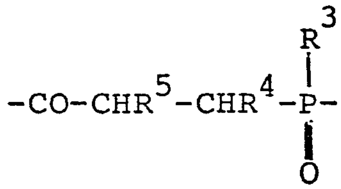

$(=K^{PL})$

W $(-O-K-O-CHR^6-CHR^7-)_m(-O-K-)_q$,

w $= m + q = 0$ bis 1200, bevorzugt 1 bis 20 insbesondere 1 bis 5,

$R^1$ ggbf. ungesättigte und/oder verzweigte Alkylreste mit 1 - 5 Kohlenstoffatomen, die, wenn r=0 ist, ggbf. durch 1 oder 2 Chlor-oder Bromatome substituiert sein können, bevorzugt Methyl und Äthyl,

$R^{SE}$ das selbe wie $R^1$ und zusätzlich, wenn s=1 ist und $R^{SB}$ = H, auch $-CHR^6-CHR^7-O-K-O-CHR^6-CHR^7(W)_wOH$

$R^{AE}$ das selbe wie $R^{AB}$ und zusätzlich, wenn r = 1 ist und $R^{AB}$ = H, auch $CHR^6-CHR^7-O-K-O-CHR^6-CHR^7(W)_wOH$

$R^{SB}$ das selbe wie $R^1$ und zusätzlich, wenn s = 1 ist, Wasserstoff, bevorzugt Methyl und Äthyl und Wasserstoff,.

$R^{AB}$ das selbe wie $R^1$ und zusätzlich, wenn r = 1 ist, Wasserstoff und wenn r = 0 ist auch $CN-C_2H_4$-
bevorzugt Methyl, Äthyl und Wasserstoff,

$R^3$ eine $(C_1-C_4)$-Alkylgruppe, die gegebenenfalls durch Halogen, insbesondere Chlor, substituiert, vorzugsweise einmal substituiert sein kann, eine Cycloalkylgruppe mit bis zu 8 C-Atomen, insbesondere Cyclopentyl, Cyclohexyl, eine Alkylengruppe mit bis zu 4 C-Atomen, insbesondere Vinyl und Allyl, eine Phenyl- oder Benzylgruppe, die gegebenenfalls durch Halogen, vorzugsweise Chlor und/oder Brom, substituiert, vorzugsweise 1- bis 3-mal substituiert sein kann,

$R^4$ Wasserstoff oder eine $(C_1-C_4)$-Alkylgruppe, bevorzugt Methyl,

$R^5$ Wasserstoff oder eine $(C_1-C_2)$-Alkylgruppe, bevorzugt Methyl, wobei bevorzugt mindestens einer der Reste $R^4$, $R^5$ Wasserstoff ist,

$R^6$ Wasserstoff, Methyl, Chlormethyl,

$R^7$ Wasserstoff, Methyl oder Äthyl, vorzugsweise Wasserstoff,

$R^{12}$ Alkylen , Cycloalkylen, Arylen oder Aralkylen vorzusgweise $(C_1-C_6)$-Alkylen, Phenylen oder p-Xylylen oder phosphonhaltige Reste der Formel

$$-CHR^7-CHR^6-O-\underset{\underset{O}{\|}}{C}-CHR^3-CHR^4-\underset{\underset{O}{\|}}{\overset{R^{14}}{P}}-O-CHR^6-CHR^7- \qquad Z_{n,3}$$

in der $R^4$, $R^5$, $R^6$, $R^7$ die oben angegebenen Bedeutungen besitzen und $R^{14}$ die Bedeutungen wie $R^3$ hat oder die Gruppe $-O-CHR^6-CHR^7-$ bedeutet,

m 0 bis 1200, vorzugsweise 1 bis 20, insbesondere 1 bis 5

n 1 bis 6, vorzugsweise 2 bis 4,

q 0 oder 1, vorzugsweise 0,

b $\frac{2}{6}$ bis 1200, vorzugsweise 1 bis 20 und wenn $R^{AB}$ und/oder $R^{SB}$ Wasserstoff sind - ggbf. auch 0,

f, g, h 0 oder 1

i, r, s 0 oder 1

a 0, 1 oder 2

j 0 oder 1, aber 0 nur dann, wenn b = 0 und $R^{AB}$ und/oder $R^{SB}$ Wasserstoff sind,

k 0 bis $\frac{n \cdot h \cdot a}{2}$, bevorzugt 0, $C^K$ die Zahl der Kern-Anhydrid-Äquivalente von 2 bis 1200, bevorzugt von 3 bis 30,

$Z_n$ eine funktionellen Rest aus der Gruppe geradkettige oder ver-

BAD ORIGINAL

oder phosphorhaltige Reste der allgemeinen Formel

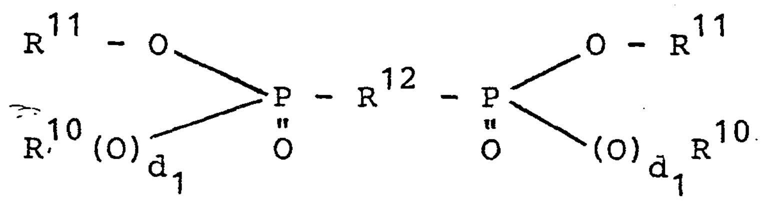

$Z_{n,2}$

in der $d_1$, $R^{10}$, $R^{11}$ Bedeutungen wie in $Z_{n,1}$ haben und $R^{12}$ die oben angegebenen Bedeutungen besitzt.

Die zur besseren Übersicht in den obigen Formeln benutzten hochgestellten Buchstaben B, E, A, S und K haben folgende Bedeutung: B heißt "Beginn" zeitlich gesehen, E ist "Ende" zeitlich gesehen, A ist "Außenrest", S ist "Seiten-Rest" und K ist "Kern-Rest".

Die Reaktionsgemische (I) werden erhalten, indem man, wenn
b 0 ist,
b Mole eines n-wertigen Alkohols der Formel

$$Z_n(-O-H)_n \qquad (II)$$

nach einem Mehr-Stufen-Verfahren (MSV) mit etwa b·n·e Anhydrid-Äquivalenten an organischen Phosphor-Anhydriden (III) der allgemeinen Formel

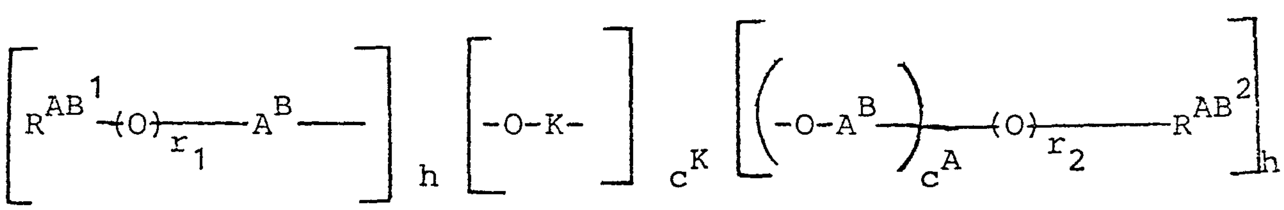

:

vermischt, wobei e die Zahl der freien Säurereste in den organischen Phosphonanhydriden (III) ist und Zahlen von 0 bis 6

BAD ORIGINAL

zweigte Kohlenwasserstoffreste mit 1 bis 18, vorzugsweise 1-12, C-Atomen, die gegebenenfalls durch die zu acht -O-, allgemein bis zu (y/2-1) -O-, wenn y die Anzahl der C-Atome in $Z_n$ bedeutet, bzw. bis zu zwei Carbonestergruppen (-O-CO-), bis zu drei -S-, und/oder $NR^2$-Reste mit $R^2=(C_1-C_4)$-Alkyl, insbesondere Methyl, unterbrochen und/oder durch Fluor, Chlor, Brom-atome, vorzugsweise Cl, Br, substituiert, vorzugsweise bis zur Hälfte der in $Z_n$ enthaltenen H-Atome, insbesondere 1- bis 4-mal substituiert sein können, aromatische oder araliphatische Reste, die sich von Benzol, Alkylenbenzolen mit bis zu 18 C-Atomen, vom Naphthalin, Diphenyl, Diphenylmethan, Diphenyläthan oder 2.2-Diphenylpropan ableiten, und die gegebenenfalls im Kern durch 1 oder 2 Methoxy-bzw. Äthoxygruppen substituiert sein können, und die im Kern und/oder den Seitenketten durch F-, Cl-, Br-Atome substituiert, vorzugsweise bis fünfmal substituiert sein können,

phosphorhaltige Reste der allgemeinen Formel

$$R^{10} - (O)_{d_1} - \underset{\underset{O}{\|}}{\overset{\overset{R^9}{|}}{P}} - (O)_{d_2} - R^{11} \qquad Z_{n,1}$$

in der

$d_1$, $d_2$ unabhängig voneinander O und 1 und

$R^9$ Alkyl-, Hydroxyalkyl-, gegebenenfalls $(C_1-C_2)$-alkyliertes bzw. -dialkyliertes Aminoalkyl, Halogen-(vorzugsweise Cl-)alkyl mit 1 bis 3 C-Atomen, Alkenyl mit 2 oder 3 C-Atomen oder Phenyl, das gegebenenfalls durch 1 oder 2 Halogenatome, vorzugsweise Cl, Br substituiert sein kann, ist und

$R^{10}$ und $R_{11}$ die gleiche Bedeutung wie $R^9$ haben, wenn $d_1$ oder $d_2$ 0 ist - oder $R^{10}$ und $R^{11}$ einen $(C_1-C_3)$-Alkylenrest bedeuten, wenn $d_1$ und $d_2$ gleichzeitig 0 sind - und wenn $d_1$ und $d_2$ 1 sind, einen geradketigen oder verzweigten Alkylenrest mit 2 - 5 C-Atomen oder den Rest

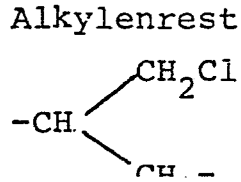 bedeuten,

vorzugsweise 2 - 4, wenn b = 0 oder 1 ist und 0, wenn b = 2 bis 6 ist, darstellt,

$A^B$ eine Gruppe der Formeln

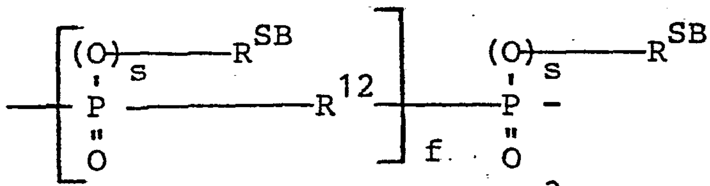

oder 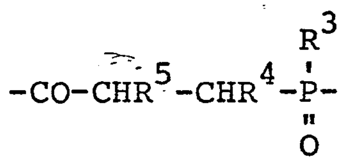

$R^{AB^1}$ das selbe wie $R^{SB}$ und

$R^{AB^2}$ das selbe wie $R^{SB}$ und,

bei $r_1 = 0$, auch $CN-C_2H_4-$

K 1 bis $c^K$ mal eine Gruppe der Formel

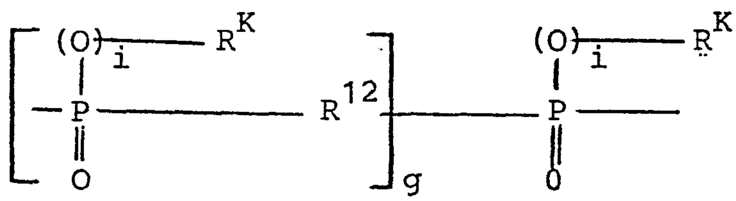

($=K^P$) oder

0 bis $c^K$-1 mal eine Gruppe der Formel

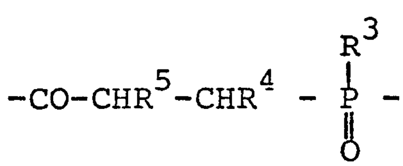

($=K^{PL}$)

h das selbe wie oben,

$R^K$ das selbe wie $R^1$, und zusätzlich, wenn $i = 0$ ist, auch $CN-C_2H_4-$,

$r_1$ und $r_2$ das selbe wie r,

b das selbe wie oben,

f das selbe wie oben

$c^A$ 0 oder 1,

$c^K$ das selbe wie oben, und

$c$ die Gesamtzahl aller möglichen Anhydrid-Äquivalente in III, gemäß $c=c^A + C^K = (m + 1 + q)\cdot(b\cdot n+e)$ 2 bis 1201 bedeuten,

das Gemisch bei Temperaturen von 0° C bis 180° C, vorzugsweise 80° C bis 150° C, zu einem sauren Gemisch (SR) von Phosphor enthaltenden Säuren bzw. Estern der allgemein möglichen Zusammensetzung

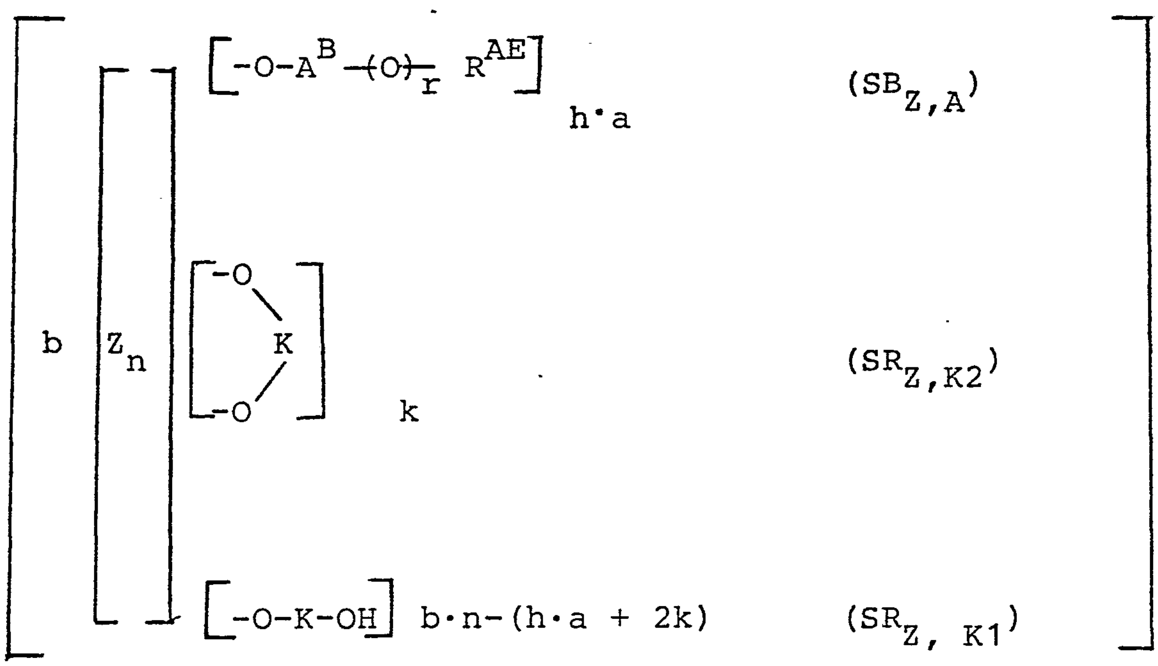

$(SB_{Z,A})$

$(SR_{Z,K2})$ $(SR_Z)$

$(SR_{Z,K1})$

$h\cdot(2-a)$ $R^{AB}(O)_r\ A^B\text{-}OH$ $(SR_{A1})$

und $k + \frac{h\cdot a}{2}$ $K(OH)_2$ $(SR_K)$

umsetzt und nach beendeter Umsetzung, kenntlich durch das Verschwinden der Anhydrid-Banden, das entstandene saure Reaktionsprodukt (SR), in dem q = 1 ist, mit der b·n+e-fach molaren Menge eines Oxalkylierungsmittels der Formel

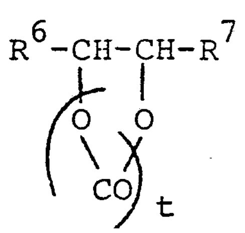

(IV), wobei t = 0 (Alkylenoxide ($IV_0$)) oder 1 (Alkylencarbonate ($IV_1$)) bedeutet, vermischt, sie für

t = 0 bei Temperaturen von 20° C bis 240° C, bevorzugt 60° - 180° C und für t = 1 von 80° bis 240° C, bevorzugt 150° bis 220° C, zum entsprechenden neutralen Hydroxyalkyl-Ester-Gemisch (ES), in dem m = 0 und q = 0 sind, bestehend insgesamt aus folgenden Estern

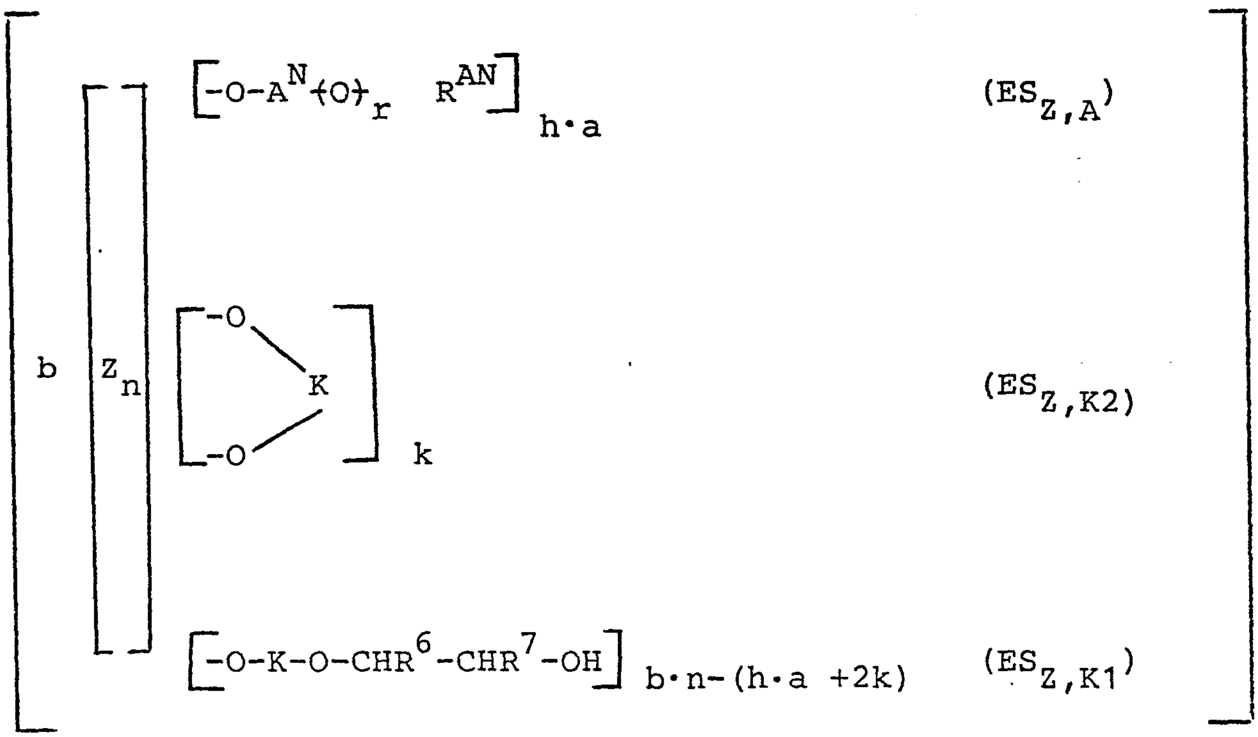

$(ES_{Z,A})$

$(ES_{Z,K2})$

$(ES_{Z,K1})$

$(ES_Z)$

$h \cdot (2-a) \quad R^{AN}(O)_r \quad A^N-O-CHR^6-CHR^7-OH$ $(ES_A)$ und

$k + \frac{h \cdot a}{2} \quad K(O-CHR^6-CHR^7-OH)_2$ $(ES_K)$ ,

wobei

$A^N$ 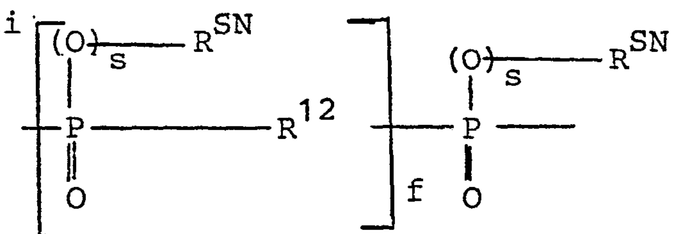 oder

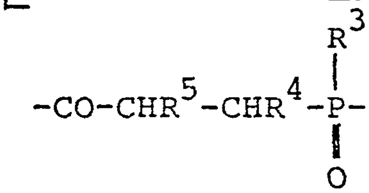 und

$R^{SN}$ das selbe wie $R^1$ und zusätzlich, wenn s = 1 und $R^{SB}$ Wasserstoff war, auch $-CHR^6-CHR^7-OH$,

$R^{AN}$ das selbe wie $R^{SN}$ und zusätzlich für r = o auch $CN-C_2H_4-$ und

N hochgestellt "neutralisiert"
bedeuten, umsetzt,
und nach beendeter Umsetzung, kenntlich durch Verschwinden der Säurezahl und bei t = 1 auch der $CO_2$-Entwicklung, bei obigen Reaktionstemperaturen die Zugabe von b·n+e Anhydrid-Äquivalenten (m + q)fach und danach die Oxalkylierung der jeweiligen sauren Zwischenprodukte - insgesamt m fach - wiederholt.

Ein anderes Verfahren, das sogenannte Direktverfahren (DV) besteht darin, daß man einen Alkohol der Formel II mit insgesamt c = (b·n+e) (m+1+q) Anhydrid-Äquivalenten von organischen Phosphor-Anhydriden der Formel III und gegebenenfalls einem schwerflüchtigen Oxalkylierungs mittel (IV) bei Temperaturen von 80° C bis 180° C, vorzugsweise 100° bis 150° C, vermischt und nach Abklingen der Reaktionswärme mit der etwa u = (b·n+e) (m+1)fach molaren Menge eines Oxalkylierungsmittels der Formel IV wobei n deren Gesamt-Molzahl bedeutet, bevorzugt unter Rühren, bei den jeweiligen Oxalkylierungstemperaturen umsetzt, bis die Umsetzung kenntlich am Verschwinden der Anhydrid-Banden und für t = 1 auch der $CO_2$-Entwicklung und für q = 0 auch der Säurezahl beendet ist.

Wenn b = 0, j = 1 und e mindestens 1, bevorzugt 2 - 4 sind, kann man auch nach einem Einstufenverfahren (EV) sehr einfach mit c = e·(m+1+q) Anhydrid-Äquivalenten der Phosphor-Anhydride der Formel III mit e sauren End- oder Seitengruppen mit nur etwa c Molen der Oxalkylierungsmittel (IV) bei den jeweiligen Oxalkylierungstemperaturen bis zur Entstehung noch saurer End-Reaktions-Verbindungen des Typs $I_{bo}$(mit q = 1) oder mit mindestens etwa e+c Molen von IV bis zur Entstehung neutraler 2-Hydroxyalkyl-Ester des Types I (mit q = 0) umsetzen.

Die bei den oben beschriebenen Direkt- oder Einstufen-Verfahren eventuell entstandenen unerwünschten alkoholfreien cyclischen Umsetzungsprodukte der Formel

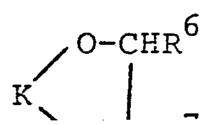

$(K_{IV})$

aus nur Kernanhydriden (K) und den Oxalkylierungsmitteln (IV) könn durch Nacherhitzen auf 100° bis 200° C, bevorzugt 130° bis 170° C - gegebenenfalls z.B. bei Gegenwart von alkalischen Katalysatoren bevorzugt Soda- und/oder Nachbehandlung mit alkalischen Katalysatoren wie z.B. bevorzugt Natriummethylat bei Temperaturen von 0° bis 100° C, bevorzugt 20° bis 60° C, weitestgehend zerstört und in Substanzen der Art $I_Z$, $I_A$, $I_K$ und/oder $I_{bo}$ überführt werden.

Die Mole der Verbindungen $I_Z$ sind für 1 bis 6-wertige Alkohole allgemein formuliert. Es entstehen z.B. im nicht bevorzugten Spezialfall nur einwertiger Alkohole ($Z_1$-OH), wobei $Z_1$ einen nur einwertigen Alkoholrest bedeutet und n=1 ist, da b Äquivalente $Z_1$ vorhanden sind, insgesamt b Mole der Phosphorestergruppen enthaltenden Endreaktionsgemische $I_Z$. Es bestehen nun aber bei der Anhydridgruppen-Umsetzung mit Alkoholen (II) viele zufällige Möglichkeiten des Primärangriffs. Daher können wenn n=1 ist im Gemisch $I_Z$, unter den insgesamt b Molen sehr verschiedenartige Verbindungen sein. Wenn h=1 und a 1 oder 2 sind, es sich also z.B. um abgeschlossene organische Phosphor-Anhydride bei den Ausgangsprodukten III handelt, können sich unter den b Molen des Gemischs $I_Z$ wahlweise 0 bis 2 (bzw. $h \cdot a_1$) Mole von Voll-Estern des hydroxylgruppen freien Typs

$$Z_1 - O - A^E \leftarrow\!O\!\rightarrow_r RAE \qquad (I_{Z,A}) ,$$

in seltenen Fällen (bei zufälligen Voll-Veresterungen am gleichen P-Atom) auch einige (k) Mole des ebenfalls hydroxylgruppenfreien Typs

$$(Z_1-O\rightarrow_2 k \qquad (I_{Z,K2})$$

und dementsprechend b - (h·a + 2k) Mole der weit überwiegenden hydroxylgruppenhaltigen oligomeren Hauptprodukte

$$Z_1-O-K-O-CHR^6-CHR^7-O\leftarrow\!W\!\rightarrow_w H \qquad (I_{Z,K1})$$

befinden.

Die 0 bis 2 (bzw. $h\cdot(2-a)$) Mole der Endreaktions-Verbindungen $I_{A1}$ und die ebenfalls wenigen ($k + \frac{h\cdot a}{2}$) Mole der Endreaktions-Verbindungen $I_K$ enthalten stets keine Alkoholreste ($Z_n$). Sie können daher u.U. immer - unabhängig von der Wertigkeit (n) der Alkohole (II) - entstehen. Entsprechendes gilt natürlich auch für alle sauren Zwischen-Verbindungsgemische, angefangen bei SR bis zum vorletzten, das sinnvoll mit $I_{m-1,q1}$ charakterisiert werden kann, aber auch für alle neutralen Zwischen-Verbindungsgemische von ES bis zum vorletzten mit der Charakteristik $I_{m-1,q0}$.

Das erfindungsgemäße Verfahren wird, wenn $b > 0$, ist im allgemeinen so durchgeführt, daß man die Phosphor-Anhydride der Formel III und zusätzlich gegebenenfalls schwerflüchtige Alkylenoxide (IV) oder Alkylencarbonate ($IV_1$), wenn solche verwendet werden, bei Raumtemperatur vorlegt und bei einer Temperatur oberhalb der Lösetemperatur den Alkohol (II) langsam zugibt. Man kann aber meist auch die Alkohole (II) zusätzlich vorlegen.

Die Reaktionswärmen, die auftreten, wenn die Verbindungen II und III miteinander reagieren, bleiben-besonders bei Anwesenheit von Alkylencarbonaten ($IV_1$) ungefährlich.

Durch Zusatz von basischen Katalysatoren in Mengen von 0,05 - 4,0 %, bevorzugt 0,2 - 2,0 %, bezogen auf die Summe der eingesetzten Verbindungen II, III und IV, die man vorzugsweise aus der Gruppe der Alkalihydroxide wie NaOH, KOH, der Alkali-($C_1$-$C_4$)-alkoholate wie Na-methylat, K-tert.-butylat, der Alkali-(bi)-carbonate wie Soda, Pottasche, Na-, bzw. K-Bicarbonat und der tertiären Amine, wie Triäthylamin und Triäthanolamin auswählt, werden die Reaktionsgeschwindigkeiten deutlich erhöht und Nebenreaktionen unterdrückt. Die Reaktionszeiten betragen je nach Reaktionstemperatur im allgemeinen zwischen etwa 1 und 120 Stunden, bevorzugt 1 und 20 Stunden. Sie liegen naturgemäß mit wachsendem m, insbesondere für $m > 3$ höher als für niederes m.

Es ist natürlich möglich, Alkohole der Formel II auch erst kurz vor der Zugabe der Phosphor-Anhydride (III) durch Umsetzung von

Alkylenoxiden ($IV_0$) und/oder Alkylencarbonaten ($IV_1$) mit freien Carbon-, Phosphin- oder Phosphonsäuren zu erzeugen und dann weiter erfindungsgemäß umzusetzen. In diesem Falle würde vorher zusätzlich die v-molare Menge an Alkylenoxiden oder Alkylencarbonaten benötigt, wenn v die Anzahl der freien Säuregruppe bedeutet.

Die stufenweise Entstehung der erfindungsgemäßen Verbindungen (vom Typ $I_Z$) mit sich wiederholenden Atomgruppierungen kann z.B. in einem einfachen Fall, wenn h und a=0 und b=1 sind, ausgehend von einem zweiwertigen Alkohol, wie z.B. Glykol als Verbindung II, 1,2-Äthan-bis-(methyl-phosphinsäure-)anhydrid als Verbindung III und Äthylenoxid als Verbindung IV wie folgt formuliert werden:

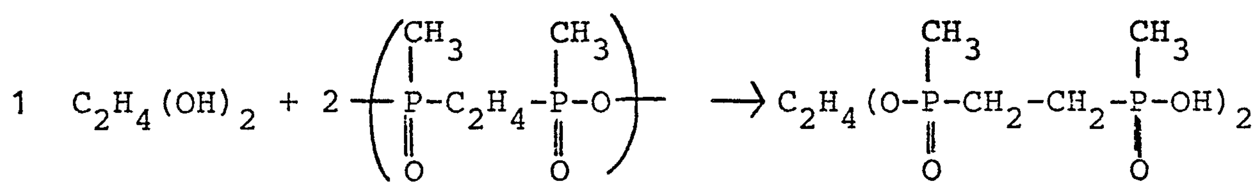

III (Säure 1 = Typ $SR_{Z,K1}$)

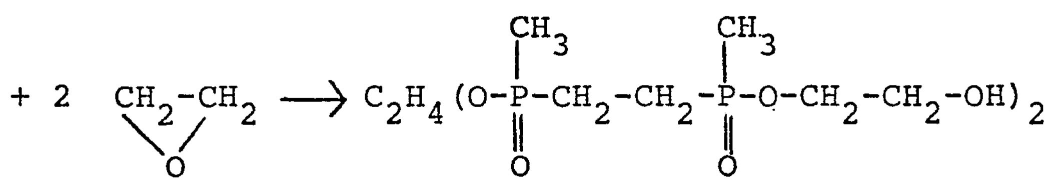

IV (Hydroxy-Ester 1 = Typ $ES_{K1}$)

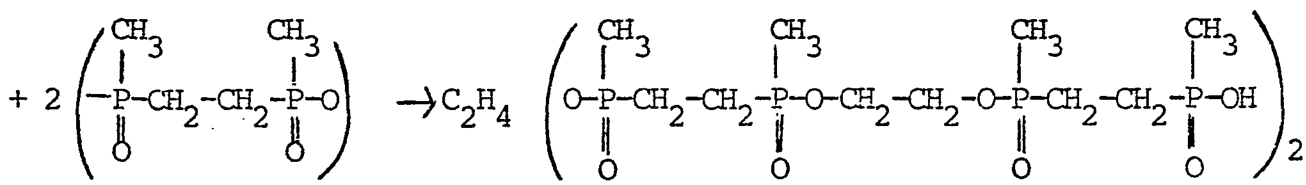

(III) (Säure 2 = Typ $I_{Z,K1,\ mo,\ q1}$)

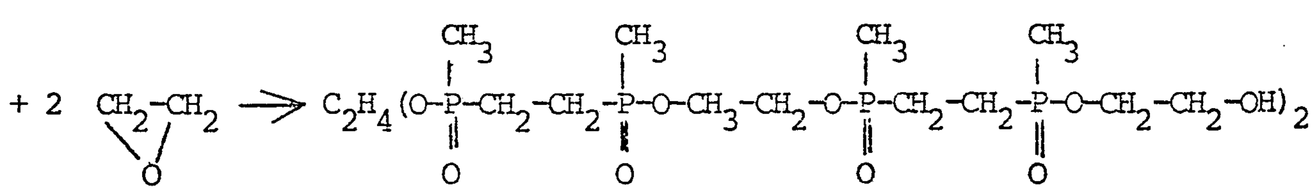

(IV) (Hydroxy-Ester 2 = Typ $I_{Z,K1,\ m1,\ q0}$)

Mit weiteren Molekülen von III und IV kann die Kette noch weiter wachsen. Wenn 1+m die Zahl der insgesamt verwendeten Moleküle IV pro wachsende Kette ist, dann entstehen Säuren 1,2,3 4 etc. (allgemein 1+m+q) stets dann, wenn von III q bzw. ein Mol mehr als von IV (allgemein 1+m+q Mole von III) zur Umsetzung gelangen.

Neutrale 2-Hydroxyalkylester 1, 2, 3, 4 etc. resultieren dann, wenn die Zahl der umgesetzten Moleküle IV mindestens der Anzahl der Moleküle von III entspricht, also ebenfalls mindestens 1+m beträgt (hier q=0). Analoge Formulierungen ergeben sich, wenn nicht von einem zweiwertigen Alkohol, wie z.B. Glykol (n=2) sondern von n-wertigen Alkoholen mit der allgemeinen Formel $Z\ (-OH)_n$ ausgegangen wird, wobei $Z_n$ die angegebene allgemeine Bedeutung hat.

Man kann von Gemischen von Alkoholen der Formel II ausgehen und erhält dann entsprechend kompliziertere Gemische von Verbindungen der Formel I. Man kann aber auch von Mischungen von Verbindungen der Formel III und/oder IV ausgehen und erhält dementsprechende Mischungen der Formel I. Es ist auch möglich für die Oxalkylierunge gleichzeitig sowohl die Verbindungen $IV_1$, also Alkylencarbonate, als auch die Verbindungen $IV_0$, also Alkylenoxide, zu verwenden. Man kann auf diese Weise die positiven Lösungseigenschaften der Alkylencarbonate mit dem meist etwas günstigerem Preis der Alkylenoxide verbinden.

Wenn $e > 0$ und $b=0$ sind, also keine Alkohole (II) eingesetzt werden, resultieren als Endprodukte überwiegend nur die Verbindungen $I_{bo}$. Ihre stufenweise Entstehung kann z.B. ausgehend von Äthylenoxid (IV) und einem speziellen organischen Phosphor-Anhydrid ($III_{SP}$) mit e=2, das aus 4 Anhydrid-Äquivalenten von Äthan-Phosphonsäureanhydrid und 1 Mol Methan-phosphonsäure von der Formel

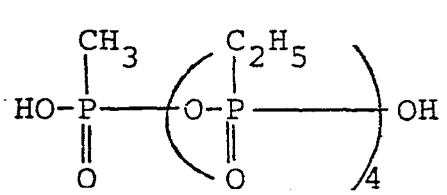

(und der vereinfachten Charakteristi
$III_{2H,c4}$)

unter Vernachlässigung eventueller Nebenreaktionen - durch ein idealisertes Formelschema verdeutlicht werden. Die Zwischen-Verbindungen können wieder durch die Symbole SR, ES, die End-Produkte mit I mit Indexangaben charakterisiert werden. Die Substanz III kann dabei nach der ersten Oxalkylierung als ein 2fach neutralisierter Typ ($III_{2N,c4}$) charakterisiert werden.

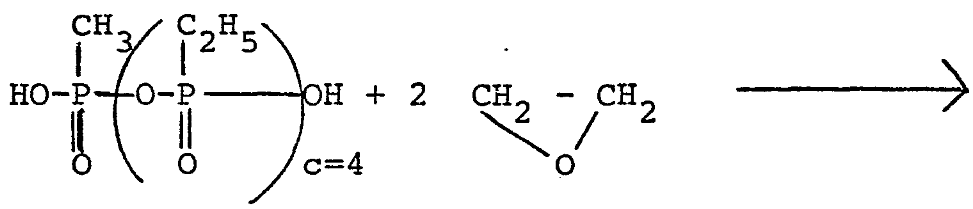

($III_{2H,c4}$) ($IV_0$)

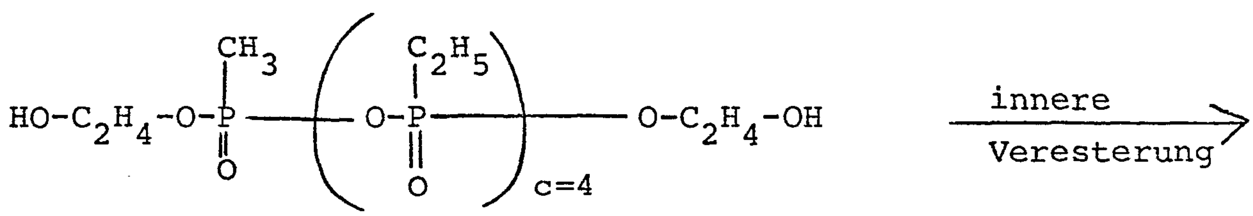


(Typ $III_{2N,c4}$)

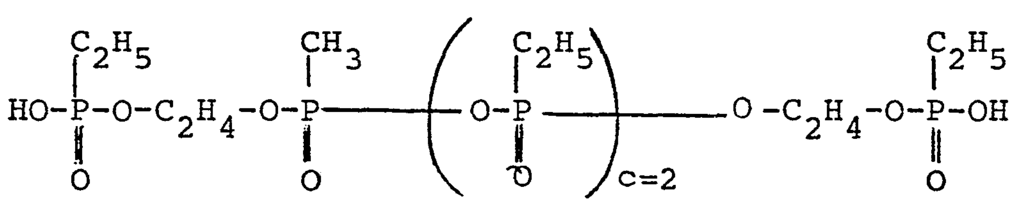

(Typ $SR_{2H,c2}$)

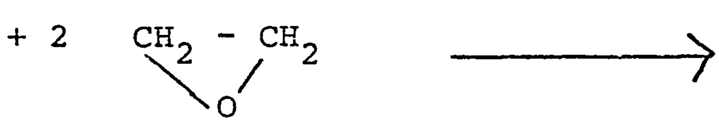

($IV_0$)

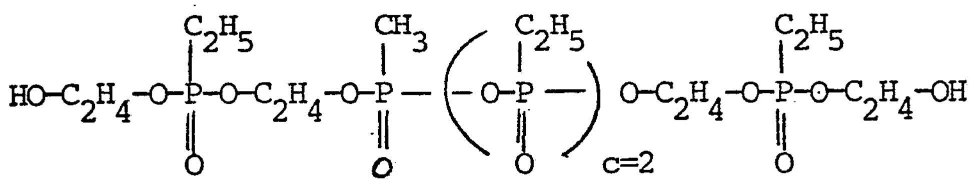

(Typ $ES_{2N}$, c2)

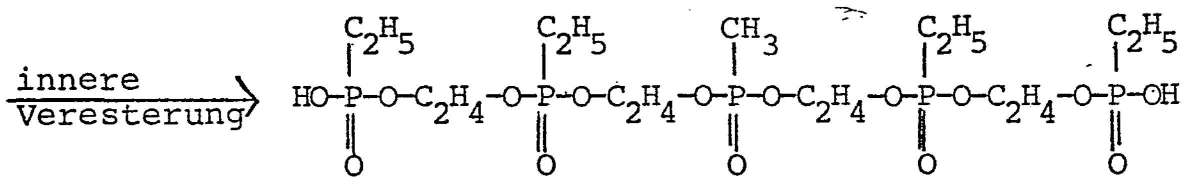


(Typ $I_{A2}$, m0, q1)

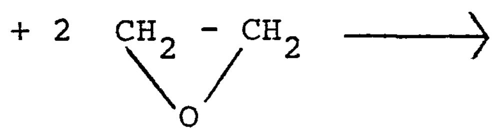

($IV_0$)

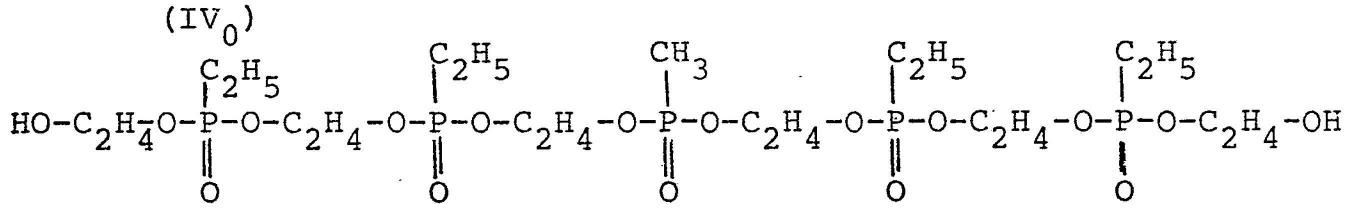

(Typ $I_{A2}$, m1, q0)

Wenn z.B. in einer anderen Verbindung $III_{SP}$ nur eine saure Hydroxyl-Endgruppe vorliegt ($R^{AB2}$ = -OH), also e=1 ist und $R^{AB1}$ z.B. $C_3H_7$ und $r_1$=0 sind, liegt ein Umsetzungsprodukt aus Methyl-propyl-phosphinsäure und Äthanphosphonsäure-anhydrid vor. Bei der Umsetzung mit z.B. 5 Mol Äthylenoxid ($IV_0$) wächst die Kette dann nur nach einer Seite. Im Endprodukt ($I_{m3, q0}$) wird dann m=3 und q=0.

Zur Herstellung noch saurer Reaktionsprodukte $I_{bo}$ sind stets $\mu_{SR}$ = c Mole und neutraler Endprodukte $I_{bo}$ sind stets allgemein mindestens $u_N$= e+c Mole Äthylenoxid ($IV_o$) notwending.

Von den, wenn b> 0 ist, einsetzbaren einwertigen organischen Hydroxylverbindungen ($Z_1$-OH) mit n=1 kommen z.B. alle leicht zugänglichen aliphatischen geradkettigen und verzweigten Alkohole mit 1 bis ca. 18 C-Atomen in Betracht. Als Wichtigste seien z.B. genannt: Methanol, Äthanol, n-Propanol, i-Propanol, n-Butanol, sec.-Butanol, n-Hexanol, 2-Äthyl-butanol-1, n-Octanol, 2-Äthylhexanol-1, n-Dodecanol, n-Hexadecanol, n-Octadecanol, wobei die Alkohole mit 1 bis 4 C-Atomen bevorzugt sind. Noch besser als monofunktionelle Alkohole sind, wenn e = 0 ist, mehrwertige mit n=2 - 6 geeignet.

Von den mehrwertigen aliphatischen Polyolen mit n = 2 - 6 seien z.B. genannt: Äthylenglykol, 1,2-Propylenglykol, 1,3-Propylenglykol, 1,4-Butandiol, Neopentylglykol, 1,6-Hexandiol, Glyzerin, Trishydroxymethyläthan, Trishydroxymethylpropan, Pentaerythrit, Sorbit, Mannit. Insbesondere sind Glyzerin, Pentaerythrit und 1,6-Hexandiol geeignet.

Von ungesättigten Alkoholen seien z.B. genannt: n-Buten-2-ol-1, 1,4-Buten-diol und Allylalkohol, wobei 1,4-Buten-diol als zweiwertiger Alkohol bevorzugt ist.

Von den zahlreichen Verbindungen, bei denen in einem aliphatischen Kohlenwasserstoffrest eine oder mehrere $-CH_2$-Gruppen durch Ätherbrücken -O- ersetzt sind, sind z.B. geeignet die Umsetzungsprodukte von einwertigen Alkoholen mit einem oder mehreren Molekülen von Alkylenoxiden oder Alkylencarbonaten, wie z.B. 2-Methoxyäthanol, 2-Äthoxy-äthanol, 2-Butoxy-äthanol, 2-(2'-Äthyl-hexyloxy)-äthanol, 2-n-Dodecyloxy-äthanol, ferner die Umsetzungsprodukte von 1 Mol Methanol, 1 Mol Äthanol oder 1 Mol Isopropanol und 2 Mol Äthylenoxid oder Alkylencarbonat sog. Methyldiglykol, Äthyldiglykol bzw. Isopropyldiglykol, ferner die Umsetzungsprodukte von 3 bis 7 Molekülen Äthylenoxid oder Äthylencarbonat an 1 Mol Methanol, Äthanol, Isobutanol.

Geeignete Unsetzungsprodukte von Äthylenoxid und zweiwertingen Alkoholen sind z.B. sog. Diglykol, sog. Triglykol und die höheren Umsetzungsprodukte von Äthylenoxid und/oder Äthylencarbonat mit Wasser oder Äthylenglykol mit bis zu 18 C-Atomen, die sog. Polyäthylenglykole verschiedener Molekülgrößen bis zu mittleren Molekulargewicht von 400, insbesondere Diglykol und Triglykol, ferner sind geeignet z.B. die Addukte von 1 - 6 Molekülen Äthylenoxid und/oder Äthylencarbonat an drei- oder höher-wertigen Alkoholen (n = 3 - 6), wie z.B. Glyzerin, Trishydroxymethylpropan, Pentaerythrit etc.

Neben Umsetzungsprodukten von Äthylenoxid und/oder Äthylencarbonat an ein- oder mehrwertige Alkohole kommen auch Umsetzungsprodukte aus ein- und mehrwertigen Alkoholen mit anderen 1,2-Alkylenoxiden und/oder 1,2-Alkylencarbonaten, wie vor allem 1,2-Propylenoxid, 1,2-Propylencarbonat oder Epichlorhydrin, in Betracht, ebenso die Umsetzungsprodukte von Äthylenoxid und/oder Äthylencarbonat mit Poly-1,2-propylenglykolen, die - wie bekannt - als oberflächenaktive Verbindungen in großer Variationsbreite hergestellt werden. Besonders erwähnt seien entsprechende Poly-1,2-propylenglykole und entsprechende Addukte von Äthylenoxid und/oder Äthylencarbonat an (Poly)-1,2-propylenoxide.

Neben -O-Brücken kann die Kohlenwasserstoffkette von aliphatischen Hydroxylverbindungen auch durch andere Heteroatome, wie z.B. durch die Elemente N, S und/oder P oder Carbonsäureestergruppen unterbrochen sein. Diese Verbindungen können z.B. besonders einfach durch Umsetzung von einem oder mehreren Molekülen von 1,2-Alkylenoxiden und/oder 1,2-Alkylencarbonaten mit Ammoniak, primären oder sekundären Aminen, Schwefelwasserstoff, Merkaptanen und mit Sauerstoffsäuren des Phosphors, ($C_2$-$C_6$)-Carbonsäuren bzw. Dicarbonsäuren erhalten werden.

Von deren Umsetzungprodukten mit 1,2-Alkylenoxiden bzw. 1,2-Alkylencarbonaten seien z.B. genannt:

Mit N im Molekül: Die tertiären Alkanolamine, wie z.B. Triäthanolamin, Methyldiäthanolamin, n-Butyl-diäthanolamin, Tetra-hydroxyäthyl-äthylendiamin, Pentahydroxyäthyl-diäthylentriamin, n-Dodecyl-diäthanolamin, Dimethyläthanolamin, n-Butyl-methyläthanolamin, Di-n-butyl-äthanolamin, n-Dodecylmethyl-äthanolamin und entsprechend höhere Umsetzungsprodukte dieser tertiären Amine mit Äthylenoxid bzw. Äthylencarbonat oder Propylenoxid bzw. Propylencarbonat bis zu einer Gesamt-C-Zahl von 18 C-Atomen im Molekül.

Mit S im Molekül: Bis -(2-hydroxyäthyl)-sulfid, Bis-(2-hydroxypropyl)-sulfid, Bis-(2-hydroxyäthyl)-sulfon und ihre Umsetzungsprodukte mit weiterem Äthylenoxid bzw. Äthylencarbonat oder Propylenoxid bzw. Propylencarbonat bis zu einer Gesamt-C-Zahl von 18 C-Atomen im Molekül.

Mit P im Molekül: Neutrale Umsetzungsprodukte von 1,2-Äthylenoxiden wie Äthylenoxid, Propylenoxid, Epichlorhydrin, vor allem Äthylenoxid bzw. z.B. Äthylencarbonat mit ein- und mehrwertigen Alkanphosphonsäuren mit 1 bis 18 C-Atomen wie z.B. an n-Butan-, Isobutan-, 2-Äthyl-hexan-, n-Octan-, Decan-, Dodecan-, Tetradecan-phosphonsäure, insbesondere aber an Methan-, Äthan-, Propan- und Vinylphosphonsäure und 1,2-Äthan- bzw. 1,4-Butan-diphosphonsäure, ferner an ein- oder mehrwertige Dialkyl-phosphinsäuren, wie z.B. Methyl-butyl-phosphinsäure, Methyl-n-octyl-phosphinsäure, Methyl-n-dodecyl-phosphinsäure und besonders Dimethyl-, Äthyl-methyl-, Methyl-propyl-, und 1,10-Dekan-bis-(methyl-phosphinsäure)-, Methyl-vinyl-phosphinsäure, Äthan-1,2-bis-(methylphosphinsäure) und ferner auch Umsetzungsprodukte von 1 bis 7 Mol Alkylenoxid bzw. Äthylencarbonat mit einwertigen aliphatischen Carbonsäuren wie z.B. vor allem Essigsäure, Propionsäure, Buttersäure und mehrwertige aliphatische Carbonsäuren, wie z.B. Bernsteinsäure und Adipinsäure, aber auch ungesättigte Carbonsäuren wie Crotonsäure und bevorzugt (Meth-)Acrylsäure sind geeignet.

Neben derartigen durch Oxalkylierungsreaktionen sehr leicht zugänglichen Hydroxylverbindungen mit Heteroatomen N, S und P sind noch zahlreiche weitere Verbindungen mit Hydroxylgruppen und gegebenenfalls diesen Heteroatomen und/oder Carbonsäureestergruppen in der Kohlenwasserstoffkette geeignet, von denen nur genannt seien z.B. Oligo-Kondensate, die entstehen durch Umsetzung von Dicarbonsäuren oder Dicarbonsäureanhydriden mit mehrwertigen Alkoholen, ferner Glykolsäuremethylester, 2-Hydroxyäthan-carbonsäureäthylester etc.

Geeignet sind außerdem z.B. Hydroxymethan-phosphosäuredimethylester, 2-Hydroxyäthan-phosphonsäurediäthylester, 3-Hydroxypropanphosphonsäure-di-n-butylester etc. und analoge Verbindungen aus der Phosphinsäurereihe, wie z.B. Hydroxymethyl-methyl-phosphinsäuremethylester, 2-Hydroxyäthyl-methyl-phosphinsäure-äthylester, 3-Hydroxypropyl-methyl-phosphinsäure-2'-äthyl-hexylester, Hydroxymethyl-dimethyl-phosphinoxid, 2-Hydroxyäthyl-dimethyl-phosphinoxid.

Alle genannten und nicht genannten analogen aliphatischen Hydroxylverbindungen können durch die Halogenatome Chlor, Brom, Fluor, besonders durch Chlor und Brom, substituiert sein. Erwähnt seien z.B. die leicht zugänglichen und wegen ihres günstigen Flammschutzverhaltens interessanten Verbindungen 2-Bromäthanol, 2,3-Dibrompropanol-1, 2,3-Dibrom-butan-diol-1,4, Dibrombernsteinsäure-bis-(2-hydroxyäthyl)-ester, 2,3-Dibrompropan-phosphonsäure-bis-(2-hydroxy-äthyl)-ester, 2- Hydroxyäthanphosphonsäure-bis(2,3-dibrompropyl)-ester, ferner Chloräthanol, 2,3-Dichlor-propanol-1, 1,3-Dichlor-propanol-2, 2,3-Dichlor-butandiol-1,3, 2-Hydroxyäthanphosphonsäure-bis-(2,3-dichlorpropyl)-ester, 1-Chlorvinylphosphonsäure-bis-(2-hydroxyäthyl)-ester, etc.

Sehr mannigfaltig ist auch die Auswahl der geeigneten aromatischen Verbindungen die n-OH-Reste tragen.

Eine unter den aromatischen Verbindungen bevorzugte Stellung nehmen ein alle aromatischen Verbindungen mit alkoholischen Hydroxylgruppen, wie z.B. Benzylalkohol und alle 2-Hydroxyalkyläther oder -ester, die durch Oxalkylierungen von phenolischen Hydroxylgruppen oder von aromatischen Verbindungen, die Carbonsäure-, Phosphonsäure- oder Phosphinsäurereste enthalten, mit Verbindungen der Formel $IV_o$ oder $IV_1$ entstehen.

Zur Herstellung von aromatischen Ausgangsmaterialien II mit alkoholischen Hydroxylgruppen kommen außer ein- und zwei Kernaromatischen Verbindungen mit phenolischen Hydroxylgruppen für die Umsetzung mit 1,2-Alkylenoxiden ($IV_o$) oder 1,2-Alkylencarbonaten ($IV_1$) daher vor allem z.B. aromatische Mono- und Dicarbonsäuren, wie z.B. Benzoesäure, Phthalsäure, Isophthalsäure, Terephthalsäure, 1-Naphthalincarbonsäure, 2-Naphthalincarbonsäure, die

carbonsäuren, wie z.B. die drei verschiedenen Hydroxy-benzoesäuren, die verschiedenen Naphthol-carbonsäuren, 4,4'-Diphenyl-dicarbonsäure etc. in Betracht.

Wegen der günstigen Beeinflussung der Flammschutzeigenschaften können in Spezialfällen aromatische Chlor- und besonders Bromhydroxy-Verbindungen von besonderem Interesse sein, wie z.B. die Oxalkylierungsprodukte von 2,4,6-Tribrom-phenol, Pentabrom-phenol, 2,4,6-Trichlor-phenol oder Pentachlor-phenol und das 2,2-Bis-(4-hydroxy-3,5-dibrom-phenyl)-propan.

Ebenso sind z.B. alle anderen Brom, Chlor oder Fluor enthaltenden aromatischen Carbonsäuren, die sich von Benzol und Naphthalin ableiten, wie vor allem z.B. Tetrabrom- bzw. Tetrachlor-phthalsäure geeignet. Die Umsetzungen mit den Verbindungen IV können auch hier wiederum unmittelbar vor der Einwirkung der Verbindungen III erfolgen, so daß gegebenenfalls, besonders bei der Ausarbeitung von technischen Verfahren, auf einen speziellen Oxalkylierungsprozeß verzichtet werden kann.

Ebenso können aromatische Phosphon- bzw. Phosphinsäuren, wie z.B. Benzolphosphonsäure, 1,3- bzw. 1,4-Phenylen-diphosphonsäure, Phenyl-methyl-phosphinsäure, 1,3- bzw. 1,4-Phenylen-bis-(methylphosphinsäure) etc. vorher durch Umsetzung mit den 1,2-Alkylenoxiden ($IV_o$) und/oder 1,2-Alkylencarbonaten ($IV_1$) in die entsprechenden 2-Hydroxyalkylester übergeführt werden.

Geeignete aromatische Verbindungen mit alkoholischen Hydroxylgruppen können aber auch durch vorhergehende Umsetzungen von aromatischen Aminen oder Merkapto-Verbindungen mit 1,2-Alkylenoxiden und/oder 1,2-Alkylencarbonaten erhalten werden.

Für Oxalkylierungen geeignete, aromatische Aminogruppen enthaltende Verbindungen seien z.B. genannt:

Anilin, Methylanilin, o-, m-, p-Phenylendiamin, die diversen o-, m-, p-Toluidine und -Anisidine, -Aminophenole, -Amino-benzoesäuren, -Aminobenzol-sulfonsäuren, 1- bzw. 2-Naphthylamine die

diversen Amino-naphthole, ferner 4,4'-Diaminodiphenylmethan, 4,4'-Benzidin, die möglichen Chlor- bzw. Bromaniline und vor allem 2,4,6-Iribromanilin etc., aber auch Phenylalkylamine, wie vor allem Benzylamin oder Methyl-benzylamin und Dibenzylamin.

An aromatischen oxalkylierbaren Merkaptoverbindungen seien z.B. angeführt:

Phenylmerkaptan, p-Toluyl-merkaptan, -bzw. 2-Naphthylmerkaptan etc.

Die geeigneten organischen Phosphor-Anhydride mit der allgemeinen Formel III

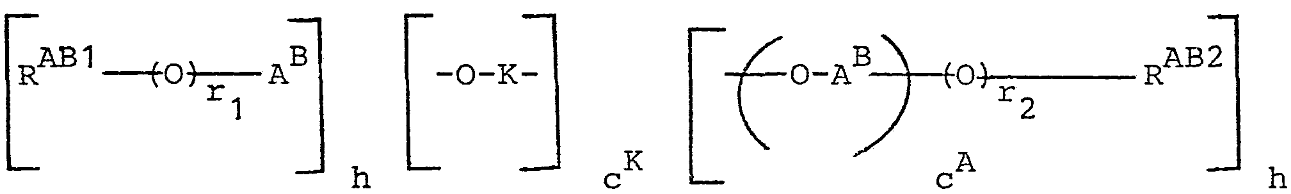

(III)

können je nachdem welche speziellen Bedeutungen $R^{AB1}$, $R^{AB2}$, $r_1$, $r_2$, $A^B$, K, h, $c^K$, $c^A$ bzw. auch $R^{SB}$, $R^K$, $R^{12}$, f, g, s und i besitzen, sehr mannigfaltig sein.

Man kann die Verbindungen III gemäß ihrer Raumstruktur unterteilen in

$III_{AG}$ "abgeschlossene organische Phosphor-Anhydride", bei denen h=1 ist und somit auch stets zwei mono-Außen-Gruppen ($R^{AB}$-$A^B$-) vorliegen und in

$III_{EC}$ "echte organische Phosphor-Anhydride" (h=0), letztere lassen sich weiter untergliedern in

$III_{OF}$ "offene organischen Phosphor-Anhydride", die linear und polymer sind, bei denen h=0 und $c^K$ im Idealfall unendlich ist und in

$III_{CY}$ "cyclische organische Phosphor-Anhydride", bei denen zwar ebenfalls h=0 ist, aber die Anhydride in

können Ringe mit z.B. 4, 5, 6 oder 8 Ringgliedern vorliegen. Sie können pro Ring ggbf. $c^{K,CY} = 1, 2, 3, 4$ oder noch mehr Anhydrid-Äquivalente enthalten. Zwischen den "echten offenen" und den "echten cyclischen" Anhydriden liegen häufig Gleichgewichte vor. Daher können durchaus lineare offene organische Phosphor-Anhydride $III_{OF}$ neben cyclischen $III_{CY}$ vorliegen. Für den Reaktionsverlauf ist es völlig gleichgültig, ob bei der Umsetzung von protonenfreien echten Phosphor-Anhydriden ($III_{EC}$) neben offenen ($III_{OF}$) auch ggbf. protonfreie cyclische Anhydride ($III_{CY}$) vorliegen. Entscheidend ist letztlich nur der effektive Gesamtgehalt an Anhydrid-Äquivalenten (c), der durch die Symbolik $c=c^K+c^A$ zum Ausdruck kommt.

Es können in den Wert $c^K$ neben $c^{K,OF}$ offenen des Typs $III_{OF}$ auch $c^{K,CY}$ cyclische Phosphor-Anhydride des Typs $III_{CY}$ eingehen, gemäß $c^K=c^{K,CY}+ c^{K,OF}$

K kann gemäß obiger Definition sein

a bis $c^K$ mal 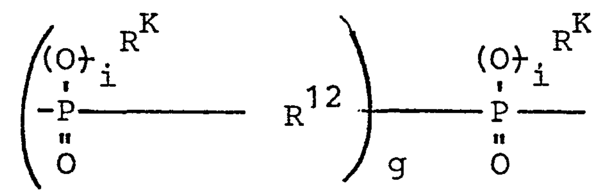 ($K^P$) und

0 bis $c^K$-1 mal 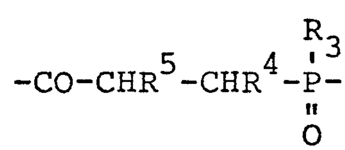 ($K^{PL}$)

Zu den evtl. zusätzlich geeigneten Verbindungen $III_{CY}$ gehören daher z.B. die eindeutig cyclischen Phosphin-Carbonsäure-Anhydride vom "Phospholan-Typ" ($III_{PL}$)

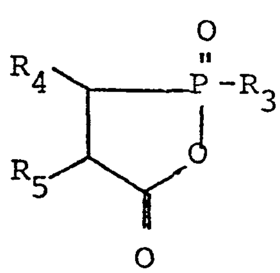

($III_{PL}$)

BAD ORIGINAL

wie z.B. 2-Methyl-, 2-Äthyl-, 2-n-Propyl-, 2-Isobutyl-, 2-Vinyl-, 2-Chlormethyl-, 2-Phenyl-, 2,3-Dimethyl-, 2-Methyl-3-äthyl-, 2-Methyl-3-butyl-, 2,4-Dimethyl-, 2-Methyl-4-äthyl-, 2-Phenyl-4-methyl-, 2,3,4-Trimethyl-, 2,3,4-Triäthyl-, und insbesondere wegen der leichten Zugänglichkeit 2-Methyl-2,5-dioxo-1,2-oxa-phospholan.

Wenn $c^{K,PL}$ Mole vom Phospholan-Typ im Reaktionsgemisch vorliegen, so fallen auch sie unter die allgemeine Definition der Kerngruppen $[-O-K-]_{c^K}$ , wenn z.B. speziell $c^{K,PL} = 1$ bis $c^K -1$ mal

$$K^{PL} = -CO-CHR^5-CHR^4-\underset{\underset{O}{\|}}{\overset{\overset{R_3}{|}}{P}}- \quad \text{ist}$$

Die Phospholane ($III_{PL}$) dürfen jedoch niemals als die alleinigen Kerngruppen eingesetzt werden. Es muß stets mindestens ein Rest $K^P$ zugegen sein. Um die verschiedenen Arten von echten organischen Phosphoranhydriden sinnvoll charakterisieren zu können, ist es ratsam die Werte von h, g bzw. i als tiefgestellten Index anzugeben. Das gleiche gilt für die Verbindungen, aus denen sie entstehen.

Die ebenfalls geeigneten Phosphonsäure-Anhydride haben die allgemeine Formel

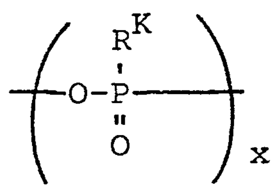 und die Charakteristik $III_{ho, go, io}$.

Es sind n = 0 und g und i im Ausdruck $K^P$ beide = 0. x stellt hier und in den folgenden Formeln den Polymerisationsgrad dar, der bei der obigen Formel unbekannt ist. Man nimmt an, daß diese Verbindungen bei Raumtemperatur zum Teil als offene ($III_{OF}$) und zum Teil als cyclische Anhydride ($III_{CY}$) vorliegen. Es können z.B. eingesetzt

werden Methan-phosphonsäure-anhydrid, Propan-phosphonsäure-anhydrid, n-Butan-phosphonsäure-anhydrid, Isobutan-phosphonsäure-anhydrid, n-Pentan-phosphonsäure-anhydrid, Chlormethan-phosphonsäure-anhydrid, 1-Chloräthan-phosphonsäure-anhydrid, 2-Chloräthan-phosphonsäure-anhydrid, 2,3-Dibrom-propan-phosphonsäure-anhydrid, Vinyl-phosphonsäure-anhydrid, Propen-2-phosphonsäure-anhydrid, bevorzugt Methan-Äthan-, Propanphosphonsäure-anhydrid.

Andere, in formaler Hinsicht protonenfreie echte organische Phosphor-Anhydride von der allgemeinen Formel:

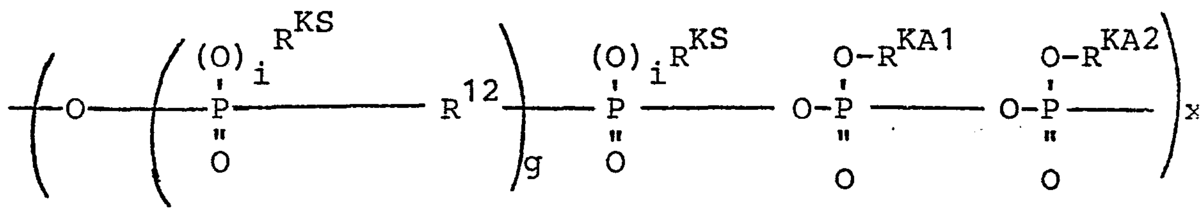

($III_{ho,g,i}$) entstehen allgemein aus einem Mol eines protonenfreien Kern-Ester-Donators ($KED_F$) der allgemeinen Formel

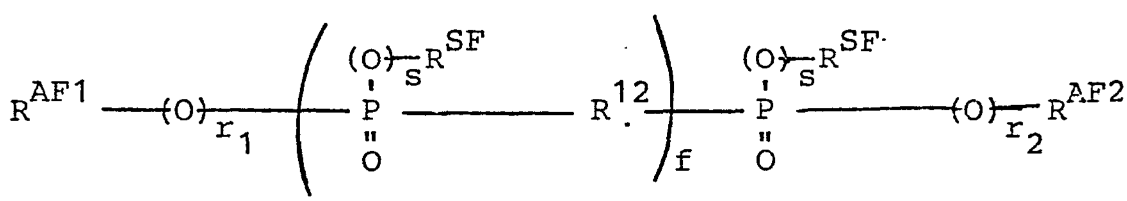

und einem Mol Phosphorpentoxid. Dabei sind $R^{AF1} = R^{AB1}$ außer Wasserstoff, $R^{SF}$ und $R^{AF2} = R^1$. Ferner ist hier: $R^{KS}=R^1$, $R^{KA1}=R^{AF1}$ und $R^{KA2} = R^1$.

Wenn im allgemeinen Ausdruck für $K^P$ g=0 und i=1 sind, liegen Metaphosphorsäure-alkylester vor. Sie sind neben Poly-phosphorsäureestern gemäß US 2 402 703 sehr preiswert und einfach durch Erhitzen von 1 Mol Tri-alkyl-phosphat der allgemeinen Formel

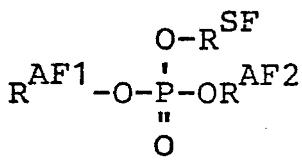 (und der Charakteristik $KED_{fo, r1,s1}$)

und einem Mol Phosphorpentoxid erhältlich. Sie entsprechen im Idealfall der Formel

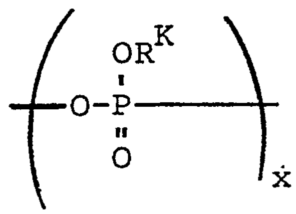 (und der Charakteristik $III_{ho,go,i1}$).

Hierbei kann $R^K$ entweder $R^{AF1}$, $R^{SF}$ oder $R^{AF2}$ sein.

Die Metaphosphorsäureester ($III_{ho,go,i1}$) enthalten ebenfalls neben offenen ($III_{OF}$) z.T. auch cyclische Strukturen ($III_{CY}$). Sie sind thermisch, vor allem wenn $R^K$ nicht $CH_3$ ist, weit weniger beständig als die Phosphonsäure-Anhydride. Über 80° - 100° C zersetzen sich die höheren Ester unter Abspaltung von Olefinen. (Vgl. US 2 402 703 S. 1, Sp. 1, Z. 14). Die Umsetzung mit Alkoholen (II) und anschließend mit Alkylenoxiden ($IV_O$) verläuft aber bereits z.B. bei 60 - 90° C glatt. Daher sind aus den entsprechenden Trialkylphosphaten ($KED_{fo,r1,s1}$) und Phosphorpentoxid erhältlichen Metaphosphorsäure-isoamylester, Metaphosphorsäure-n-butylester, Metaphosphorsäure-n-propylester-, Metaphosphorsäure-äthylester und Metaphosphorsäure-methyl-ester als Verbindungen $III_{EC}$ gut geeignet.

Eine Zwischenstellung zwischen Phosphonsäure-anhydriden und Metaphosphorsäureestern nehmen echte organische Misch-Anhydride mit gleichzeitig Phosphonsäure-Anhydrid- und Metaphosphorsäureester-Gruppen ein. Sie entstehen gemäß US 2 596 679-vermutlich neben entsprechenden geschlossenen Misch-poly-estern - wenn 1 Mol der Kern-Ester-Donatoren Alkan-Phosphonsäure-dialkylester von der Formel

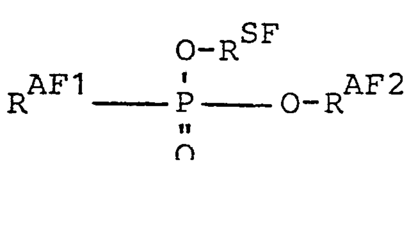 (und der Charakteristik $KED_{fo,r1/2,s1}$)

mit 1 Mol Phosphorpentoxid längere Zeit auf ca. 80° C erhitzt wird. Es kommt ihnen die idealisierte allgemeine Formel

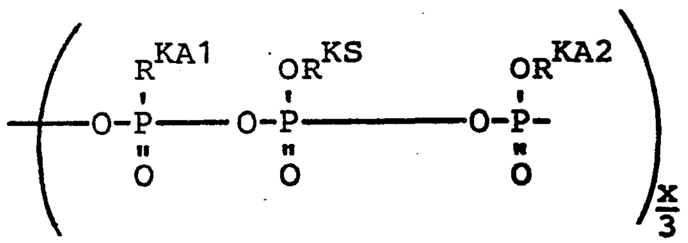

$(III_{ho,go,i2/3})$

zu, in der die Reste $R^{KA1}$ (i=0!) direkt und die Reste $R^{KS}$ und $R^{KA2}$ (i=1!) über den Sauerstoff an den Phosphor gebunden sind. $R^{KA1}$ und $R^{KS}$ bzw. $R^{KA2}$ sind meist verschieden. Es ist $R^{KA1} = R^{AF1}$, $R^{KA2} = R^1$, $R^{KS} = R^{SF} = R^1$ und f = g. Der Index g in $K^P$ ist hier ebenfalls gleich null, i ist $\frac{x}{3}$ mal 0 und $\frac{2x}{3}$ mal 1 und im Durchschnitt $\frac{2}{3}$. Derartige echte Misch-Anhydride $(III_{ho,go,i2/3})$ sind wegen der enthaltenden Esterreste - besonders wenn $R^K$ nicht $CH_3$ ist - über 80° C thermisch ebenso instabil wie die Metaphosphorsäureester. Dennoch sind die aus 1 Mol Phosphorpentoxid und aus z.B. 1 Mol n-Butan-phosphonsäure-diäthyl-ester, Isobutan-phosphonsäure-di-isopropylester, n-Propan-phosphonsäure-diäthyl-ester, n-Propanphosphonsäure-bis-(2-chloräthylester), n-Propan-phosphonsäure-dimethylester, Äthanphosphonsäure-di-n-butylester, Äthan-phosphonsäure-diäthylester, 2-Cyan-äthan-phosphonsäure-dimethylester, Äthanphosphonsäure-bis-(2,3-dibrompropyl-ester), Methanphosphonsäure-dimethylester etc. erhältlichen organischen echten Misch-Anhydride $(III_{ho,ho,i2/3})$ bei der Verwendung von Alkylenoxiden $(IV_o)$ als Oxalkylierungsmittel - besonders wegen ihrer Preisgünstigkeit - ebenfalls gut geeignet.

Weitere zumindest formal-echte Phosphor-Anhydride $(III_{Ec})$ leiten sich von Säuren des Phosphors mit zwei Phosphoratomen pro Molekül ab, bei denen im Ausdruck für $K^P$ g=1 ist.

Wenn gleichzeitig i=0 ist, handelt es sich um echte $\alpha,\omega$-Alkan-bis-(alkyl-phosphinsäure)-anhydride der allgemeinen Formel

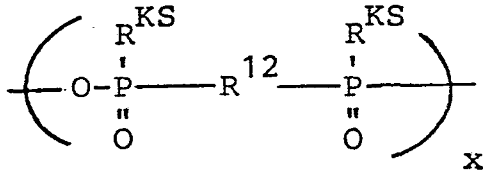

(und der Charakteristik $III_{ho,g1,i0}$)

Hiervon sind z.B. geeignet 1,10-Dekan-bis-(methyl-phosphinsäure)-anhydrid, 1,6-Hexa-n-bis-(äthyl-phosphinsäure)-anhydrid, 1,4-Butan-bis-(methyl-phosphinsäure)-anhydrid, 1,2-Äthan-bis-(methyl-phosphinsäure)-anhydrid und Methan-bis-(methyl-phosphinsäure)-anhydrid.

Sind g = 1 und i = 1, so liegen oligomere als α,ω-Alkan-meta-di-phosphonsäure-dialkyl-ester bezeichenbare Verbindungen der allgemeinen Formel

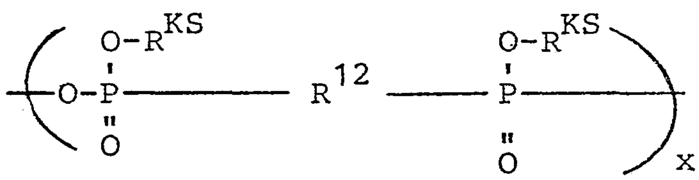

(und der Charakteristik $III_{ho,g1,i1}$)

vor. Aus dieser Verbindungsklasse kommen z.B. in Frage:

1,10-Dekan-meta-di-phosphonsäure-diäthylester, 1,6-Hexan-meta-di-phosphonsäure-dimethylester, 1,4-Butan-pyro-di-phosphonsäure-diäthylester, 1,2-Äthan-meta-di-phosphonsäure-di-n-butylester, 1,2-Äthan-meta-di-phosphonsäure-di-methylester, Methan-meta-di-phosphonsäure-di-methyl-ester, Methan-meta-di-phosphonsäure-di-isopropylester etc., insbesondere der leicht zugängliche 1,2-Äthan-meta-di-phosphonsäure-diäthylester.

Echte organische Misch-Anhydride ($III_{EC}$) zwischen phosphorhaltigen Säuren des Phosphors mit einem und mit zwei Phosphoratomen pro Molekül resultieren z.B., wenn Ester einer Phosphon- bzw. Phosphinsäure mit zwei P-Atomen pro Molekül mit einem Mol Phosphorpentoxid

erhitzt werden. Bei diesen Misch-Anhydriden ($III_{EC}$) beträgt g jeweils $\frac{1}{3}$. So entstehen z.B. durch Erhitzen von 1 Mol der Kern-ester-Donatoren $\alpha,\omega$-Alkan-pyro-phosphonsäure-tetra-alkylester der Formel

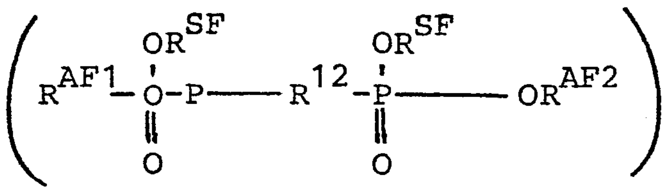

(und der Charakteristik $KED_{f1,r1,s1}$)

mit 1 Mol Phosphorpentoxid echte Mischanhydride der idealisierten allgemeinen Formel

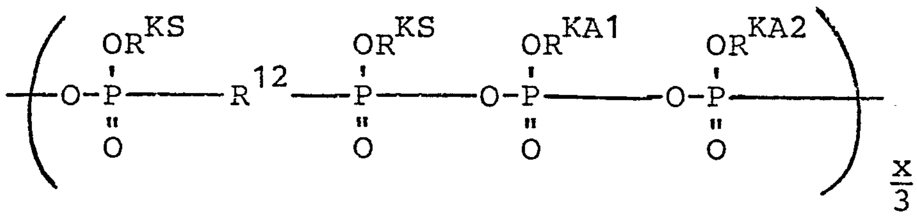

(und der Charakteristik $III_{h0,g1/3,i1}$).

Geeignete Ausgangsester des Typs $KED_{f1,r1,s1}$ sind z.B. 1,6-Hexandi-phosphonsäure-tetraäthylester, 1,4-Butan-di-phosphonsäure-tetramethylester, 1,2-Äthan-di-phosphonsäure-tetraäthylester, 1,2-Äthan-di-phosphonsäure-tetramethylester etc. und bevorzugt Methan-di-phosphonsäure-tetraäthylester und Methan-di-phosphonsäure-tetramethylester.

Ähnlich geeignete echte Mischanhydride ($III_{EC}$) der idealisierten allgemeinen Formel

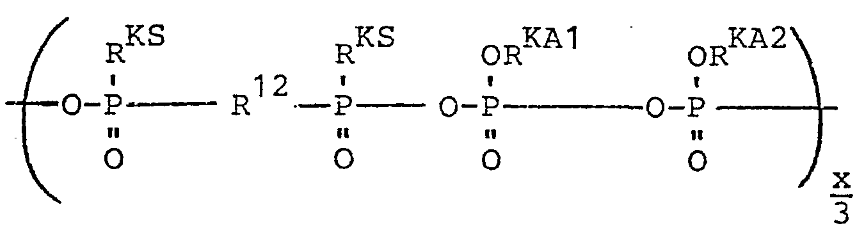

(und der Charakteristik $III_{h0,g1/3,i1/2}$)

entstehen analog z.B. durch Erhitzen von 1 Mol Phosphor-pentoxid mit je einem Mol der Kernester-Donatoren $\alpha,\omega$-Alkan-bis-(alkyl-phosphinsäure)-alkylester mit der Formel

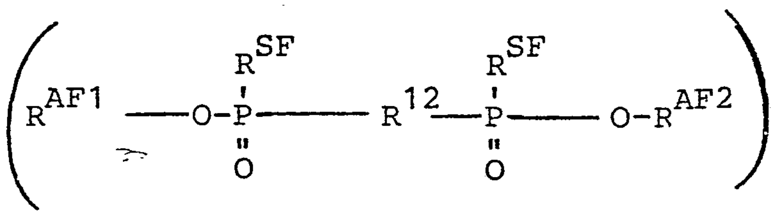

(und der Charakteristik $KED_{f1,r1,s0}$)

Von letzteren seien z.B. genannt: 1,6-Hexan-bis-(methyl-phosphinsäure-iso-butylester), 1,2-Äthan-bis-methyl-phosphinsäure-n-butylester), 1,2-Äthan-bis-(methyl-phosphinsäure-äthylester), Methanphosphinsäure-äthylester) etc.

Die im Vorstehenden näher erläuterten echten organischen Phosphor-Anhydride ($III_{EC}$) müssen stets protonenfrei sein. Abgeschlossene organische Phosphor-Anhydride ($III_{AG}$), die eingesetzt werden können, müssen mindestens zwei (c=2) Anhydrid-Äquivalente enthalten. Sie entsprechen der allgemeinen Formel III, wobei speziell h=1 sein muß. Protonenhaltige abgeschlossene organische Phosphor-Anhydride ($III_{AG,H}$), bei denen mindestens einer der Reste $R^{AB}$ oder $R^{SB}$ Wasserstoff sein muß, entstehen aus echten ($III_{EC}$) stets dann, wenn $c^K$ Anhydrid-Äquivalente von protonenfreien echten offenen ($III_{EC,OF}$) und/oder cyclischen organischen Phosphor-Anhydriden ($III_{EC,CY}$) mit protonenhaltigen Außengruppen-Donatoren ($AD_H$) vermengt werden. Dabei ist es für die allgemeine Zusammensetzung des End-Reaktionsgemisches I gleichgültig, ob die Außengruppen-Donatoren ($AD_H$) mit den Verbindungen $III_{EC}$ chemisch reagieren oder nicht, ob also ein Molekül vorliegt oder physikalische Gemische. Durch die Außengruppen-Donatoren ($AD_H$) werden die zwei Außengruppen (-OH und $R^{AB1}\text{-}(O)_{r1}\text{-}A^B$) im abgeschlossenen Ausgangs-Anhydrid ($III_{AG,H}$) erzeugt. Die entstehenden protonenhaltigen abgeschlossenen Anhydride ($III_{AG,H}$) können allgemein durch die Formel

$$R^{AB}\text{-}(O)_{r_1}\text{—}A^B\text{—}(O\text{-}K)_{c^K}\text{—}OH \qquad (III_{AG,H})$$

und durch $III_{H,h1,r,s,i,f,g}$ charakterisiert werden. Als protonenhaltige Außengruppen-Donatoren ($AD_H$), die ggfb. jeweils ein Anhydrid-Äquivalent spalten können, kommen für alle Bedeutungen von $A^K$ (bzw. $A^P$ und $A^{PL}$) z.B. in Betracht

Wasser und

saure Ester bzw. Säuren des Phosphors von den allgemeinen Formeln

$$R^{AB}(O)_{r_1} A^B\text{-}O\text{-}H \qquad (AD_H)$$

bzw. nach Einsetzen von $A^B$ spezieller

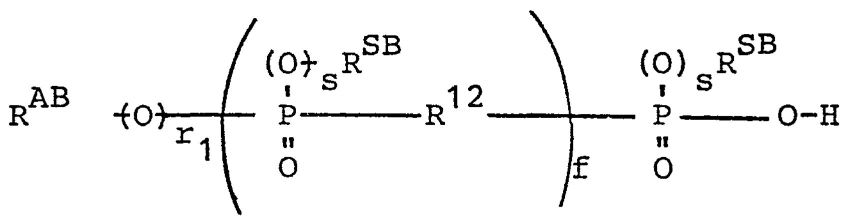

$(AD_H^P)$ und

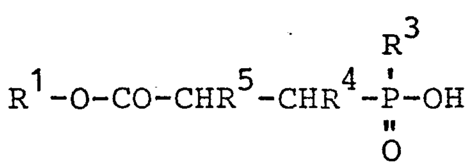

$(AD_H^{PL})$

Hierbei haben alle verwendeten Symbole wieder die bei der Erläuterung der Verbindungen I angegebene Bedeutung. Wenn $ÄZ_{III,EC}$ die Äquivalent-Zahl der eingesetzten Anhydrid-Äquivalente an echten Anhydriden ($III_{EC}$) ist und $HÄZ_{ADH}$ die Wasserstoff-Äquivalent-Zahl an protonenhaltigen Außengruppen-Donatoren ($AD_H$) ist, so können $HAZ_{ADH}$ = 1 bis $\frac{c^{K,EC}}{2}$ Wasserstoff-Äquivalente an protonenhaltigen Außengruppen-Donatoren ($AD_H$) zu den echten Anhydriden $III_{EC}$ zugegeben werden. Für die Zahl der Anhydrid-Äquivalente ($c^{K,AG}$) im entstehenden protonenhaltigen abgeschlossenen Phosphoranhydrid ($III_{AG,H}$) gilt dann

$$c^{K,AG} = \frac{ÄZ_{III,EC}}{HÄZ_{AD,H}}$$

Spezielle Gruppen protonenhaltiger Außengruppen-Donatoren ($AD_H$), die protonenfreie echte organische Phosphor-Anhydride ($III_{EC}$) in protonenhaltige abgeschlossene ($III_{AG,H}$) überführen können, können allgemein wieder durch Zugabe der Zahlenwerte der Indizes charakterisiert werden.

Es kommen in Frage z.B. alle sauren Alkanphosphonsäure-Derivate der Formel

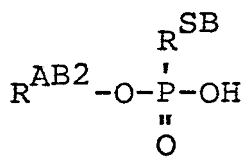

(und der Charakteristik $AD_{H,f0,r1,s0}$)

wie z.B. Methan-, Äthan- und Propan-, n-Butan-phosphonsäure,

bzw. Methan-phosphonsäure-mono-methylester, Äthan-phosphonsäure-mono-äthylester, n-Propan-phosphonsäure-mono-methylester, n-Propan-phosphonsäure-mono-äthylester etc.,

ferner alle sauren α, ω-Alkan-diphosphonsäure-Derivate der Formel

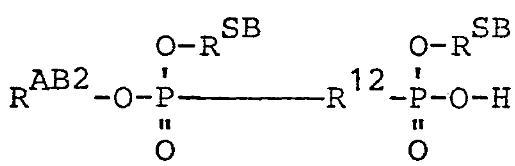

($AD_{H,f1,r1,s1}$)

wie z.B. Methan-, 1,2-Äthan-, 1,4-Butan-, 1,6-Hexan-, 1,10-Dekandi-phosphonsäure und deren Mono-, Di-, bzw. ri-methyl-, äthyl-, isopropyl-, n-butyl-, n-pentyl-ester etc.,

ferner alle Dialkyl-phosphinsäuren der Formel

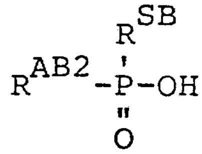

(und der Charakteristik $AD_{H,f0,r1/2,\ s0}$)

wie z.B. Dimethyl-phosphinsäure, Methyl-äthyl-phosphinsäure, Methy-propyl-phosphinsäure, Di-äthyl-phosphinsäure, Di-n-butyl-phosphinsäure etc.,

ferner alle sauren α,ω-Alkan-bis-(alkyl-phosphinsäure)-Derivate der Formel

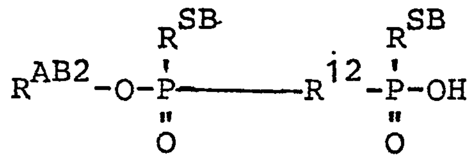

(und der Charakteristik $AD_{H,f1,r1,s0}$)

wie z.B. Methan- bzw. Äthan-, 1,4-Butan-, 1,6-Hexan-,1,10-Dekan-bis-(methyl-, bzw. äthyl-, n-propyl-phosphinsäure) oder deren Mono-methyl- bzw. äthyl-, iso-propyl-n-butyl-ester etc.,

ferner alle sauren Phosphorsäure-Derivate der Formel

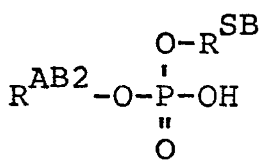

(und der Charakteristik $AD_{H,f0,r1,s1}$

wie z.B. Phosphorsäure und deren Mono- bzw. Di-methyl-, äthyl-, isopropyl-, n-butyl-, iso-amyl-ester etc.

Als Anhydrid-Außengruppen-Donatoren ($AD_{AN}$) können alle protonenfreien oder protonenhaltigen organischen Anhydride von der allgemeinen Formel

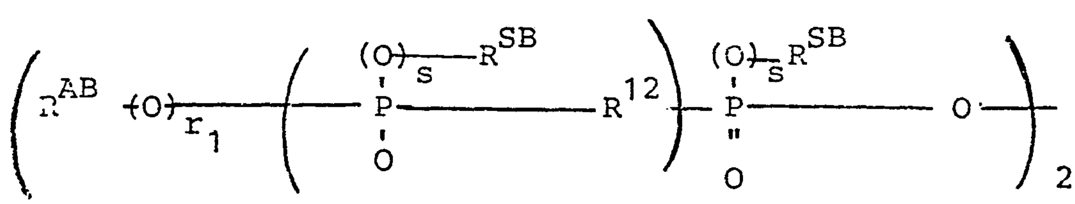

($AD_{AN}$)

bezeichnet werden.

Wenn $AMZ_{AD,AN}$ die Anhydrid-Mol-Zahl an Anhydrid-Außengruppen-Donatoren ($AD_{AN}$) bedeutet, so können $AMZ_{AD,AN}$ = 1 bis $c^{K,EC}$ Mole an $AD_{AN}$ ebenfalls mit den echten Anhydriden ($III_{EC}$) zu abgeschlossenen ($III_{AG}$) umgesetzt werden.

Es kommen in Frage z.B. alle Alkan-pyro-phosphonsäure-Derivate der Formel

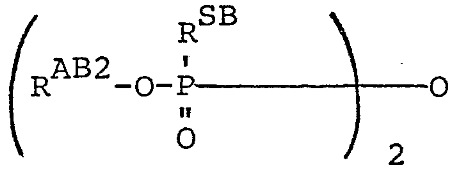

($AD_{AN,f0,r1,s0}$)

wie z.B. Methan-, Äthan-, n-Propan-, Isobutan-pyro-phosphonsäure bzw. deren Mono- oder Di-methyl-, äthyl-, n-propyl-, n-butylester etc., ferner alle Dialkyl-phosphinsäure-anhydride der Formel

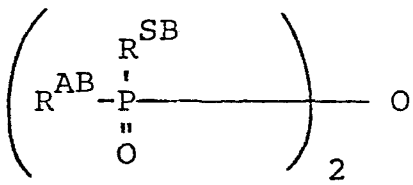

($AD_{AN,f0,r0,s0}$),

wie z.B. Dimethyl-, Methyl-äthyl-, Diäthyl-, Di-isopropyl-, Di-n-butyl-phosphinsäure-anhydrid etc.,

ferner alle $\alpha,\omega$-Alkan-pyro-di-phosphonsäure und -ester der allgemeinen Formel

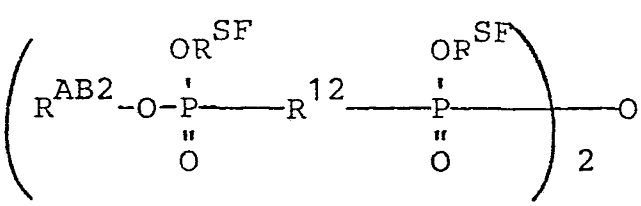

($AD_{AN,f1,r1,s0}$)

wie z.B. Methan-, 1,2-Äthan-, 1,3-Propan-, 1,6-Hexan-pyro-diphosphonsäure bzw. deren Mono- oder Dimethyl- bzw. äthyl-, isopropyl-, n-butyl-ester etc.,

ferner alle $\alpha,\omega$-Alkan-pyro-bis-(alkyl-phosphinsäuren) und deren Ester der allgemeinen Formel

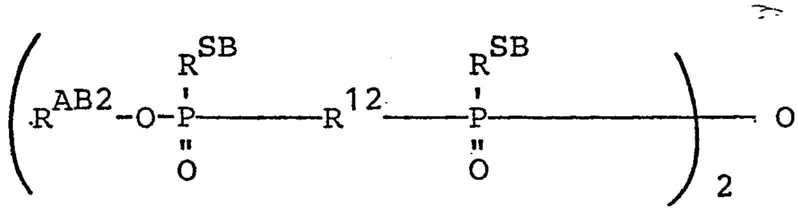

$(AD_{AN},f1,r1,s0)$

wie z.B. Methan- (bzw. 1,2-Äthan-, 1,4-Butan-, 1,10-Dekan-)pyro-bis-(methyl- (bzw. äthyl-, isopropyl-, n-butyl-)phosphinsäure oder deren Methyl- (bzw. äthyl-, n-propyl-, n-butyl-) ester etc.,

ferner Pyro-phosphorsäure und deren Ester der allgemeinen Formel

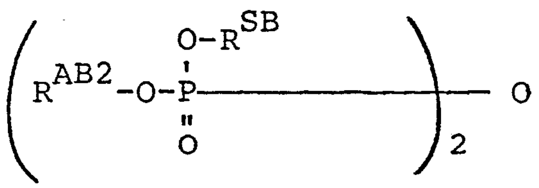

$(AD_{AN},f0,r1,s1)$,

wie z.B. Pyrophosphorsäure bzw. deren Mono-, Di-, Tri- oder Tetra-methyl-(bzw. äthyl-, isopropyl-, n-butyl-, n-pentyl-)ester etc.

Alle Anhydride $AD_{AN}$, die als Außengruppen-Donatoren fungieren, erhöhen die Gesamtzahl aller Anhydrid-Äquivalente um $c^A = 1$ auf insgesamt $c=c^K + c^A=c^K + 1$.

Ein anderes sehr praktikables Verfahren zur Herstellung von abgeschlossenen protonenfreien organischen Phosphor-Anhydriden der allgemeinen Formel

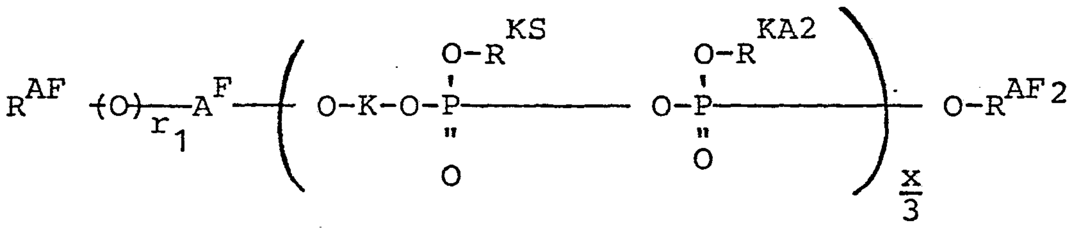

$(III_{AG,F})$

besteht darin, daß ganz allgemein die protonenfreien Kernester-Donatoren von der allgemeinen Formel

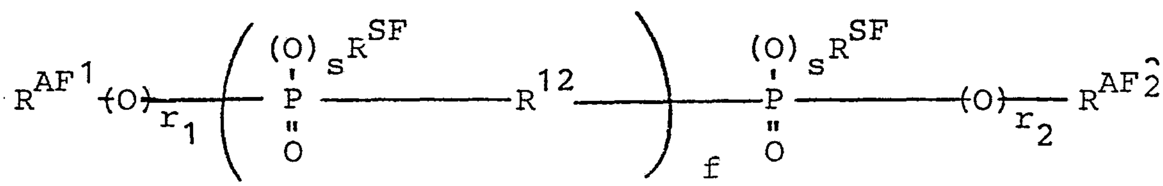

$(KED_F)$

mit Phosphorpentoxid nicht - weiter oben beschrieben - im Mol-Verhältnis 1:1, sondern im Mol-Verhältnis 1,001 bis 2,0 umgesetzt werden (vgl. auch wieder US 2 402 703 und US 2 596 679). In diesen Fällen erzeugen die protonenfreien Kernester-Donatoren $(KED_F)$ nicht nur $c^K$ Kernestergruppen der idealisierten Formel

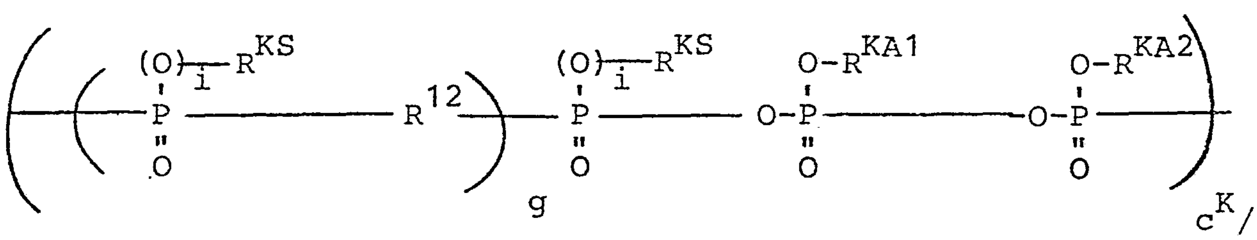

$(K^P)$,

wobei $R^{KS} = R^{SF} = R^1$, $R^{KA1} = R^{AF1}$ und $R^{KA2} = R^{AF2} = R^1$ sind. Die $KED_F$ fungieren hier gleichzeitig auch als protonenfreie Außengruppen-Donatoren $(AD_F)$, so daß h=1 wird und zwei Außengruppen

entstehen - allgemein ausgedrückt -

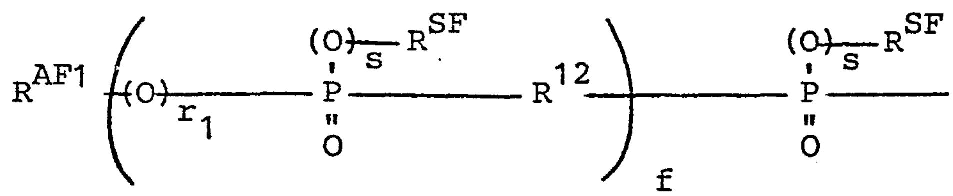

und $-OR^{AF2}$

Es werden bei allen Mol-Verhältnissen

$$MV = \frac{MZ_{KED,F}}{MZ_{PO}} = \frac{\text{Mol-Zahl KED}_F}{\text{Mol-Zahl Phosphorpentoxid}}$$, die zwischen

1,001 und 2,0 liegen gleichzeitig neben den zwei Außengruppen stets auch $c^K = \frac{3}{MV-1}$ Kerngruppen ($K^P$) und somit die gleiche Anzahl ($c^K$) von Anhydrid-Äquivalenten pro Mol des entstandenen oligomeren abgeschlossenen protonenfreien organischen Phosphor-Anhydrids ($III_{AG,F}$) gebildet.

Die tatsächlich im jeweiligen Ansatz vorhandenen Ansatz-Anhydrid-Äquivalente (AA) sind für alle Ansatzberechnungen von großer Bedeutung. Sie betragen das dreifache der Ansatz-Molzahl an Phosphorpentoxid ($AMZ_{PO}$). Es ist also stets $AA = 3 \cdot AMZ_{PO}$.

Die Ansatz-Mol-Zahlen ($AMZ_{III,AG,F}$) an Verbindungen $III_{AG,F}$ sind bei gleichen Ansatz-Mol-Zahlen Phosphorpentoxid ($AMZ_{PO}$) umso größer, je größer das um 1 verminderte Mol-Verhältnis (MV-1) und somit je kleiner $c^K$ wird. Sie wachsen aber auch mit $AMZ_{PO}$. Daher gilt formal: $AMZ_{III,AG,F} = (MV-1) \cdot AMZ_{PO}$.

Die protonenfreien abgeschlossenen organischen Phosphor-Anhydride ($III_{AG,F}$) lassen sich in der Praxis, wenn z.B. MV 1,1 ist, wesentlich leichter herstellen als die entsprechenden echten ($III_{EC}$), bei denen MV = 1,0 ist. Das Phosphorpentoxid löst sich in den Kernester-Donatoren ($KED_F$) immer schlechter, je mehr sich das Mol-Verhältnis dem Grenzwert 1,0 nähert, da sich auch die Viskosität stark erhöht. Der in der Praxis bevorzugte MV-Bereich liegt daher nicht bei 1,0, sondern bei ca. 1,05 bis 1,50, bzw. bei $c^K$-Werten

von 60 bis 6. Zur Erzielung einer gleichmäßigen Molekulargewichtsverteilung sollten derartige Gemische von $P_2O_5$ und den Kernester-Donatoren ($KED_F$) ca. 2 - 48 Stunden, bevorzugt 6 - 20 Stunden auf ca. 60 - 90° C erhitzt werden. Alkene dürfen dabei nicht entstehen. Alle bereits bei der Herstellung der entsprechenden echten Anhydride ($III_{EC}$) genannten speziellen protonenfreien Kernester-Donatoren ($KED_F$), d.h. alle genannten Phosphorsäureester sind auch für die Herstellung der oligomeren abgeschlossenen protonenfreien organischen Phosphor-Anhydride ($III_{AG,F}$) geeignet, wenn sie im Mol-Verhältnis zwischen 1,001 und 2,0 mit Phosphorpentoxid umgesetzt werden.

Ähnlich wie alle echten Anhydride ($III_{EC}$) durch Protonenhaltige Außengruppen-Donatoren ($AD_H$) zu protonenfreien abgeschlossenen Phosphor-Anhydriden ($III_{AG,F}$) werden, so können auch die protonenfreien abgeschlossenen Phosphor-Anhydride ($III_{AG,F}$) durch protonenhaltige Außengruppen-Donatoren ($AD_H$) zu kürzerkettigen protonenhaltigen abgeschlossenen Phosphor-Anhydriden ($III_{AG,H}$) werden. Auch diese sind als Anhydride (III) geeignet, so lange sie mindestens c=2 Anhydrid-Äquivalente enthalten.

Es muß betont werden, daß es z.B. wegen der großen Hygroskopizität aller echten organischen Phosphor-Anhydride ($III_{EC}$), auch z.B. der relativ sehr rein und einheitlich darstellbaren Alkan-phosphonsäure-anhydride ($III_{h0,g0,i0}$) und $\alpha,\omega$-Alkan-bis-(alkyl-phosphinsäure-)anhydride ($III_{h0,g1,i0}$) praktisch unmöglich ist, völlig reine echte Anhydride ($III_{EC}$) mit den Alkoholen (II) und den Oxalkylierungsmitteln (IV) umzusetzen. Hinzu kommt, daß auch die Alkohole und die Oxalkylierungsmittel (IV) in der technischen Praxis stets zumindest Spuren von Wasser enthalten. Ferner treten besonders bei höheren Reaktionstemperaturen und längeren Reaktionszeiten stets mehr oder weniger starke Gelb- bzw. Braun-Färbungen der Reaktionsgemische auf. Sie beruhen wenigstens z.T. auf geringfügigen Dehydratisierungen. Auch durch alkalische Katalysatoren werden Außengruppen erzeugt. Es fallen daher auch noch alle End-Reaktions-Verbindungen (I) unter die vorliegende Anmeldung,

bei denen b=0 und e sehr klein ist und die Außengruppenprotonen der Anhydride ($III_{AG,H}$) nur aus z.B. Wasserverunreinigungen stammen. Aus obigen Gründen liegen in der Praxis auch die gefundenen Hydroxyl-Zahlen der neutralen Endprodukte ($I_{m,q0}$), stets über den aus der Anzahl der zugesetzten Alkoholgruppen (b·n) und der Anzahl der Säure-Äquivalente (e) in den Verbindungen ($III_{AG,H}$) berechneten. Ferner werden aus den gleichen Gründen selbst bei beabsichtigter Abwesenheit von Alkoholen (II) (b=0)und von Protonen (e=0) in den Anhydriden (III) in den End-Reaktionsgemischen (I) Hydroxyl-Zahlen - wenn auch niedere, z.B. 10 - gefunden. Sie stammen z.T. aus den Katalysatoren. Sie treten in geringem Umfang aber auch bei Abwesenheit von Katalysatoren auf. Dementsprechend ist die zur Herstellung neutraler Endprodukte notwendige Ansatz-Molzahl (AO) an Oxalkylierungsmitteln (IV) praktisc immer größer als die theoretisch; aus der Ansatz-Anhydrid-Äquivalent-Zahl (AA) und der Ansatz-Protonen-Äquivalentzahl (AH) - gemäß $AO_{TH}$ = AA+AH - berechnete.

A) Möglichkeiten zur Herstellung der verschiedenen geeigneten Arten von organischen Phosphor-Anhydriden (III).

I. "Echte" organische Phosphor-Anhydride ($III_{EC}$) (mit h=0)

1) 2-Alkyl-2.5-dioxo-1.2-oxa-phospholane ($III_{PL}$)
(Deutsche Patentanmeldung P 25 26 689.1)

2) Alkanphosphonsäure-anhydride ($III_{ho,\ go,\ io}$)
vgl. Houben-Weyl Bd. XII/1 S. 612-613.

3) Metaphosphorsäure-ester ($III_{ho,go,i1}$)
vgl. Houben-Weyl Bd. XII/2 S. 939.
Sie werden speziell gemäß US 2 402 703 durch Erhitzen von 1 Mol $P_2O_5$ und 1 Mol der Kernester-Donatoren

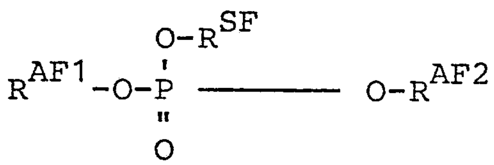 ($KED_{fo,r1,s1}$)

(= Tri-alkyl-phosphate) erhalten.

4) Misch-Anhydride mit Alkan-phosphonsäure-anhydrid- und Metaphosphorsäureester-Gruppen ($III_{ho,go,i\ 2/3}$). Sie werden gemäß US 2 596 679 durch Erhitzen von 1 Mol $P_2O_5$ und 1 Mol der Kernester-Donatoren

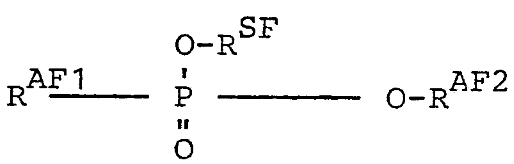 ($KED_{fo,r1/2,s1}$)

(= Alkan-phosphonsäure-dialkylester).

5) Bis-(methyl-phosphinsäure-)anhydride ($III_{ho,g1,io}$). Sie werden erhalten, indem man Bisphosphinsäurederivate der Formel

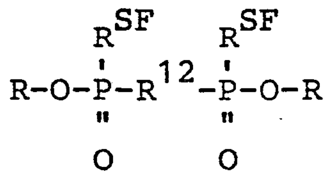

wobei R Wasserstoff, einwertige Kationen, die Ammoniumgruppe oder gegebenenfalls halogensubstituierte Alkylgruppen bedeutet, mit anorganischen Säurechloriden und/oder Phosgen und/oder Oxalylchlorid oder mit den entsprechenden Bromverbindungen im Molverhältnis von etwa 1 : 1 bei Temperaturen zwischen ca. Raumtemp. und 250°C, vorzugsweise zwischen ca. 100 und 200°C gegebenenfalls in Gegenwart inerter Lösungsmittel umsetzt.

6) α,ω-Alkan-meta-di-phosphonsäure-dialkylester ($III_{ho,g1,i1}$). Sie werden analog zu den unter 5) beschriebenen Anhydriden hergestellt, ausgehend von α,ω-Alkan-diphosphonsäure-tetraalkylestern in der Weise, daß noch 2 Alkylreste erhalten bleiben.

7) Misch-Anhydride mit α,ω-Alkan-pyro-di-phoshonsäure-di-alkylester- und Meta-phosphorsäureester-Gruppen ($III_{ho,g1/3,i1}$). Sie sind noch nicht beschrieben. Sie werden analog US 2 596 679 durch Erhitzen von 1 Mol $P_2O_5$ und 1 Mol der Kernester-Donatoren

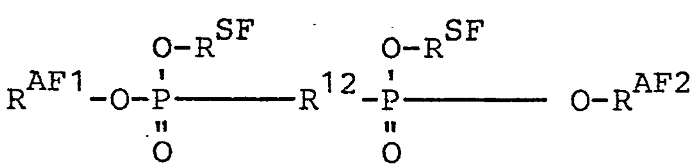 ($KED_{f1,r1,s1}$)

(= α,ω-Alkan-di-phosphonsäure-tetra-alkylester) erhalten.

8) Misch-Anhydride mit α,ω-Alkan-bis(alkyl-phosphinsäure-)anhydrid- und Meta-phosphorsäure-ester-gruppen ($III_{ho,g1/3,i1/2}$).
Sie sind noch nicht beschrieben. Sie werden analog US 2 596 679 durch Erhitzen von 1 Mol $P_2O_5$ und 1 Mol der Kernester-Donatoren

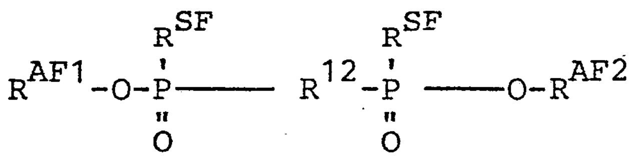 $(KED_{f1,r1,so})$

(= α, ω-Alkan-bis-(alkyl-phosphinsäure-alkyl-ester) erhalten.

II Abgeschlossene organische Phosphor-Anhydride ($III_{AG}$) (mit h=1)

1) Protonenhaltige abgeschlossene organische Phosphor-Anhydride ($III_{AG,H}$) mit der allgemeinen Charakteristik $III_{H,h1,r,s,i,f,g}$). Sie entstehen aus den 8 Klassen von echten organischen Phosphor-Anhydriden ($III_{EC}$) durch 5 bis 60 Minuten Rühren (bei 20°-150°C, bevorzugt 40° bis 90°C mit $HÄZ_{ADH}$= 1 bis $\frac{c^{K,EC}}{2}$ Molen an protonenhaltigen Außengruppen-Donatoren ($AD_H$) von den folgenden 5 literaturbekannten Verbindungsklassen (mit den in Klammern angegebenen Charakteristiken)

   a) Ggbf. substituierte Derivate von Dialkyl-phosphinsäuren der Formel

   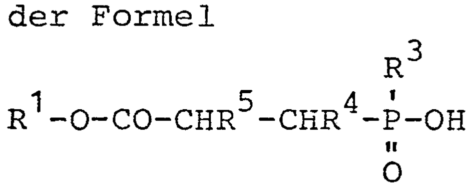 $(AD_{H,PL})$ bzw.

   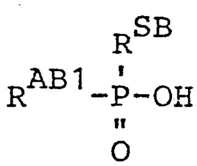 $(AD_{Hfo,ro,so})$,

   b) Alkanphosphonsäure-Derivate

   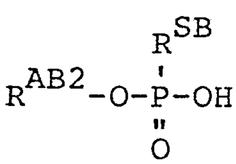 $(AD_{Hfo,r1,s0})$,

   c) α, -Alkan-di-phosphonsäure-Derivate

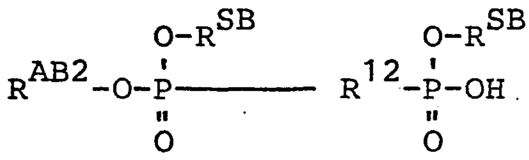

$(AD_{Hf1,r1,s1})$,

d) α,ω-Alkan-bis-(alkyl-phosphinsäure)-Derivate

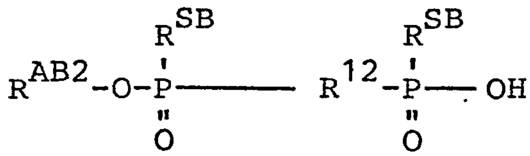

$(\widetilde{AD}_{Hf1,r1,so})$,

e) Phosphorsäure-Derivate

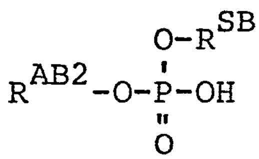

$(AD_{H,fo,r1,s1})$

Es können bei Ausschöpfung aller Kombinationsmöglichkeiten insgesamt 8·5=40 verschiedene Arten an protonenhaltigen abgeschlossenen Phosphor-Anhydriden $(III_{AG,H})$ gebildet werden. Sie können alle, wenn nötig, durch eine einfache Matrix leicht überblickt und durch eindeutige Gruppen-Chrakteristiken gekennzeichnet werden.

2) Durch Anhydride abgeschlossene organische Phosphor-Anhydride $(III_{AG,AN})$ mit der allgemeinen Charakteristik $(III_{AN,h1,r,s,i,f,g})$.

Sie enthalten eine um 1 erhöhte Gesamtzahl der Anhydrid-Äquivalente. Sie entstehen aus den 8 Klassen von echten organischen Phosphor-Anhydriden $(III_{EC})$ durch 1 bis 20 Stunden Rühren bei $20^{o}$ bis $180^{o}C$, bevorzugt 50° bis 150° C mit $AMZ_{AD,AN}$= 1 bis $c^{K,EC}$ Molen an Anhydrid-Außengruppen-Donatoren $(AD_{AN})$.
Solche können sein

f) Ggbf. substituierte Di-alkyl-phosphinsäureanhydride der Formeln

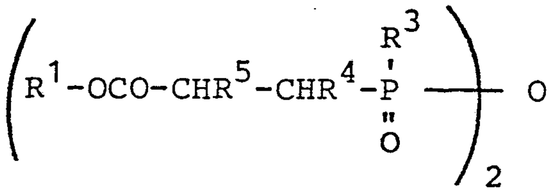

$(AD_{AN,PL})$ bzw.

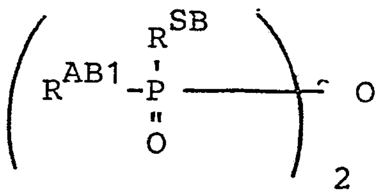

$(AD_{AN,fo,roso})$

g) Alkan-pyro-phosphonsäure-Derivate

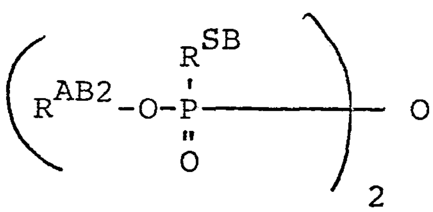

$(AD_{AN,fo,r1,so})$

h) α,ω-Alkan-pyro-di-phosphonsäure-Derivate

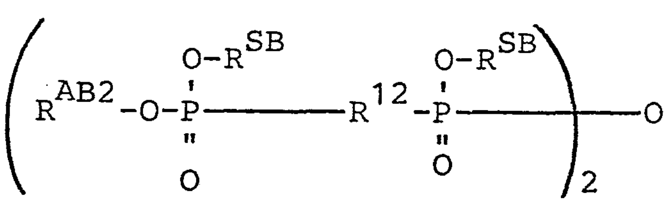

$(AD_{AN,f1,r1,s1})$

i) α,ω-Alkan-pyro-bis-(alkyl-phosphinsäure)-Derivate

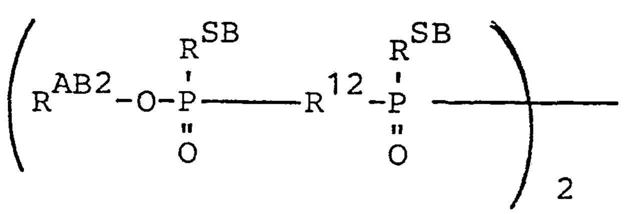

$(AD_{AN,f1,r1,so})$

j) Pyro-phosphorsäure-Derivate

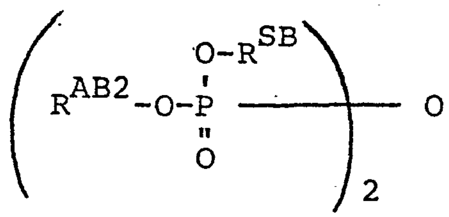

$(AD_{AN,fo,r1,s1})$

Es können bei Ausschöpfung aller Kombinationsmöglichkeiten insgesamt wieder 8·5=40 verschiedene Arten an durch Anhydride abgeschlossenen Phosphor-Anhydriden ($III_{AN}$) gebildet werden. Sie können ebenfalls, wenn nötig, durch eine einfache Matrix leicht überblickt und durch eindeutige Gruppen-Charakteristiken klassifiziert werden.

3) Protonenfreie abgeschlossene organische Phosphor-Anhydride ($III_{AG,F}$) mit der allgemeinen Charakteristik $III_{F,h1,r,s,i,f,g}$).

Sie entstehen stets - analog US 2 596 679 - wenn 1 Mol $P_2O_5$ mit 1,001 bis 2,0 Molen an protonenfreien Kernester-Donatoren (KED) mit 1 Mol Phosphorpentoxid ($P_2O_5$) erhitzt wird. Es entstehen dabei jeweils 2 Außengruppen und $c^K = \frac{3}{MV-1}$ Kerngruppen ($K^P$) pro Mol $III_{AG,F}$.

Es können auch hier - analog zur Herstellung der entsprechenden echten (stets protonenfreien) organischen Phosphor-Anhydride mit den Charakteristiken

$III_{ho,go,i1}$ (= Meta-phosphorsäureester),

$III_{ho,go,i2/3}$ (= Misch-Anhydride mit u.a. Alkan-phosphonsäure-anhydrid-Gruppen),

$III_{go,g1/3,i1}$ (= Misch-Anhydride mit u.a. α,ω-Alkan-meta-di-phosphonsäure-dialkylester-Gruppen) und

$III_{h,g1/3,i1/2}$ (= Misch-Anhydride mit u.a. α,ω-Alkan-bis-(alkyl-phosphinsäure)-anhydrid-Gruppen) -

wiederum Kernester-Donatoren (KED) mit den folgenden Gruppen-Charakteristiken eingesetzt werden:

a) $KED_{fo,r1,s1}$ (= Tri-alkyl-phosphate),

b) $KED_{fo,r1/2,s1}$ (= Alkan-phosphonsäure-dialkylester),

c) $KED_{f1,r1,s1}$ (= α,ω-Alkan-di-phosphonsäure-tetraalkylester),

d) $KED_{f1,r1,so}$ (= α,ω-Alkan-bis-(alkyl-phosphinsäure-alkylester).

Es gibt daher nur vier verschiedene "reine" Arten von protonenfreien abgeschlossenen organischen Phosphor-Anhydriden ($III_{AG,F}$) mit der allgemeinen Charakteristik $III_{F,h1,r,s,i,f,g}$

Zusammengefaßt ergeben sich insgesamt 92 reine Arten von organischen Phosphor-Anhydriden (III). Es sind dies 40 ($III_{AG,H}$) + 40 ($III_{AG,AN}$) + 4 ($III_{AG,F}$), also insgesamt 84 verschiedene Verbindungsarten von abgeschlossenen organischen Phosphoranhydriden ($III_{AG}$) und 8 Verbindungsarten von echten organischen Phosphor-Anhydriden ($III_{EC}$). Alle ihnen entsprechenden speziellen Einzel-Anhydride ($III_{SP}$) können als Verbindungen III eingesetzt und relativ einfach - wie zusammenfassend dargelegt - hergestellt werden. Es versteht sich von selbst, daß Einzel-Anhydride der 92 verschiedenen reinen Arten von Anhydriden (III) auch miteinander - ohne daß es zu chemischen Reaktionen kommen muß - beliebig gemischt werden können. Auch alle diese Mischungen fallen unter die allgemeine Formel für die Anhydride (III).

Für die spezielle Ansatz-Berechnung genügt es - auch bei Mischungen - die Gesamtzahl der Ansatz vorhandenen Anhydrid-Äquivalente (AA) möglichst genau zu kennen. Durch freie Wahl der Mol-Zahl (b) an n-wertigen Alkoholen bzw. der Ansatz-Protonen Äquivalente (AH) in den Anhydriden (III) können - wenn AA bekannt ist - die Eigenschaften der resultierenden Reaktionsgemische (I) weitgehend vorgeplant werden. Es kann dann z.B. leicht auf eine bestimmte mittlere Seitenkettenlänge - ausgedrückt durch den Index m - und damit auf eine bestimmte End-Hydroxyl-Zahl (oder wenn q = 1 ist auch Rest-Säure-Zahl) - hingearbeitet werden. Es gilt allgemein die Beziehung $c=(m+1+q)\cdot(b\cdot n+e)$ und die besonders wichtige Umkehrung

$m = \frac{c}{b \cdot n+e} - 1-q$, wobei $b \cdot n+e$ mindestens gleich 1 und $c$ mindestens gleich 2 sein müssen. m darf auch 0 sein, aber nicht negativ. Dies bedeutet in der Praxis, daß z.B. formal - im Mittel - nach der Umsetzung der Alkohole (II) mit den Anhydriden (III) keine freien alkoholischen Gruppen übrig bleiben dürfen, die kein Phosphor-Anhydrid-Äquivalent als Reaktionspartner gefunden haben.

An Oxalkylierungsmittel der Formel

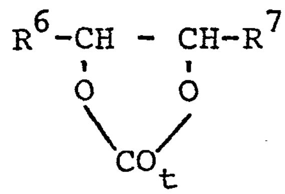

(IV)

kommen, wenn t=o ist, in Betracht alle Alkylenoxid der Formel

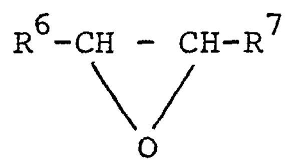

($IV_o$)

wie z.B. 1.2-Butylenoxid, Epichlorhydrin, Propylenoxid und bevorzugt Äthylenoxid. Wenn t=1 ist, sind geeignet die Alkylencarbonate der Formel

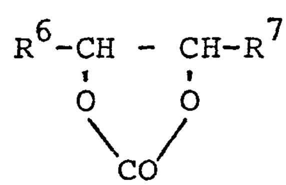

($IV_1$)

wie z.B. Propylen-carbonat und bevorzugt Äthylen-carbonat

Besonders, wenn g=O und $b \cdot n$ und e relativ sehr klein und $c^K$ relativ groß sind und keine Alkali-Katalysatoren angewandt werden, können bei der Umsetzung der Verbindungen II, III und IV bei relativ tiefen Temperaturen ( ca.$<100^{\circ}C$) primär ggbf. z.T. die hydroxylgruppenfreien unerwünschten cyclischen diesterartigen Reaktionsprodukte vom Typus ($K_{IV}$) entstehen. Vor allem die ggbf. als Zwischenprodukte auftretenden

substituierten 1.3-Di-oxa-2-oxo-phospholane-2

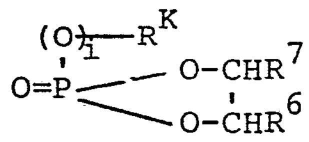

die aus Phosphonsäure-Anhydrid- und Meta- bzw. Poly-phosphorsäureester-Derivaten und nur Alkylenoxiden nach Ablauf einer Nebenreaktion entstehen können, haben die unerwünschte Eigenschaft relativ leicht flüchtig zu sein und sehr leicht mit Wasser unter Ringöffnung und Entstehung saurer Endprodukte zu hydrolisieren. (Vgl. J. of general Chemistry of the USSR, Vol. 35, No. 4, S. 731 - 735 (1965).) Besonders bei höheren Temperaturen (40-200° C) und bei Anwesenheit stark alkalischer Katalysatoren setzen sie sich nach ca. 1 - 20 stündiger Nachbehandlung mit den im Reaktionsgemisch mindestens bereits vorhandenen $b \cdot n+e$ Hydroxylgruppen um. Unter Ringöffnung, Kettenverlängerung und m-Wert-Vergrößerung resultieren die entsprechenden, gewünschten Reaktionsverbindungen (I) - kenntlich am Verschwinden der entsprechenden Banden, Verringerung der Wasserempfindlichkeit und Erhöhung der Viskosität. Aber selbst geringe ggbf. im Endprodukt (I) noch vorhandene Reste von cyclischen Diestern ($K_{IV}$) beeinträchtigen die Verwendbarkeit der End-Reaktionsgemische (I) praktisch nicht, da z.B. zur Fixierung der Endverbindungen (I) auf Textilmaterial mit Hilfe von z.B. Aminoplast-Vorkondensaten sowieso saure pH-Werte vorliegen müssen. Die Nachbehandlung kann daher, sie muß aber nicht in allen Fällen erfolgen.

Die organischen Phosphor-Anhydride (III) und die daraus erhältlichen Zwischen- und End-Reaktions-Produkte sind von unterschiedlicher thermischer Beständigkeit. Immer dann, wenn die Indizes r, s und vor allem s gleich 1 sind und $R^{AB}$ und $R^{SB}$ nicht Wasserstoff sind, können bei höheren Temperaturen ggbf. Nebenreaktionen auftreten. Daher empfiehlt sich in solchen Fällen die Anwendung von Alkylenoxiden ($IV_0$), da diese im Allgemeinen bereits bei niedrigeren Temperaturen reagieren als die Alkylencarbonate ($IV_1$). Alkylencarbonate ($IV_1$) werden mit Vorteil vor allem dann eingesetzt, wenn hochschmelzende bzw. höhermolekulare Alkohole (II) Verwendung finden, aus Sicherheitsgründen z.B. mit Äthylenoxid

trolle ($CO_2$-Entwicklung) erwünscht ist.

Die Verwendung von inerten Lösungs- bzw. Verdünnungsmitteln ist in den meisten Fällen nicht erforderlich. Es können aber auch z.B. Aceton, Methyläthylketon, Acetonitril, 1,2-Dichloräthan, Benzol, Toluol, Xylol, Chlorbenzol, vor allem aber Dioxan- wenn nötig - schadlos als Verdünnungsmittel bzw. Lösungsvermittler zugesetzt und noch z.B. vor der vollständigen Umsetzung mit den Oxalkylierungsmitteln (IV) oder erst ganz am Ende der Reaktion wieder destillativ entfernt werden.

Die Reaktionstemperaturen zwischen den Verbindungen II ($b > 0$) und III liegen zwischen 0° und 180° C oder höher, z.B. bis 250° C, bevorzugt zwischen 20° und150° C, insbesondere 80° bis 150° C. Die Umsetzung der bei $b > 0$ erhaltenen sauren Zwischenprodukte, bzw. - wenn $b=0$ ist - der protonenhaltigen abgeschlossenen Phosphor-Anhydride ($III_{AG,H}$), mit den 1,2-Alkylencarbonaten ($IV_1$) vollzieht sich zwischen ca. 80° und 240° C, bevorzugt 150 - 220° C. Die Alkylenoxide ($IV_0$) reagieren zwischen 20° und 240° C, bevorzugt 60 - 180° C. Die Reaktion kann in Stufen durchgeführt werden und zwar in der Weise daß, wenn $b > 0$ ist, zunächst b Mole der Alkohole (II) mit n alkoholischen Gruppen mit $b \cdot n+e$ Anhydrid-Äquivalenten der Phosphor-Anhydride (III) umgesetzt werden und anschließend zunächst bei $e=0$ nur $b \cdot n$, bei $e > 0$ mindestens $b \cdot n+e$ Mole der Oxalkylierungsmittel (IV) einwirken, bis die Säurezahl auf praktisch 0 abgesunken ist. Dann werden die weiteren Äquivalente der Phosphor-Anhydride (III) und der Oxalkylierungsmittel (IV) jeweils abwechselnd bis zu den gewünschten Endmengen von insgesamt $c=(b \cdot n+e) \cdot (m+1+q)$ Äquivalenten der Anhydride (III) bzw. mindestens $u_N = (b \cdot n+e) \cdot (m+1+q)$ Molen der Oxalkylierungsmittel (IV) zugegeben, wenn neutrale Reaktionsgemische I erhalten werden sollen oder bis zu $N_{SR} = (b \cdot n+e) \cdot (m+1)$ Molen der Oxalkylierungsmittel (IV), wenn $q=1$ ist, d.h. noch saure Produkte gewünscht werden.

Die für $b > 0$ bevorzugte Ausführungsform ist jedoch dann gegeben, wenn alle $c=(b \cdot n+e) \cdot (m+1+q)$ Anhydrid-Äquivalente der Anhydride (III) zusammen mit jeweils b Molen der n Alkohol-Gruppen enthaltenden Alkohole (II) vermischt und - zur Erzielung saurer Endprodukte ($q=1$) mit $(b \cdot n+e) \cdot (m+1)$ Molen der Oxalkylierungsmittel (IV) bzw. zur

Erzielung neutraler Endprodukte (q=0) mit mindestens $(e+b \cdot n) \cdot (m+1+q)$ Molen der Oxalkylierungsmittel (IV) umgesetzt werden. Die Verbindungen IV können, soweit es sich um Alkylencarbonate ($IV_1$) handelt, den Mischungen aus II und III von Anfang an beigemengt werden. Das gleiche gilt für schwerflüchtige Alkylenoxide ($IV_0$), wie z.B. Epichlorhydrin. Leichtflüchtige Alkylenoxide ($IV_0$), wie z.B. Propylenoxid oder Äthylenoxid werden dagegen bei den Reaktionstemperaturen eingetropft bzw. eingegast. In ähnlicher Weise kann verfahren werden, wenn b=0 und $e > 0$ sind, also protonenhaltige abgeschlossene Phosphor-Anhydride ($III_{AG,H}$) aber keine Alkohole (II) eingesetzt werden. Die Umsetzung von II und III entfällt dann allerdings.

Je nachdem, welche Zahlenwerte n, e und m bedeuten und welche Verbindungen $Z_n(-O-H)_n$ vorliegen, sind die Endprodukte (I) farblos bzw. mehr oder weniger gelblich gefärbt und von unterschiedlicher Konsistenz. Wenn n+e=1 oder 2, $R^{AB}$, $R^{SB}$ und $R^K$ jeweils einen niederen Alkylrest und $R^4$ bzw. $R^5$ entweder ebenfalls einen niederen Alkylrest oder Wasserstoff , g=0, r, s und i wenigstens einaml = 1 bedeuten, handelt es sich überwiegend um viskose Flüssigkeiten, bei g=1 und $e+n > 3$ und r, s und i = 0 überwiegend um feste zähe Massen, die aber alle gut wasserlöslich sind. Steigt das Molekulargewicht durch lange Alkylreste oder lange Einzelketten, also durch hohe Werte von m, an, so nimmt die Viskosität z.T. erheblich zu. Die Hydrolysenbeständigkeit der Reaktionsprodukte (I) ist am größten, wenn s bzw. vor allem i jeweils 0 sind. Sie nimmt ab, wenn r, s und vor allem i = 1 sind. Diese Verbidungsklassen sind dafür besonders preiswert zugänglich.

Auch lange Fettreste und aromatische Grundsubstanzen, selbst wenn sie zusätzlich noch andere, die Wasserlöslichkeit stark erschwerende Gruppen, wie z.B. die Halogenatome Fluor, Chlor und Brom enthalten, werden bei Werten von m über ca. 2-5 wasserlöslich oder in Wasser dispergierbar.

Wie die Verbindungen der Anmeldungen P 25 56 482.3 (= HOE 75/F 316) und P 26 47 745.2 (= HOE 76/F 250) sind die erhaltenen Verbindungen

0000024

der Formel I, besonders die neutralen und mehrwertigen Verbindungen mit mehreren Hydroxylgruppen und $m > 1$ wegen ihres durchwegs relativ hohen Phosphorgehalts als Vorprodukte für Flammschutzmittel oder in Kombination mit vernetzenden Substanzen auch direkt als waschfest fixierbare Flammschutzmittel z.B. für Textilien sehr gut geeignet.

Die Verbindungen mit langen Alkylgruppen (bis zu 18 C-Atome) kommen wegen ihren oberflächenaktiven Eigenschaften auch als Tenside in Betracht.

Zur Erleichterung des Überblicks über die den Text erläuternden Herstellungs-Beispiele wurden diese nach der Art der verwendeten Anhydride (III) unterteilt und vorweg jeweils die allgemeine Formel der Anhydrid-Art und in Klammern ihre Characteristik angegeben.

Aus Gründen der einfachen Überschaubarkeit wurde die Tabellenform bevorzugt.

Bei der praktischen Durchführung wurde immer von einem Ansatz-Anhydrid-Äquivalent (AA=1) ausgegangen. Es wurden wenn b > 0 war, entsprechend geringe Bruchteile von Molen (b) an n-wertigen Alkoholen (III) der Formel $Z_n(OH)_n$ und von AH Ansatz-Protonen-Äquivalenten eingesetzt. b und AH waren stets kleiner als 1.

Nur die Anzahl der Mole der Ansatz-Oxalkylierungsmittel (AO) war aus obengenannten Gründen für die neutralen Endprodukte (mit einer Säure-Zahl von >3) stets etwas größer als 1.

Um die Herstellungs-Beispiele übersichtlich in Tabellenform darstellen zu können, mußten sie alle umgerechnet, d.h. mit der angegebenen Ansatz-Anhydrid-Äquivalent-Zahl (AA) multipliziert werden. Dadurch ergaben sich Mol-Zahlen (b) an Alkoholen (II) der Formel $Z_n(OH)_n$ von stets = 1. Die Zahl der Ansatz-Alkoholgruppen-Äquivalente (b·n) wurde dementsprechend stets = n.

Die gemachten Angaben beziehen sich alle auf die umgerechneten Daten. Wenn Alkohole fehlten (b=O), wurde sinngemäß auf 1 Mol der ggbf. nur durch die Katalysator-Reste abgeschlossenen Anhydride ($III_{AG}$) mit dann c=AA Ansatz-Anhydrid-Äquivalenten und e=AH Protonen bezogen.

In allen Fällen wurden die Alkohole (II) bei Raumtemperatur (25°C) bzw. bei den Verflüssigungstemperaturen eventuell fester Anhydride (III) zu den Anhydriden (III) innerhalb von 1 bis 30 Minuten gegebenenfalls unter Kühlung zugegeben. Die angegebenen, unterschiedlichen Reaktionsbedingungen beziehen sich daher stets nur

auf die in 2. Stufe erfolgte Umsetzung mit den Oxalkylierungsmitteln (IV).

Die Säurezahlen aller End-Reaktionsprodukte, gemessen in mg KOH pro g, lagen <3. Im Beispiel 20 wurden auch saure Produkte charakterisiert.

In den Herstellungs-Beispielen 1 - 9, 10b, 15, 19, 20 ist jeweils b>0, in 10b zusätzlich e>0. Die Beispiele 1 - 9, 10b, 15, 19 beschreiben das Direkt-Verfahren (DV), 20 das Mehr-Stufen-Verfahren (MSV).

Die Herstellungs-Beispiele 10a, 11 - 14, 16 - 18, in denen jeweils b=0 und e>0 sind, erläutern das Einstufen-Verfahren (EV).

Die in den Tabellen weiterhin verwendeten, in den jeweiligen Formeln der Anhydrid-Arten (III) nicht dargestellten Abkürzungen bedeuten:

| | |
|---|---|
| $Z_n$ | = Kohlenwasserstoff-Rest der n-wertigen Alkohole |
| T | = Oxalkylierungs-Temperatur in Grad Celsius (N=Nachbehandlungs-Temperatur in Grad Celsius) |
| Zt | = Oxalkylierungs-Zeit in Stunden (auf- bzw. abgerundet) (NO=Nachbehandlungs-Zeit in Stunden) |
| Kat | = Katalysator (So = Soda, Po = Pottasche, NaHy = Natrium-hydroxid, NaM = Natrium-methylat, Tra = Triäthanolamin, NaML=33 %ige NaM-Lösung in Methanol) Die Zahlen bedeuten Mol pro Ansatz, N = Nachbehandlung |
| AA | = Ansatz-Anhydrid-Äquivalent-Zahl |
| AO | = Ansatz-Oxalkylierungsmittel-Mol-Zahl (AeO = Äthylenoxid, PyO = Propylenoxid, ÄC = Äthylencarbonat, Epi = Epichlorhydrin) |
| m | = mittlerer Oligomerisierungsgrad pro Kette |
| OHZ | = gefundene Hydroxyl-Zahl (mg KOH pro g) |

| | | |
|---|---|---|
| P | = | gefundener Phosphor-Gehalt in Gewichts-Prozent |
| $n_D^{20}$ | = | Berechnungsindex bei 20° C |
| EP-MV | = | Ester-Phosphorpentoxid-Mol-Verhältnis. Es schwankt zwischen 1,0 (stets in Beispielen 2, 3) und 2,0. |
| KS-MV | = | Kernanhydrid-Säure-Mol-Verhältnis. Es ist identisch mit $c^K$ und meist gleich AA |
| KAN-MV | = | Kernanhydrid-(Außen-)-Anhydrid-Mol-Verhältnis. Es ist identisch mit $c^K$. |

0000024

Herstellungsbeispiele:

Beispiel 1: Anhydrid-Art: 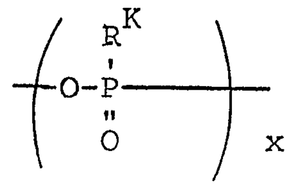 $(III_{h0,g0,i0})$

| | $R^K$ | $Z_n$ | T | Zt | Kat | n | AA | AO | m | OHZ | P | $n_D$ |
|---|---|---|---|---|---|---|---|---|---|---|---|---|
| a | $CH_3$ | $C(CH_2)_4$ | 120 | 5 | 0,02 So | 4 | 8 | 9,1 AeO | 1,0 | 222 | 21,3 | 1,4789 |
| b | $CH_3$ | $n-C_6H_{12}$ | 120 | 7 | 0,06 So | 2 | 6 | 7,8 PyO | 2,0 | 184 | 18,0 | 1,4690 |
| c | $CH_3$ | $n-C_6H_{12}$ | 115 | 8 | 0,04 So | 2 | 8 | 9,1 AeO | 3,0 | 102 | 21,6 | 1,4792 |
| d | $C_2H_5$ | - | 130 | 3 | 1,0 So | 2 | 100 | 100 Aeo | 49 | 11 | 22,8 | 1,4781 |
| e | $C_2H_5$ | $-C_2H_4-$ | 120 | 7 | 0,03 So | 2 | 6 | 6,5 AeO | 2,0 | 143 | 20,7 | 1,4742 |
| f | $C_2H_5$ | $n-C_6-H_{12}$ | 110 | 8 | 0,04 So | 2 | 11 | 12,0 AeO | 4,5 | 85 | 20,4 | 1,4761 |
| g | $C_2H_5$ | $CH_2-CH-CH_2$ | 95 | 6 | - | 3 | 9 | 10,4 AeO | 2,0 | 151 | 20,2 | 1,4731 |
| h | $C_2H_5$ | $CH_2-CH=CH-CH_2$ | 130 | 3 | 0,12 So | 2 | 12 | 12,2 AeO | 5,0 | 72 | 21,3 | 1,4762 |
| i | $n-C_3H_7$ | $C_2H_4$ | 110 | 3 | 0,05 So | 2 | 10 | 11,2 AeO | 4,0 | 97 | 19,1 | 1,4682 |
| j | $n-C_3H_7$ | $C_2H_4$ | 120 | 4 | 0,06 So | 2 | 6 | 6,4 AeO | 2,0 | 116 | 18,9 | 1,4700 |
| K | $n-C_3H_7$ | - | 130 | 6 | 1,0 So | 2 | 100 | 104 Aeo | 49 | 11 | 20,3 | 1,4633 |
| l | $n-C_3H_7$ | $CH_2-CH-CH_2$ | 130<br>30N | 10<br>1N | 0,04 So<br>0,02 NaMLN | 3 | 5 | 11,2 AeO | 2,0 | 164 | 17,5 | 1,4718 |
| m | $n-C_3H_7$ | $C(CH_2)_4$ | 100 | 3 | 0,07 | 4 | 12 | 12,8 AeO | 2,0 | 116 | 18,7 | 1,4711 |
| n | $n-C_3H_7$ | $C(CH_2)_4$ | 190 | 6 | 0,18 So | 4 | 8 | 16 Ac | 3,0 | 86 | 14,2 | |
| o | $n-C_3H_7$ | $C(CH_2)_4$ | 100 | 6 | 0,06 So | 4 | 8 | 9,3 AeO | 1,0 | 112 | 17,7 | 1,4689 |
| p | $CH_2=CH$ | $C_2H_4$ | 110 | 7 | 0,03 So | 2 | 6 | 6,4 AeO | 2,0 | 147 | 21,0 | 1,4916 |

BAD ORIGINAL

<u>Beispiel 2:</u> Anhydrid-Art:

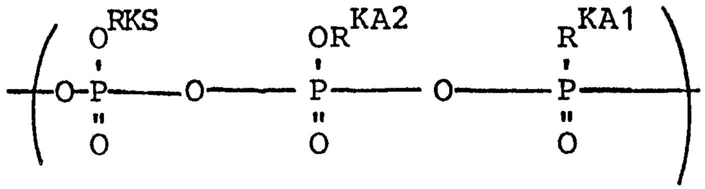 x/3 $(III_{h0,g0,i2/3})$

| | $R^{KA1}$ | $R^{KS}=$ $=R^{KA2}$ | $Z_n$ | T | Zt | Kat | n | AA | AO (AeO) | m | OHZ | P | $n_D$ |
|---|---|---|---|---|---|---|---|---|---|---|---|---|---|
| a | $C_2H_5$ | $CH_3$ | $n-C_6H_{12}$ | 140 | 4 | 0,15 So | 2 | 24,2 | 27,5 | 11,1 | 88 | 20,7 | 1,4550 |
| b | $C_2H_5$ | $C_2H_5$ | $n-C_6H_{12}$ | 90 | 5 | 0,03 So | 2 | 2,66 | 3,7 | ^0,33 | 240 | 14,9 | 1,4608 |
| c | $C_2H_5$ | $C_2H_5$ | $n-C_6H_{12}$ | 90 | 6 | 0,08 So | 2 | 13,2 | 13,4 | 5,6 | 95 | 19,4 | |
| d | $n-C_3H_7$ | $CH_3$ | $n-C_6H_{12}$ | 85 | 7 | 0,02 So | 2 | 2,0 | 2,9 | 0 | 269 | 14,3 | 1,4611 |
| e | $n-C_3H_7$ | $CH_3$ | $C(CH_2)$ | 100 | 9 | 0,04 So | 4 | 4,0 | 6,0 | 0 | 309 | 16,0 | 1,4679 |
| f | $n-C_3H_7$ | $CH_3$ | $C(CH_3)_2$ 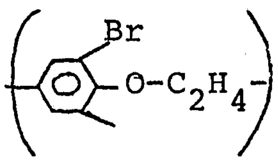 2 | 130 | 6 | 0,05 So | 2 | 6,0 | 6,6 | 2,0 | 74 | 11,7 | 1,5179 (40°) |

**Beispiel 3:** Anhydrid-Art:

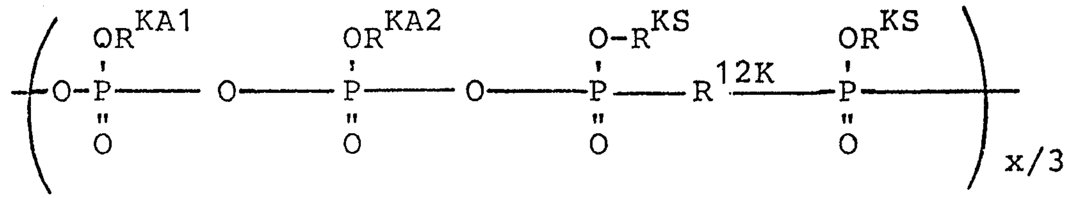

$(III_{h0,g1/3,i1})$

| | $R^{12K}$ | $R^{KA1}$ | $R^{KS}$ $=R^{KA2}$ | $Z_n$ | T | Zt | Kat | n | AA | AO (AeO) | M | OHZ | P | $n_D$ |
|---|---|---|---|---|---|---|---|---|---|---|---|---|---|---|
| a | $CH_2$ | $C_2H_5$ | $P_2H_5$ | $C(CH_2)_4$ | 90 | 10 | 0,04 So | 4 | 6 | 9,4 | 0,5 | 189 | 19,4 | zu viskos |
| b | $CH_2$ | $C_2H_5$ | $C_2H_5$ | $n-C_6H_{12}$ | 80 | 14 | 0,03 SO | 2 | 4 | 4,6 | 1,0 | 154 | 20,6 | |

0000024

**Beispiel 4:** Anhydrid-Art:

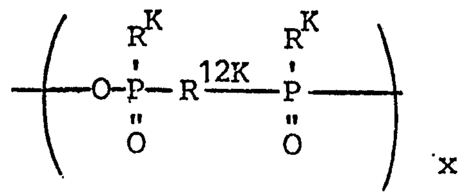

$(III_{h0,g1,i0})$

| | $R^{12}$ | $R^K$ | $Z_n$ | T | Zt | Kat | ṅ | AA | AO | m | OHZ | P | $n_D$ |
|---|---|---|---|---|---|---|---|---|---|---|---|---|---|
| a | $CH_2$ | $CH_3$ | $C_2H_4$ | 175 | 11 | 0,04 So | 2 | 3,2 | 4,0 Äc | 0,6 | 136 | 22,8 | zu viskos |
| b | $CH_2$ | $CH_3$ | $n-C_6H_{12}$ | 180 | 6 | – | 2 | 8,0 | 12,3 AeO | 3,0 | 157 | 27,5 | " |
| c | $CH_2$ | $CH_3$ | $n-C_4H_{12}$ | 145 | 10 | – | 2 | 10,0 | 12,0 AeO | 4,0 | 28 | 24,6 | " |
| d | $n-C_2H_4$ | $CH_3$ | $C_2H_4$ | 150 | 5 | – | 2 | 4,0 | 4,2 AeO | 1,0 | 137 | 26,6 | " |
| e | $n-C_2H_4$ | $CH_3$ | $C_2H_4$ | 140 | 4 | – | 2 | 6,0 | 6,5 AeO | 2,0 | 99 | 27,1 | " |
| f | $n-C_2H_4$ | $CH_3$ | $n-C_6H_{12}$ | 140 | 21 | – | 2 | 5,0 | 6,1 PyO | 1,5 | 96 | 23,7 | " |
| g | $n-C_2H_4$ | $CH_3$ | $n-C_6H_{12}$ | 145 | 16 | 0,1 So | 2 | 10,0 | 12,1 PyO | 4,0 | 68 | 24,8 | " |
| h | $n-C_2H_8$ | $CH_3$ | $n-C_6H_{12}$ | 145 | 12 | – | 2 | 10,0 | 10,4 AeO | 4,0 | 95 | 24,6 | " |
| i | $n-C_6H_{12}$ | $CH_3$ | – | 190 | 2 | 1,0 So | 2 (aus Soda) | 1000 | 1200 Äc | 499 | 22 | 23,0 | " |
| j | $n-C_6H_{12}$ | $CH_3$ | $CH_3$ | 130 | 10 | – | 1 | 8,0 | 8,2 AeO | 7,0 | 65 | 23,1 | " |
| k | $n-C_6H_{12}$ | $CH_3$ | $n-C_{18}H_{37}$ | 190 | 4 | 0,04 So | 1 | 4,0 | 4,4 Äc | 3,0 | 60 | 18,2 | 1,4854 (40°) |
| l | $n-C_6H_{12}$ | $CH_3$ | $n-C_6H_{12}$ | 150 | 6 | – | 2 | 8,0 | 9,3 AeO | 3,0 | 175 | 22,3 | zu viskos |
| m | $n-C_6H_{12}$ | $CH_3$ | $n-C_6H_{12}$ | 135 | 9 | – | 2 | 5,0 | 5,1 PyO | 1,5 | 79 | 19,2 | " |

Beispiel 4: (Fortsetzung)

| | $R^{12K}$ | $R^K$ | $Z_n$ | T | Zt | Kat | n | AA | AO | m | OHZ | P | $n_D$ |
|---|---|---|---|---|---|---|---|---|---|---|---|---|---|
| n | $n-C_6H_{12}$ | $CH_3$ | $n-C_6H_{12}$ | 130 | 10 | - | 2 | 8,0 | 9,0 AeO | 3,0 | 78 | 21,4 | zu viskos |
| o | $n-C_6H_{12}$ | $CH_3$ | $n-C_6H_{12}$ | 165 | 4 | - | 2 | 16,0 | 16,6 AeO | 7,0 | 186 | 22,6 | " |
| p | $n-C_6H_{12}$ | $CH_3$ | $CH_2-CH-CH_2$ | 170 | 5 | 0,09 So | 3 | 18,0 | 21,8 Äc | 5,0 | 89 | 22,5 | " |
| q | $n-C_6H_{12}$ | $CH_3$ | $C(CH_2)_4$ | 185 | 2 | 0,08 So | 4 | 8,0 | 10,0 Äc | 1,0 | 115 | 21,0 | " |
| r | $n-C_{10}H_{20}$ | $CH_3$ | $C(CH_2)_4$ | 180 | 2 | 0,2 So | 4 | 10,0 | 12,0 Äc | 1,5 | 68 | 17,8 | 1,4870 (40°) |
| s | $n-C_2H_4$ | $CH_3$ | $C(CH_3)_2$ | 145 | 14 | 0,04 So | 2 | 4,0 | 4,4 AeO | 1,0 | 122 | 25,4 | zu viskos |
| t | $n-C_6H_{12}$ | $CH_3$ | $C_6F_{13}C_2H_4$ | 110 | 8 | 0,03 So | 1 | 2,0 | 2,1 AeO | 1,0 | 1 | 14,1 | 1,4476 |
| u | $C_2H_4$ | $CH_3$ | $n-C_6H_{12}$ | 115 | 4 | - | 2 | 5,0 | 6,9 Epi | 4,0 | 97 | 20,4 | zu viskos |

**Beispiel 5:** Anhydrid-Art:

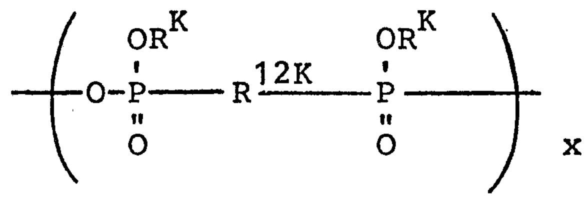

($III_{h0}$, g1,i1)

| | $R^{12K}$ | $R^{K}$ | $Z_n$ | T | Zt | Kat | n | AA | AO (AeO) | m | OHZ | P | $n_D$ |
|---|---|---|---|---|---|---|---|---|---|---|---|---|---|
| a | $C_2H_4$ | $C_2H_5$ | $C_2H_4$ | 100 | 2 | 0,08 SO | 2 | 2,0 | 2,8 | 0 | 169 | 16,9 | 1,4730 |
| b | $C_2H_4$ | $C_2H_5$ | $C-(CH_2)_4$ | 140 | 5 | 0,08 SO | 4 | 4,0 | 5,7 | 0 | 162 | 18,8 | 1,4829 |

Beispiel 6: Anhydrid-Art: 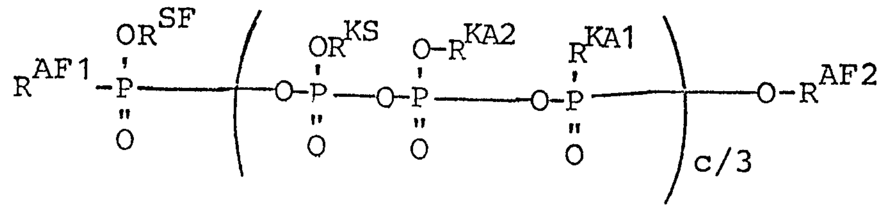 $(III_{h1,f0,r1/2,s1,g0,i2/3})$

| | $R^{AF1} = R^{KA1}$ | $R^{SF} = R^{AF2} = R^{KS} = R^{KA2}$ | EP-MV | c | $Z_n$ | T | Zt | Kat | n | AA | AO (AeO) | m | OHZ | P | $n_D$ |
|---|---|---|---|---|---|---|---|---|---|---|---|---|---|---|---|
| a | $C_2H_5$ | $C_2H_5$ | 1,1 | 30 | $n-C_6H_{12}$ | 90 | 8 | 0,02 So | 2 | 2 | 2,9 | 0 | 240 | 14,4 | 1,4587 |
| b | $C_2H_5$ | $C_2H_5$ | 1,2 | 15 | $n-C_6H_{12}$ | 100 | 4 | 0,04 So | 2 | 6 | 7,2 | 2,0 | 138 | 17,7 | 1,4552 |
| c | $C_2H_5$ | $C_2H_5$ | 1,1 | 30 | $C(CH_3)_2$ | 90 | 5 | 0,06 So | 2 | 6 | 6,2 | 2,0 | 149 | 18,7 | 1,4612 |
| d | $C_2H_5$ | $C_2H_5$ | 1,2 | 15 | $C(CH_2)_4$ | 90 | 8 | 0,05 So | 4 | 7,5 | 7,6 | 0,9 | 159 | 17,6 | 1,4608 |
| e | $C_2H_5$ | $C_2H_5$ | 2,0 | 3 | $C(CH_2)_4$ | 85 | 5 | 0,05 So | 4 | 7,5 | 7,5 | 0,9 | 105 | 17,8 | 1,4515 |
| f | $n-C_3H_7$ | $CH_3$ | 1,1 | 30 | $1,4-C_4H_8$ | 65 | 10 | 0,02 So | 2 | 2 | 2,7 | 0 | 272 | 15,1 | 1,4592 |
| g | $n-C_3H_7$ | $CH_3$ | 1,04 | 75 | $1,6-C_6H_{12}$ | 90 | 6 | 0,03 So | 2 | 4 | 4,9 | 1,0 | 169 | 17,1 | 1,4622 |
| h | $n-C_3H_7$ | $CH_3$ | 1,1 | 30 | $C(CH_3)$ | 100 | 3 | 0,06 So | 2 | 6 | 6,5 | 2,0 | 110 | 18,7 | 1,4566 |
| i | $n-C_3H_7$ | $CH_3$ | 1,1 | 30 | $C(CH_2)_4$ | 120 | 6 | 0,1 So | 4 | 15 | 16,3 | 2,8 | 87 | 19,9 | 1,4648 |
| j | $n-C_3H_7$ | $CH_3$ | 2,0 | 3 | $C(CH_2)_4$ | 100 | 5 | 0,08 So | 4 | 6 | 6,1 | 0,5 | 151 | 19,2 | 1,4569 |
| k | $n-C_3H_7$ | $CH_3$ | 1,1 | 30 | $C(CH_2)_4$ | 90 | 8 | 0,16 So | 4 | 16 | 18,3 | 3,0 | 80 | 19,6 | 1,4610 |
| l | $n-C_3H_7$ | $CH_3$ | 1,04 | 75 | $N(C_2H_4)_3$ | 6 | 120 | $=Z_n$ | 3 | 6 | 7,0 | 2,0 | 160 | 17,6 | |

Beispiel 6: (Fortsetzung)

| | $R^{AF1} = R^{KA1}$ | $R^{SF} = R^{AF2} = R^{KS} = R^{KA2}$ | EP-MV | c | $Z_n$ | T | Zt | Kat | n | AA | AO (AeO) | m | OHZ | p | $n_D$ |
|---|---|---|---|---|---|---|---|---|---|---|---|---|---|---|---|
| m | $n-C_3H_7$ | $CH_3$ | 1,04 | 75 | $CH_2=C(CH_3)-CO_2-O-C_2H_4$ | 60 | 8 | 0,04 So | 1 | 4 | 5,5 | 3,0 | 114 | 15,9 | |
| n | $n-C_3H_7$ | $CH_3$ | 1,04 | 75 | " | 60 | 16 | - | 1 | 2 | 3,2 | 1,0 | 172 | 13,2 | 1,4606 |
| o | $C_2H_5$ | $CH_2=CH-CH_2$ | 2,0 | 3 | $C(CH_2)_4$ | 50 | 14 | 0,12 So | 4 | 12 | 14,2 | 2,0 | 87 | 17,2 | |
| p | $n-C_3H_7$ | $C_2H_5$ | 1,1 | 30 | $N(C_2H_4)_3$ | 90 | 8 | $=Z_n$ | 3 | 6 | 7,0 | 1,0 | 138 | 16,5 | 1,4703 |
| q | $n-C_3H_7$ | $C_2H_5$ | 1,1 | 30 | $C_{18}H_{37}$ | 85 | 12 | 0,04 So | 1 | 4 | 4,3 | 3,0 | 63 | 13,7 | 1,4570 |
| r | $n-C_3H_7$ | $C_2H_5$ | 1,1 | 30 | $C_{18}H_{37}$ | 95 | 20 | 0,08 So | 1 | 8 | 8,7 | 7,0 | 36 | 16,0 | 1,4604 |
| s | $C_2H_5$ | $CH_2-CHBr-CH_2Br$ | 1,2 | 15 | $CH_2-CH-CH_2$ | 85 | 7 | 0,1 So | 3 | 13,5 | 17,2 | 3,5 | 133 | 10,5 | 1,5068 |

Beispiel 7: Anhydrid-Art: 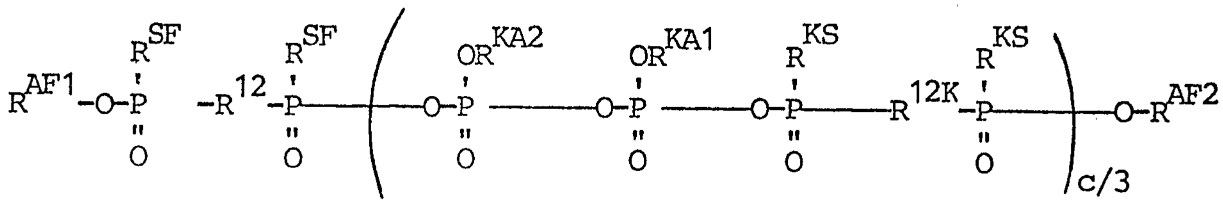

($III_{h1,f1,r1,s0,g1,i1/2}$)

| $R^{12}=R^{12K}$ | $R^{AF1}=R^{KA1}=R^{SF}$ $=R^{KA2}=R^{AF2}$ $=R^{KS}$ | EP-MV | c | $Z_n$ | T | Zt | Kat | n | AA | AO (AeO) | m | OHZ | P | $n_D$ |
|---|---|---|---|---|---|---|---|---|---|---|---|---|---|---|
| $C_2H_4$ | $i\text{-}C_4H_9$ | 1,2 | 15 | $n\text{-}C_6H_{12}$ | 110 | 9 | 0,03 So | 2 | 5 | 8 | 1,5 | 118 | 18,8 | |

**Beispiel 8:** Anhydrid-Art: 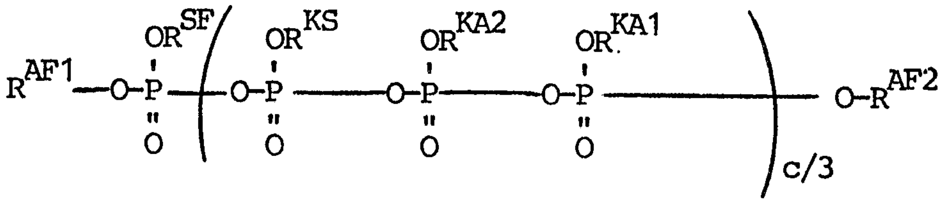 $(III_{h1,f0,r1,s1,g0,i1})$

| | $R^{AF1}=R^{SF}=R^{AF2}$ $R^{KA1}=R^{KS}=R^{KA2}$ | EP-MV | c | $Z_n$ | T | Zt | Kat | n | AA | AO (AeO) | m | OHZ | P | $n_D$ |
|---|---|---|---|---|---|---|---|---|---|---|---|---|---|---|
| a | $CH_3$ | 1,1 | 30 | $C(CH_2)_4$ | 120 | 6 | – | 4 | 4 | 6,9 | 0 | 266 | 15,0 | 1,4619 |
| b | $C_2H_5$ | 2,0 | 3 | $n-C_6H_{12}$ | 85 | 3 | 0,03 So | 2 | 2 | 2,9 | 0 | 174 | 14,2 | 1,4445 |
| c | $C_2H_5$ | 1,2 | 15 | $C(CH_2)_4$ | 100 | 3 | 0,08 So | 4 | 8 | 9,9 | 1,0 | 153 | 17,1 | 1,4521 |
| d | $C_2H_5$ | 2,0 | 3 | $C(CH_2)_4$ | 90 | 5 | 0,05 So | 4 | 4 | 5,2 | 0 | 211 | 16,0 | 1,4452 |
| e | $C_2H_5$ | 2,0 | 3 | $C(CH_2)_4$ | 90 | 5 | 0,1 So | 4 | 8 | 8,6 | 1,0 | 109 | 17,8 | 1,4342 |
| f | $C_2H_5$ | 2,0 | 3 | $C(CH_2)_4$ | 85 | 4 | 0,2 So | 4 | 16 | 16,1 | 3,0 | 85 | 19,0 | 1,4365 |
| g | $C_2H_5$ | 1,2 | 15 | $C(CH_3)_2$ | 85 | 5 | 0,06 So | 2 | 6 | 6,8 | 2,0 | 111 | 17,6 | 1,4471 |
| h | $C_2H_5$ | 1,1 | 30 | $C(CH_2)_4$ | 90<br>140N | 4<br>4N | 0,08 So | 4 | 8 | 9,2 | 1,0 | 184 | 18,6 | 1,4559 |
| i | $C_2H_5$ | 1,1 | 30 | Oxäth. Glyzerin- (Mol 220) | 80<br>140N | 4<br>1N | 0,06 So | 3 | 6 | 7,8 | 1,0 | 147 | 15,2 | 1,4596 |
| j | $C_2H_5$ | 1,1 | 30 | Oxäth. Glyzerin- (Mol 220) | 85<br>140N | 11<br>1N | 0,12 So | 3 | 12 | 14,0 | 3,0 | 76 | 17,1 | 1,4579 |
| k | $C_2H_5$ | 1,1 | 30 | $3\ O(C_2H_4)_2$ + $1\ N(C_2H_4)_3$ | 80 | 7 | $=Z_n$ | 9 | 15 | 19,0 | 0,4 | 180 | 16,0 | 1,4559 |
| l | $CH_3$ | 1,1 | 30 | $n-C_6H_{12}$ | 120 | 8 | 0,02 So | 2 | 4 | 4,5 | 1,0 | 141 | 18,0 | 1,4597 |

Beispiel 9: Anhydrid-Art: 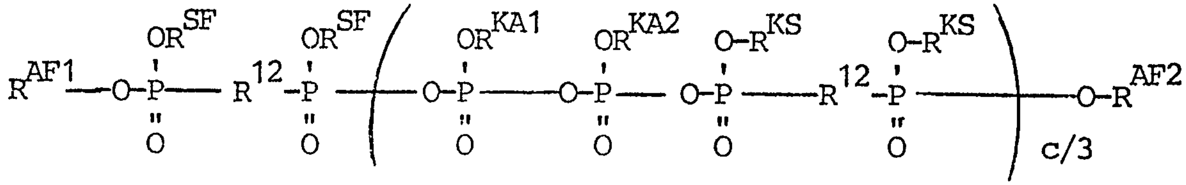

($III_{h1,f1,r1,s1,g1/3,i1}$)

| $R^{12}$ $=R^{12K}$ | $R^{AF1}$ $=R^{KA1}$ | $R^{SF}=R^{AF2}$ $=R^{KS}=R^{KA2}$ | EP-MV | c | $Z_n$ | T | Zt | Kat | n | AA | AO (AeO) | m | OHZ | P | $n_D$ |
|---|---|---|---|---|---|---|---|---|---|---|---|---|---|---|---|
| $CH_2$ | $C_2H_5$ | $C_2H_5$ | 2,0 | 3 | $C(CH_2)_4$ | 90 | 9 | 0,05 So | 4 | 4 | 9,4 | 0 | 198 | 21,5 | 1,4626 |

<u>Beispiel 10</u>: Anhydrid-Art: 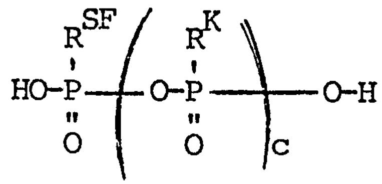 $(III_{2H,h1,f0,r1,s0,g0,i0})$

| | $R^{SF}$ $=R^{K}$ | KS-MV=c | $Z_n$ | T | Zt | Kat | n | AH | AA | AO | m | OHZ | P | $n_D$ |
|---|---|---|---|---|---|---|---|---|---|---|---|---|---|---|
| a | $C_3H_7$ | 5,0 | – | 140<br>150N | 10<br>1N | 0,04 So<br>0,03 SoN | – | 2 | 5,0 | 7,1 | 1,5 | 81 | 19,5 | 1,4701 |
| b | $C_3H_7$ | 20,0 | $CH_2-CH-CH_2$ | 135<br>30N | 8<br>1N | 0,04 So<br>0,1 NaMLN | 3 | 0,9 | 9,0 | 11,2 | 2,2 | 167 | 17,5 | 1,4720 |

<u>Beispiel 11</u>: Anhydrid-Art: 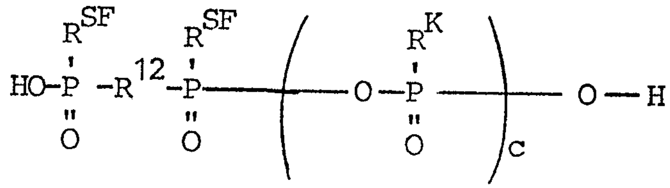 $(III_{H2,f1,r1,s0,g0,i0})$

| $R^{12}$ | $R^{SF}$ | KS-MV= =c=AA | T | Zt | Kat | AH | AO (AeO) | m | OHZ | P | y |
|---|---|---|---|---|---|---|---|---|---|---|---|
| $C_2H_5$ | $CH_3$ | 10 | 185 | 24 | 0,1 So | 2 | 15,0 | 4,0 | 40 | 19,7 | |

**Beispiel 12:** Anhydrid-Art: 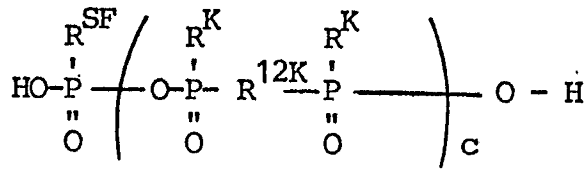 ($III_{H2,h1,f0,r1,s0,g1,i0}$)

| $R^{SF}$ | $R^{K}$ | $R^{K12}$ | KS-MV= =c=AA | T | Zt | Kat | AH | AO (AeO) | m | OHZ | P | $n_D$ |
|---|---|---|---|---|---|---|---|---|---|---|---|---|
| $C_3H_7$ | $CH_3$ | $C_{10}H_{20}$ | 10,0 | 140 | 4 | 0,5 NaM | 2 | 15,7 | 4,0 | 49 | 18,3 | 1,4930 |

<u>Beispiel 13:</u> Anhydrid-Art:

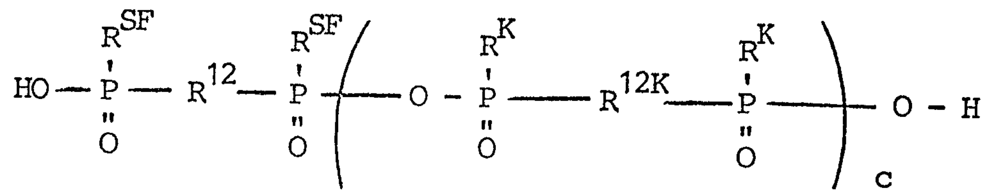

$(III_{2H,h1,f1,r1,s0,g1,i0})$

| $R^{SF}$ | $R^{12}=R^{12K}$ | $R^K$ | KS-MV= =c=AA | T | Zt | Kat | AH | AO (AeO) | m | OHZ | P | $n_D$ |
|---|---|---|---|---|---|---|---|---|---|---|---|---|
| $CH_3$ | $C_2H_4$ | $CH_3$ | 100 | 150 | 16 | - | 2 | 107 | 49 | 50 | 28,8 | zu viskos |

**Beispiel 14:** Anhydrid-Art: 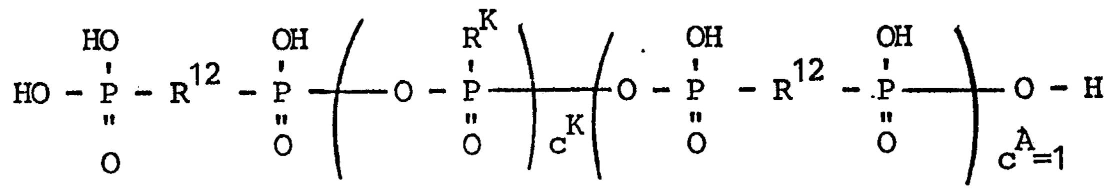

$(III_{AN,6H,h1,f1,r1,s1,g0,i0})$

| $R^{12}$ | $R^K$ | KAN-MV $= c^K$ | $c=c^K+1$ $=AA$ | T | Zt | Kat | AH | AO (AeO) | m | OHZ | P | $n_D$ |
|---|---|---|---|---|---|---|---|---|---|---|---|---|
| $C_4H_8$ | $C_2H_5$ | 18,0 | 19 | 150 | 7 | 0,05 | 6 | 27,2 | 2,2 | 121 | 18,9 | 1,4820 |

**Beispiel 15:** Anhydrid-Art: 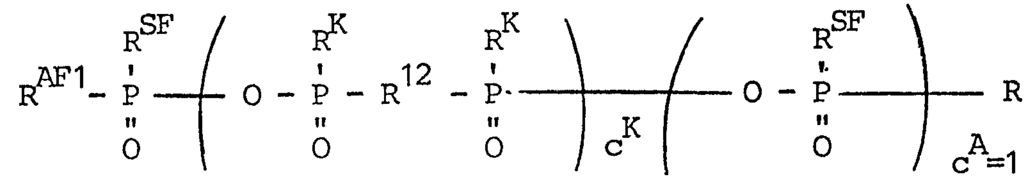

$(III_{AN,h1,f0,r0,s0,g1,i0})$

| $R^{AF1} = R^{AF2}$ | $R^{SF}$ | $R^{K}$ | $R^{K12}$ | KAN-MV $= c^{K}$ | $c = c^{K}+1$ | $Z_n$ | T | Zt | Kat | n | AA | AO (AeO) | m | OHZ | P | $n_D$ |
|---|---|---|---|---|---|---|---|---|---|---|---|---|---|---|---|---|
| $P_2H_5$ | $CH_3$ | $CH_3$ | $C_{10}H_{20}$ | 5 | 6 | $C(CH_2)_4$ | 140 | 4 | 0,04 Po | 4 | 12 | 13,4 | 2,0 | 79 | 18,9 | 1,4926 |

**Beispiel 16:** Anhydrid-Art:

Protonenhaltiges Anhydrid-Gemisch, entstehend aus $\frac{KS\text{-}MV}{c}$ Molen der abgeschlossenen protonenfreien Anhydride

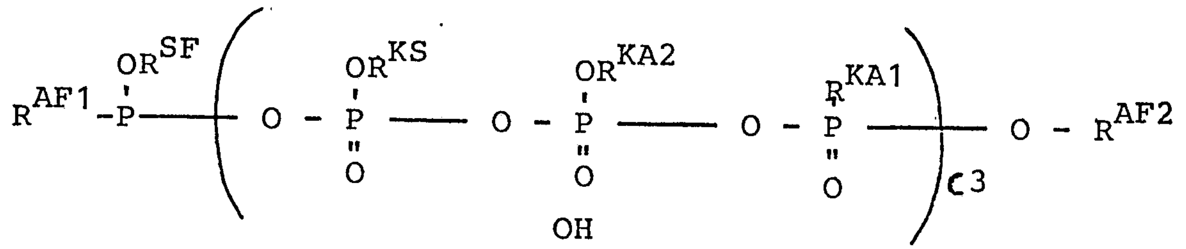

$(III_{h1,f0,r1/2,s1,g0,i2/3})$

und 1 Mol der Säuren 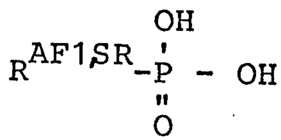 $(AD_{2H,f0,r1/2,s1})$ als protonenhaltiger Außengruppen-Donator $(AD_H)$.

| $R^{AF1}=R^{KA1}$ | $R^{SF}=R^{KS}=R^{AF2}=R^{KA2}$ | $R^{AF1,SR}$ | EP-MV | c | KS-MV=AA | T | Zt | Kat | AH | AO (Ae0) | m | OHZ | P | $n_D$ |
|---|---|---|---|---|---|---|---|---|---|---|---|---|---|---|
| $n\text{-}C_3H_7$ | $n\text{-}C_2H_5$ | $C_3H_7$ | 1,1 | 30 | 4,0 | 95 | 7 | 0,04So | 2 | 6,3 | 1,0 | 105 | 18,2 | 1,4790 |
| $n\text{-}C_3H_7$ | $CH_3$ | $n\text{-}C_8H_{17}$ | 1,1 | 30 | 4,0 | 125 | 8 | 0,15NaM | 2 | 6,3 | 1,0 | 100 | 17,8 | 1,4665 |
| $N\text{-}C_2H_4$ | $C_2H_5$ | $n\text{-}C_3H_7$ | 1,2 | 15 | 5,0 | 90<br>30N | 9<br>1N | 0,01So<br>0,1NaMIN² | | 8,5 | 1,5 | 101 | 17,3 | 1,4732 |

Beispiel 17: Anhydrid-Art

Protonenhaltiges Anhydrid-Gemisch, entstehend aus $\frac{KS\text{-}MV}{c}$ Molen der abgeschlossenen protonenfreien Anhydride wie bei Beispiel 16 und 1 Mol $HO\text{-}P(=O)\text{-}(OH)_2$ ($AD_{3H,f0,r1,s1}$).

| $R^{AF1}=$ $=R^{KA1}$ | $R^{SF}=R^{KS}=$ $=R^{AF2}=R^{KA2}$ | EP-MV | c | KS-MV=AA | T | Zt | Kat | AH | AO (AeO) | m | OHZ | P | $n_D$ |
|---|---|---|---|---|---|---|---|---|---|---|---|---|---|
| $n\text{-}C_3H_7$ | $C_2H_5$ | 1,1 | 30 | 6 | 110 | 9 | 0,1NaM | 3 | 10,3 | 1,0 | 132 | 18,0 | 1,4626 |

0000024

**Beispiel 18**: Anhydrid-Art:

Protonenhaltiges Anhydrid-Gemisch, entstehend aus $\frac{MS-MV}{c}$ Molen eines abgeschlossenen protonenfreien Anhydrids der Art

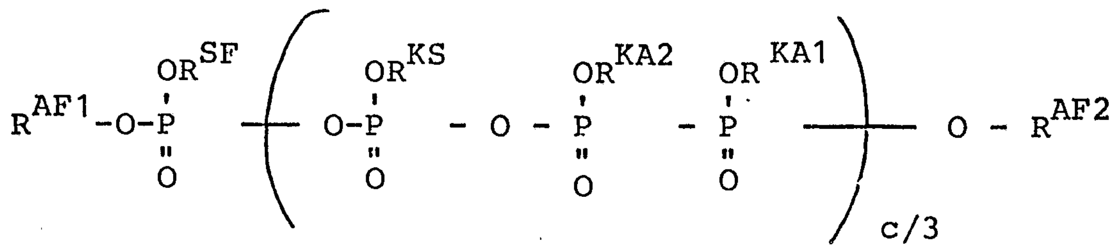 $(III_{h1,f0,r1,s1,g0,i1})$

und 1 Mol 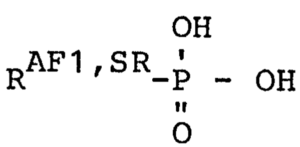

| $R^{AF1}=R^{SF}=A^{AF2}$ $=R^{KS}=R^{KA2}=R^{KA1}$ | $R^{AF1,SR}$ | EP-MV | c | KS-MV=AA | T | Zt | Kat | AH | AO | m | OHZ | P | $n_D^{20}$ |
|---|---|---|---|---|---|---|---|---|---|---|---|---|---|
| $CH_3$ | $C_3H_7$ | 1,1 | 30 | 5,0 | 140 | 5 | 0,01So | 2 | 8,3 | 1,5 | | 19,4 | 1,4606 |

0000024

<u>Beispiel 19</u>: Anhydrid-Arten:

PL = 2,5-Di-oxo-2-methyl-1,2-oxa-phospholan und ferner
ÄBA = 1,2-Äthan-bis-(methyl-phosphinsäure)-anhydrid
PPA = Propanphosphonsäure-anhydrid
TPPO = Addukt aus 1 Mol $P_2O_5$ und 1,2 Mol Triäthylphosphat

Es bedeuten hier ferner:

PHSR = Phosphorhaltige Säure
PPS = Propanphosphonsäure und
PRS = Phosphorsäure

| | $Z_n$ | n | PHSR | AH | T | Zt | Kat | $AA_{PL}$ | $AA_{ÄBA}$ | $AA_{PPA}$ | $AA_{TPPO}$ | AA | AO | m | OHZ | P | $n_D$ |
|---|---|---|---|---|---|---|---|---|---|---|---|---|---|---|---|---|---|
| a | $C_4H_8$ | 2 | - | - | 135 | 5 | 0,01So | 2 | 1 | 1 | - | 4 | 4,1 | 1,0 | | 19,0 | 1,4924 |
| b | - | - | PPS | 2 | 130 | 7 | 0,02So | 5 | - | 5 | - | 10 | 12,4 | 4,0 | | 18,2 | 1,4869 |
| c | - | - | PRS | 3 | 145 | 11 | 0,04So | 2 | - | - | 4 | 6 | 9,8 | 1,0 | 139 | 18,4 | 1,4706 |

Beispiel 20: Mehr-Stufenverfahren (MSV)

a) Anhydrid-Charakteristik: $III_{h0,g0,i0}$

1. Stufe SR: 212 g (2 Mol) Propanphosphonsäure-anhydrid werden auf 80°C erhitzt, unter Kühlung in 20 Minuten
118,1 g (1 Mol) 1,6-Hexandiol eingetragen und 30 Minuten bei 80°C nachgerührt. Es resultieren 330 g eines Sirups mit der Säurezahl 317, dem Phosphorgehalt 18,8 % und $n_D^{20}$=1,4683.

2. Stufe m=O: Innerhalb von 5 Std. werden bei 145°C 100 g (2,27) Äthylenoxid eingeleitet und 430 g eines Öles mit der SZ=1, $n_D^{20}$= 1,4669, OHZ=270 und dem Phosphorgehalt 14,4 % erhalten.

3. Stufe m=O, q=1: Nach Zugabe von 212 g (2 Mol) weiterem Propanphosphonsäureanhydrid bei 80°C resultieren 641 g eines Sirups mit der Säurezahl 165 und $n_D^{20}$=1,4709 und dem Phosphorgehalt 19,3 %.

4. Stufe m=1, q=O: Bei 90°C werden weitere 88 g (2,0) Äthylenoxid eingeleitet. Es entstehen 728 g eines Öls mit der Säurezahl 2, der OHZ 158, P=17,0 % und $n_D^{20}$= 1,4694.

b) Anhydrid-Charakteristik: $III_{h0,g1,i0}$

1. Stufe SR: Zu 448 g (2 Mol) 1,6-Hexan-bis-(methyl-phosphinsäure)-anhydrid werden bei 110°C innerhalb von 10 Minuten
90,1 g (1 Mol) 1,4-Butandiol und
1 g Soda zugegeben. Die Temperatur steigt dabei auf 120°C an. Es resultieren 539 g von der Säurezahl 206.

2. Stufe m=O: Bei 130°C werden innerhalb von 4 Std. 110g (2,5 Mol) Äthylenoxid eingeleitet. Es resultieren 648 g eines zähen Sirups mit der Säurezahl 0,8, OHZ 180, P=19,1 % und $n_D^{20}$=1,4970.

3. Stufe m=O und q=1: Es werden bei 120°C nochmals 448 g (2 Mol) 1,6-Hexan-bis-(methyl-phosphinsäure)-anhydrid zugefügt und 30 Minuten nachgerührt. Es resultieren 1096 g einer bisfunktionellen zähen Säure. Säurezahl=102, P=22,6 % und $n_D^{20}$=1,5042.

4. Stufe m=1 und q=O: Bei 135°C werden innerhalb von 8 Std. weitere 89 g (2,02) Äthylenoxid eingeleitet und 1184 g eines zähviskosen, schwach gelben Sirup mit der Säurezahl 2, OHZ 99, P=20,9 % und $n_D^{20}$ = 1,5013 erhalten.

BAD ORIGINAL

Die erfindungsgemäßen, Phosphor enthaltenden Polyaddukte, die sich durch eine sehr gute Wasserlöslichkeit oder durch eine gute Emulgierbarkeit auszeichnen und einen hohen Phosphorgehalt besitzen, können mit den verschiedensten reaktiven Vernetzungsmitteln auf Textilgut fixiert werden. Die so erhaltenen Ausrüstungen zeigen sehr gute flammhemmende und permanente Eigenschaften.

Als Vernetzungmittel kommen mehrfunktionelle N-Methylolverbindungen in Frage, z.B. Derivate von Amino-1,3,5-triazinen, wie Trimethylolmelamin, Hexamethylolmelamin, Trimethylolmelamintrimethyläther, Hexamethylolmelamin-pentamethyläther, Trimethylolmelamin-triisobutyläther, Dimethylol-aceto-guanamin, ferner Derivate der Harnstoffe wie Dimethylolharnstoff, Dimethylolharnstoffdimethyläther, Dimethylolharnstoffdibutyläther, Dimethylolcycloäthylenharnstoff, Dimethylolcyclopropylenharnstoff, Dimethylol-4-methoxy-5-dimethylpropylenharnstoff, Dimethylol-5-hydroxypropylenharnstoff, 1,3-Dimethylol-4,5-dihydroxy-imidazolidon-(2), 1,3-Dimethylol-5-hydroxyäthylhexahydrotriazin-(2),Dimethyloluron und Dimethylolcarbamate wie z.B. Dimethylolmethylcarbamat, Dimethylol-hydroxyäthylcarbamat und Dimethylolmethoxyäthylcarbamat.

Interessante Verbindungen, die sich besonders bewährt haben, sind die Melaminderivate, z.B. Trimethylolmelamintrimethyläther oder Hexamethylolmelaminpentamethyläther.

Als Katalysatoren, die im sauren pH-Bereich ihre Wirkung zeigen, werden im allgemeinen ca. 0,2 bis 5 Gew.-Prozent, bevorzugt 0,4 bis 3 Gew.-Prozent, anorganische oder organische Säuren zugesetzt oder deren Salze, die durch Hydrolyse oder durch eine Hitzebehandlung Säure freisetzen, wie z.B. Schwefelsäure, Salzsäure, Phosphorsäure, Trichloressigsäure, Maleinsäure, Weinsäure, Zitronensäure, Essigsäure oder deren Salze mit Ammoniak, Aminen oder mehrwertigen Metallen, vorzugsweise Salze von starken oder mittelstarken Säuren, wie Amoniumsulfat, Ammoniumchlorid, Mono- und Diammoniumoxalat, Ammoniumnitrat, Magnesiumchlorid, Aluminiumchlorid, Zinkchlorid, Zinknitrat, Zinkfluorborat, 2-Amino-2-methyl-propanol-hydrochlorid.

BAD ORIGINAL

Die Vernetzungskatalysatoren können allein oder in Mischungen untereinander eingesetzt werden.

Das Textilgut, auf dem die flammhemmenden und permanenten Ausrüstungen möglich sind, kann mannigfaltig sein. Ausgezeichnete Flammschutzeffekte werden auf Cellulosefasergeweben, Polyester- und Polyamidgeweben, kunststoffverbundenen bzw. verstärkten Glasfasergeweben, auf Textiltapeten oder Textiljalousetten aus Cellulosefasern, Polyester- oder Polyamidfasern, Glasfasern oder deren Mischungen, erzielt. Als synthetisches oder Mischfasergut eignen sich besonders Non woven fabrics, z.B. Nadelfilze für Wand- und Bodenbeläge, Textiltapeten, Dämmstoffe und Luftfilter von verschiedenartiger Zusammensetzung, wie. z.B. Nadelfilze aus Polyester-/Polyamid-6-Fasern 50/50, Polyamidfasern 100 %ig, Polyesterfasern 100 %ig, Polyamidfasern und Viskose-Zellwolle 50/50, Polyesterfasern mit Viskose-Zellwolle 50/50 oder 75/25, Polyamid-/Polyacrylnitril- und Polyesterfasern 50/25/25, Glasfasern mit Polyesterfasern 75/25, Wolle-/Polyamidfasern 50/50, Polypropylenfasern 100 % oder deren Mischungen mit anderen Synthese- oder nativen oder regenerierten Cellulosefasern.

Die Durchführung des erfindungsgemäßen Verfahrens zur flammhemmenden Ausrüstung der vorstehend geschilderten Textilgüter erfolgt unter Applikationsbedingungen, die in der Textilindustrie bekannt und üblich sind. Ein zusätzlicher Arbeitsgang, der den Arbeitsablauf der Veredlung des genannten Textilgutes verändert, ist nicht nötig. Die Gewebe bzw. Nadelfilze werden mit den wäßrigen Ausrüstungsflotten auf einem Zweiwalzen- bzw. Dreiwalzenfoulard behandelt, abgequetscht und einem Trocknungs- bzw. einem Kondensationsprozeß unterworfen.

Für die flammhemmende Ausrüstung von Cellulose-, Polyester-, Polyamidfasergewebe, für Glasfasergewebe, für Textiltapeten oder Textiljalousetten erfolgt die Wärmeeinwirkung vorzugsweise in zwei Stufen. Man trocknet zunächst oberhalb von etwa 50° C, vorzugsweise bei etwa 100° bis 120° C, um das Wasser bis auf einen Restwert von etwa 4 - 8 % zu entfernen, und läßt anschließend die Kondensation bei etwa 140° bis 180° C während etwa 7 bis 3 Minuten erfolgen.

Die flammhemmende Ausrüstung von Nadelfilzauslegeware kann ebenfalls nach dem Zweistufenverfahren durchgeführt werden. Vorzugsweise erfolgt hier jedoch die Vernetzung in einem einstufigen Trocknungs- bzw. Kondensationsprozeß bei etwa 120° bis etwa 180° C, vorwiegend bei 135° bis 160° C. Die Wärmebehandlung dauert durchschnittlich etwa 7 bis etwa 60, vorzugsweise 10 bis 30 Minuten. Die Wärmeeinwirkung erfolgt in Trockenkammern, auf Spannrahmen, Hoflues bzw. Kondensationsrahmen.

Den Ausrüstungsflotten können weitere Veredlungsmittel wie textile Weichmacher, Hydrophobierungsprodukte, Oleophobierungsprodukte oder auch antimikrobielle Ausrüstungsprodukte zugesetzt werden.

Die sehr guten flammhemmenden Effekte der beanspruchten Phosphororganischen Verbindungen erlauben für Florteppiche - Web- oder Tuftingteppiche - eine Applikation über den Teppichrücken oder über den Vorstrich. Die Teppichrückenausrüstung für Webteppiche ist bekanntlich für die Formstabilität und der Vorstrich für die Einbindung der Florfäden in das Tuftinggrundgewebe verantwortlich.

Durch diese Maßnahmen, d.h. die Verankerung der Phosphororganischen Verbindungen in die Teppichrückenausrüstung oder in den Vorstrich erübrigt sich eine Vollbadimprägnierung. Bei einer Vollbadimprägnierung werden die Polfäden ebenfalls mit den Flammschutzmitteln, Vernetzern, Katalysatoren und Bindern auf Basis von Kunststoffdispersionen in Berührung gebracht. Durch eine solche Behandlung des Teppichflors liegen dann die Flammschutzmittel und die anderen Ausrüstungsprodukte der Imprägnierflotte auf oder zwischen den Florfäden und führen zu Verklebungen. Der Einzelfaden des Flors sollte dagegen beweglich bleiben. Außerdem kann eine Verklebung des Flors zu einer stärkeren Schmutzaufnahme führen. Die Flammschutzprodukte können auch beim Begehen der Teppiche allmählich herausgetreten werden.

Die so erhaltenen Ausrüstungen der Florteppiche zeichnen sich ebenfalls durch ihre sehr guten flammhemmenden Eigenschaften aus, z.B. bei Shampoonierbehandlungen und Teppichwäschen.

Das Grundgewebe der Tuftingteppiche kann aus Baumwolle, Jute, Zellwolle, Wolle, oder Synthesefasern auf Basis Polyamid oder Polyester, Polypropylen oder in Mischung, oder aus Glasfasern bestehen. Vernadelte Vliesstoffe aus Polyester- oder Polypropylen-Faser eignen sich ebenfalls ausgezeichnet als Grundgewebe für das erfindungsgemäße Verfahren.

Als Florfäden für Tufted- wie auch für Webteppiche kommt Fasermaterial aus Wolle, Polyamid, Polyester wie auch Polyacrylnitril in Frage oder deren Mischungen, z.B. Polyacrylnitril/Polyester 80/20. Bevorzugt wird Fasermaterial aus Wolle-, Polyamid- oder Polyesterfäden mit der üblichen Schnitthöhe von 4 - 12 mm.

Zur Griffgestaltung für Cellulosefasergewebe, Polyester- und Polyamidgewebe, für Glasfasergewebe, für Textiltapeten oder Textiljalousetten, zur Verbesserung des Abriebs und der Trittfestigkeit der Nadelfilzauslegeware, zur Verfestigung von Vliesstoffen, für die Einbindung der Florfäden bei einer Tuftingware in das Grundgewebe durch den sogenannten Vorstrich oder für die Rückenappretur für Webteppiche, werden handelübliche 40 - 50 %ige Kunststoffdispersionen eingesetzt.

Als Kunststoffdispersionen kommen in Frage Polyvinylacetat, Polyvinylacetat mit Kunststoffweichmachern, wie Dibutylphthalat, Misch-Polymerisate von Vinylacetat mit Maleinsäuredibutylester, Mischpolymerisate von Acrylsäurebutylester mit N-Methylolacrylamid, Mischpolymerisate von Acrylsäurebutylester, N-Methylolacylamid und Acrylsäure, Mischpolymerisate von Acrylsäurebutylester, N-Methylolacrylamid und/oder N-Methylolmethacrylamid und Acrylsäure, Mischpolymerisate von Acrylsäurebutylester, Methacrylsäuremethylester und Methylolmethacrylamid, Mischpolymerisate von Acrylsäurebutylester, Acrylnitril, N-Methylolacrylamid und Methacrylsäure, Mischpolymerisate von Acrylsäurebutylester, Acrylsäureäthylester.

Acrylnitril, N-Methylolmethacrylamid und Acrylsäure, Mischpolymerisate von Acrylsäurebutylester, Styrol, Acrylnitril und N-Methylolmethacrylamid, Mischpolymerisate aus N-Methylolmethacrylamid und Butandioldiacrylat, Acrylsäuremethylester und Acrylsäurebutylester, Mischpolymerisate von Äthylacrylat, Acrylnitril und N-Methylolacrylamid, Mischpolymerisate von Butylacrylat, Vinylacetat mit N-Methylolacrylamid, Mischpolymerisate von Butylacrylat, Acrylnitril und N-Methylolacrylamid, Mischpolymerisate von Styrol, Butylacrylat und Acrylsäure, Naturlatex oder Syntheselatices aus Styrol mit Butadien.

Bevorzugte Polymerdispersionen sind Polyvinylacetat-Dispersionen (50 %ig), Mischpolymerisate von Vinylacetat mit Maleinsäuredibutylester, z.B. im Verhältnis 77/23 (ca. 50 %ig), Mischpolymerisate von Styrol/Butylacrylat/Acrylnitril/Methacrylsäure/Acrylamid z.B. im Verhältnis 16:61:25:2:1 oder 25:53:25:1, Mischpolymerisate von Äthylacrylat/Acrylnitril/N-Methylolacrylamid 6:3:1, Mischpolymerisate von Butylacrylat/Vinylacetat/N-Methylolacrylamid 35:55:10, ferner Pfropfpolymerisate (partiell verseift) wie 50 % Polyvinylalkohol, 25 % Polyvinylacetat, 25 % Polyäthylen oder Butadien-Styrol-Latex (ca. 50 %) z.B. im Verhältnis 40:60, 60:40 oder 35:60 + 3,5 Acrylsäure.

Die Imprägnierflotten sowohl für den Vorstrich als auch für die Rückenbeschichtung bei Webteppichen enthalten außerdem noch Verdicker, die ein Durchschlagen der Appreturlösung in den Flor verhindern sollen und diesen verkleben. Als Verdickungsmittel sind geeignet wasserlösliche Hydroxyäthylcellulosen, Methylcellulosen, Carboxymethylcellulosen, wasserlösliche Stärkeprodukte, teilverätherte oder verätherte Stärkeprodukte, Polyvinylalkohole, die Na- oder Ammoniumsalze der Alginsäure.

Der Vorstrich oder auch die Teppichrückenbeschichtung für Webteppiche können außerdem wie üblich mit Kreide gefüllt werden. Es können aber auch Metalloxide als Füllmittel Verwendung finden, wie z.B. Aluminiumoxid, Aluminiumhydroxid, Aluminiumoxidhydrat.

Die Durchführung des erfindungsgemäßen Verfahrens zur flammhemmenden Ausrüstung von Florteppichen oder von Webteppichen durch eine Rückenbeschichtung erfolgt ebenfalls unter Applikationsbedingungen , wie sie in der Textilindustrie üblich sind.

Die Vorstrichmasse für Tuftingteppiche oder die Rückenappretur bei Webteppichen, die die flammhemmende Verbindung, den Vernetzer die Kunststoffdispersion und den Katalysator enthält, wird mit Hilfe einer Luftrakel, einer Gummituchrakel oder Zylinderrakel aufgebracht. Anschließend wird auf dem Spannrahmen, in Gelier- oder Trockenkanälen oder Zylindertrocknern bei 125° bis 150° C getrocknet bzw. ausgehärtet. Die Verweilzeit richtet sich nach der Dicke der Teppiche und liegt zwischen 5 bis 20 Minuten, vornehmlich 7 bis 10 Minuten.

Bei Tufted-Teppichen erfolgt im allgemeinen anschließend noch eine Rückenbeschichtung mit Naturlatex, Syntheseslatex-Dispersion, z.B. auf Basis Butadien-Styrol 40:60 oder 60:40.

Bei der Prüfung des Brenn- bzw. Brandverhaltens einer Tuftedware, die erfindungsgemäß über den Vorstrich flammhemmend ausgerüstet ist und außerdem eine Latex-Rückenbeschichtung trägt, findet man einen ausgezeichneten Flammschutz für den gesamten Teppich. Der flammgeschützte Vorstrich bildet eine Sperrschicht gegenüber dem Latexrücken, so daß dieser nicht zur Entflammung kommt.

Das erfindungsgemäße Flammschutzverfahren zeichnet sich auch dadurch aus, daß bei einer Flammeinwirkung keine aggressiven Dämpfe, in Form von Halogenwasserstoff entstehen können, wie dies in starkem Maße der Fall ist, wenn flammhemmende Komponenten Produkte auf Basis Chlorparaffin, PVC, anorganische oder organische Bromverbindungen eingesezt werden.

Die geschilderten flammhemmenden Systeme auf den verschiedenen Textilmaterialien zeichnen sich durch eine sehr gute Permanenz aus. Die flammhemmenden Ausrüstungen sind grifflich elastisch, bei einer mechanischen Beanspruchung, z.B. Einrollen der Nadelfilzauslegeware, der Tuftingteppiche, der Webteppiche, oder auch scharfes

BAD ORIGINAL

Knicken führen nicht zum Brechen oder Auspudern der Appretur. Dieses elastische Verhalten der Ausrüstungen, die bei Naßbehandlungen auch kein oder nur sehr geringes Aufquellen zeigen, dürfte mitverantwortlich für die sehr gute Waschpermanenz auf den geschilderten Textilgütern und für die ausgezeichnete Einbindung der Polfäden im Tuftinggrundgewebe sein.

Die Ausrüstungen zeigen im allgemeinen auch ein gutes antistatisches Verhalten und erübrigen in vielen Fällen Zusätze von Antistatika oder Ruß-Dispersionen.Der Einbau von antistatischen Produkten, von Textilweichmachern, Oleophobierungsmitteln bereitet im allgemeinen keine Schwierigkeiten.

BAD ORIGINAL

## Anwendungs-Beispiele

### Beispiel 1

Eine grobfadige Nadelfilzauslegeware, die aus einem Polyesterfaserkern und aus einer Polyamidlauffläche im Mischungsverhältnis 65 : 35 besteht und ein Quadratmetergewicht von ca. 800 g/m² besitzt, wird auf einem Zweiwalzenfoulard mit einer wäßrigen Lösung behandelt, die aus folgenden Einzelkomponenten besteht:

330 g/l eines Umsetzungsproduktes aus 8 Molen Propanphosphonsäureanhydrid, 1 Mol Pentaerythrit und 9,3 Molen Äthylenoxid (Beisp. 1-0)

160 g/l Trimethylolmelamintrimethyläther (80 %ig)

5 g/l Zinkchlorid,

200 g/l einer 40 %igen Kunststoffdispersion aus Äthylacrylat/Acrylnitril/N-Methylolacrylamid im Verhältnis 6:3:1.

Der Abquetscheffekt beträgt ca. 105 %. Anschließend wird 20 Min. bei 145°C getrocknet.

Der Nadelfilz zeigt einen sehr guten Flammschutzeffekt, der mehrere Shampoonierungen und Feinwäschen bei 40 - 50°C überdauert. Die Flammschutzprüfung erfolgt nach DIN 54 333, Bestimmung der Flammausbreitungsgeschwindigkeit von Textilien, oder nach der Kraftfahrzeugsicherheitsnorm No. 302 (US-MVSS 302). Die erfindungsgemäß ausgerüstete Nadelfilzauslegeware brennt nach Wegnahme der Prüfflamme nicht weiter. Außerhalb der Prüfstrecke konnte lediglich ein Nachglimmen von 10 - 15 Sekunden festgestellt werden. Nach drei Feinwäschen mit 2 g/l eines handelsüblichen Feinwaschmittel (die Waschdauer beträgt jeweils 15 Minuten bei 40°C) brennt der Nadelfilz ebenfalls nicht weiter. Die Nachflammzeit hatte sich nur auf 40 - 60 Sekunden erhöht. Nach einer 5fachen Shampoonierung brennt der Nadelfilz ebenfalls nicht weiter. Die Nachflammzeit beträgt 50 Sekunden.

Wird die Nadelfilzauslegeware dagegen mit 200 g/l der im Beispiel aufgeführten Kunststoff-Dispersion ausgerüstet, so brennt der Nadelfilz nach Wegnahme in breiter Front in 3 Minuten und 45 Sekunden ab.

Der flammhemmend ausgerüstete Nadelfilz ist elastisch und formstabil.

Beispiel 2

Das in Beispiel 1 beschriebene Umsetzungsprodukt aus Propanphosphonsäureanhydrid, Pentaerythrit und Äthylenoxid wird als flammhemmende Komponente einer Vorstrichausrüstung für eine Tuftingware verwendet.

Die Tuftingware (sie hat ein Quadratmeter-gewicht von 650 g/m²), die aus einem Polyamid-Schlingenflor, 6 mm hoch, besteht, getufted auf einem Trägermaterial aus vernadeltem Polypropylenvlies, wird mit einem Vorstrich folgender Zusammensetzung ausgerüstet:
330 Teile eines Umsetzungsproduktes aus 8 Molen Propanphosphonsäureanhydrid, 1 Mol Pentaerythrit und 9,3 Molen Äthylenoxid (Beisp. 1-0)
160 Teile Trimethylolmelamintrimethyläther (80 %ig)
150 Teile einer 50 %igen Butadien-Styrol-Dispersion (60 : 40)
300 Teile einer 3,5 %igen Methyl-hydroxyäthylcelluloselösung
275 Teile Wasser
5 Teile Ammoniumchlorid
400 Teile Kreide.
Der Vorstrich wird mit Hilfe einer Gummituchrakel aufgebracht und 10 Minuten bei 145 °C getrocknet. Der Auftrag muß so gesteuert werden, daß die Trockenauflage ca. 800 g/m² beträgt.

Der behandelte Tuftingteppich zeigt einen flexiblen Griff und eine ausgezeichnete Formstabilität. Die Imprägnierlösung ist nicht in die Florfäden eingedrungen. Der Polyamidflor zeigt seine ursprüngliche Beweglichkeit. Die Florfäden sind im Grundgewebe ausgezeichnet verfestigt.

Im Anschluß wird im Schaumverfahren eine Teppichrückenbeschichtung auf einer Gummituchrakel aufgebracht.
Die Beschichtungsflotte besteht aus
205 Teilen einer 50 %igen Butadien-Styrol-Dispersion (40/60)
14 Teilen einer Paste mit Vulkanisationsbeschleunigern
300 Teilen Kreide
8 Teilen eines Schaumes auf Basis Alkylnaphthalinsulfosaurem Na.
Geschäumt wird im Verhältnis 1:3 zu dem Ursprungsvolumen.
Nach der Rakelauftrag wird anschließend bei 150°C 10 Minuten getrocknet. Es entsteht ein Glattschaumrücken mit ca. 900 g/m² Trockenauflage.
Parallel hierzu wird ein Abschnitt der oben beschriebenen Tufted-

BAD ORIGINAL

ware mit einem Vorstrich versehen, der keine flammhemmenden Komponenten enthält. Die Einbindung der Florfäden erfolgt mit einer 50 %igen Butadien-Styrol-Dispersion (60 : 40), Kreide und Methylol-Hydroxyäthylecellulose als Verdicker. Im Anschluß wird nach der Trocknung der vorstehend beschriebene Glattschaum aufgetragen.

Flammschutzprüfung:

Die Teppichabschnitte, flammhemmend ausgerüstet über den Vorstrich und nicht flammhemmend ausgerüstet, werden nach der DIN-Norm 54 332 nach einer Beflammungszeit von 15, 30 und 60 Sekunden geprüft.
Es ergibt sich folgendes Bild:
Der nicht flammhemmend ausgerüstete Teppichabschnitt brennt ab, während der flammhemmend ausgerüstete Teppich nach Wegnahme der Prüfflamme nicht weiterbrennt.
Die Flammschutzprüfung nach der Nordtest-Methode No. 7 ergibt folgenden Befund: Der Teppichabschnitt, der keinen flammhemmenden Vorstrich enthält, zeigt nach der Nordtest-Methode No. 7 keinen Flammschutz. Der Teppichabschnitt brennt nach Erlöschen des Holzstoßes in breiter Front über die Maßmarkierung von 60 cm weiter.
Der flammhemmend ausgerüstete Teppichabschnitt erlischt nach dem Abbrennen des Holzstoßes und zeigt eine Einbrennlänge von 30 cm, ein Einbrennweite von 12 cm und ein Nachbrennen von 10 Sekunden.
Der flammhemmend ausgerüstete Glattschaumrücken wird durch die Flammeinwirkung nicht in Mitleidenschaft gezogen.
Der ausgezeichnete flammhemmende Effekt ist auch noch nach 6 Shampoonierungen oder nach mehreren Naßbehandlungen erhalten.

Beispiel 3

Der im Beispiel 2 beschriebene Tufted-Teppich wird mit einer Vorstrichimprägnierung behandelt, die folgende Zusammensetzung hat:
280 Teile eines Umsetzungsproduktes von 1 Mol Glycerin, 9 Molen Äthanphosphonsäureanhydrid und 10,4 Molen Äthylenoxid (Beisp. 1g),
140 Teile Trimethylolmelamintrimethyläther (80 %ig)
150 Teile einer 50 %igen Butadien-Styrol-Dispersion (60:40)
400 Teile einer 3,0 %igen Methyl-hydroxyäthylcelluloselösung
175 Teile Wasser
5 Teile Ammoniumchlorid

350 Teile Kreide.
Der Vorstrich wird wieder mit Hilfe einer Gummituchrakel aufgebracht und 12 Minuten bei 140°C getrocknet.
Die Trockenauflage beträgt 780 $g/m^2$.

Der so ausgerüstete Tuftingteppich zeigt einen elastischen Griff. Der Teppichflor ist nicht verklebt, da die Vorstrichmasse das Grundgewebe nicht durchgeschlagen hat.
Der so behandelte Tuftedteppich brennt nach der Flammschutzprüfung nach der Nordtest-Methode No. 7 für Bodenbeläge nach dem Abbrennen des Holzstoßes nicht weiter. Die Einbrennlänge beträgt 30 cm, die Einbrennweite 16 cm. Nach 3 Minuten wird kein Nachbrennen mehr beobachtet.
Der flammhemmende Effekt ist ausgezeichnet shampoonierbeständig und überdauert mehrere Naßbehandlungen.

Beispiel 4

Eine Nadelfilzauslegeware (700 $g/m^2$), die aus einem feinfädigen Polypropylenkern und einer grobfädigen Lauffläche aus Polypropylenfäden besteht, wird auf einem Zweiwalzenfoulard mit einer wäßrigen Imprägnierlösung behandelt, die folgende Zusammensetzung hat:
270 g/l eines Umsetzungsproduktes aus 1 Mol Glykol, 10 Molen Propanphosphonsäureanhydrid und 11,2 Molen Äthylenoxid (Beisp. 1i)
140 g/l Trimethylolmelamintrimethyläther, (80 %ig)
210 g/l einer 40 %igen Kunststoffdispersion aus Äthylacrylat/Acrylnitril/N-Methylolacrylamid (6:3:1),
4,5 g/l Zinkchlorid.
Der Abquetscheffekt beträgt 110 %. Anschließend wird 25 Minuten bei 135°C getrocknet.

Der flammhemmende Effekt des sehr elastischen und formstabilen Nadelfilzes ist ausgezeichnet und überdauert mehrere Shampoonierbehandlungen. Der flammhemmende Effekt wird nach DIN 54 333 "Bestimmung der Flammausbreitungsgeschwindigkeit" geprüft. Nach Wegnahme der Prüfflamme brennt der Nadelfilz 30 Sekunden außerhalb der Prüfzone nach. Nach 3 Shampoonierungen brennt der Nadelfilz 60 Sekunden nach. Die Flamme erreicht nicht die Prüfzone.

Wird der Nadelfilz dagegen nur mit 200 g/l der im Beispiel erwähnten Kunststoffdispersion ausgerüstet, so brennt dieser Nadelfilz nach Wegnahme der Prüfflamme weiter. 10 cm der Prüfstrecke werden von der Flamme in 2 Minuten und 30 Sekunden durchlaufen.

Beispiel 5

Ausgezeichnete flammhemmende und permanente Effekte werden erreicht, wenn der im Beispiel 4 verwendete Polypropylennadelfilz mit folgender wäßriger Ausrüstungslösung behandelt wird:
250 g/l eines Umsetzungsproduktes aus 1 Mol 1,4-Butendiol, 12 Molen Äthanphosphonsäureanhydrid und 12,2 Molen Äthylenoxid (Beisp. 1h),
130 g/l Trimethylolmelamintrimethyläther,
220 g/l einer 50 %igen Kunststoffdispersion aus Vinylacetat mit Melaminsäuredibutylester im Verhältnis 77:23,
25 g/l einer 40 %igen 2-Amino-2-methyl-propanol-hydrochloridlösung.
Der Abquetscheffekt beträgt 95 %. Die Trocknung erfolgt 25 Minuten bei 135°C.

Beispiel 6

Die im Beispiel 2 beschriebene Tuftingware wird mit einem Vorstrich versehen, der aus folgenden Einzelkomponenten besteht:
300 Teile eines Umsetzungsproduktes von 1 Mol 1,6-Hexandiol, 8 Molen Methanphosphonsäureanhydrid und 9,1 Molen Äthylenoxid (Beisp. 1c)
140 Teile Trimethylolmelamintrimethyläther (80 %ig)
150 Teile einer 50 %igen Butadien-Styrol-Dispersion (60:40)
300 Teile einer 3,0 %igen Methyl-hydroxyäthylcelluloselösung
275 Teile Wasser
5 Teile Ammoniumchlorid
400 Teile Kreide.

Der Vorstrich wird mit Hilfe einer Gummituchrakel aufgebracht und 15 Minuten bei 140°C getrocknet bzw. kondensiert. Die Trockenauflage beträgt ca. 780 $g/m^2$.

Der so behandelte Tuftingteppich zeigt einen flexiblen Griff. Die Einbindung der Einzelflorfäden in das Grundgewebe ist ausge-

zeichnet. Die aufgebrachte Appretur bricht nicht. Die Imprägnierflotte ist nicht in die Florfäden eingedrungen.
Parallel hierzu wird dieselbe Tuftingware nur mit der Butadien-Styrol-Dispersion und der 3,0 %igen Methylhydroxyäthylcelluloselösung ausgerüstet.
Im Brennverhalten nach DIN-Norm 54 333 zeigen sich die großen Unterschiede beider Ausrüstungen. Während der Prüfling der flammhemmend ausgerüsteten Tuftingware nach Wegnahme der Prüfflamme nur 15 Sekunden weiterbrennt (die Flamme erreicht nicht die Prüfstrecke), brennt der Prüfling ohne flammhemmende Ausrüstung weiter. Eine Prüfstrecke von 10 cm wird von der Flamme in 2 Minuten und 50 Sekunden durchlaufen.

Beispiel 7

Die im Beispiel 4 beschriebene Nadelfilzauslegeware wird auf einem 2-Walzenfoulard mit folgender Imprägnierlösung behandelt:
300 g/l eines Umsetzungsproduktes von 1 Mol Pentaerythrit, 8 Molen Methanphosphonsäureanhydrid und 9,1 Äthylenoxid (Beisp. 1a)
140 g/l Trimethylolmelamintrimethyläther (80 %ig)
200 g/l einer 40 %igen Kunststoffdispersion aus Äthylacrylat/Acrylnitril/N-methylolacrylamid im Verhältnis 6:3:1
5 g/l Zinkchlorid.
Der Abquetscheffekt beträgt 95 %. Anschließend wird 20 Minuten bei 135°C getrocknet.
Der Nadelfilz zeigt einen sehr guten Flammschutzeffekt, der mehrere Shampoonierungen und Feinwäschen bei 40°C überdauert.
Die Flammschutzprüfung erfolgt nach DIN 54 333.
Der Nadelfilzprüfling brennt nach Wegnahme der Prüfflamme nicht weiter. Es konnte lediglich ein Nachbrennen von 10 Sekunden außerhalb der Prüfzone festgestellt werden.
Der dreimal nachgewaschene Nadelfilz mit 2 g/l eines handelsüblichen Feinwaschmittels brannte nach Wegnahme der Prüfflamme ebenfalls nicht weiter. Die Nachbrennzeit beträgt 55 Sekunden außerhalb der Prüfzone.
Der flammhemmend ausgerüstete Nadelfilz ist elastisch, leicht gefüllt und formstabil.

Beispiel 8

Die in den Beispielen 4 und 7 beschriebene Polypropylen-Nadelfilzauslegeware wird mit einer Imprägnierflotte folgender Zusammensetzung behandelt:

290 g/l eines Umsetzungsproduktes von 100 Molen Propanphosphonsäure anhydrid u. 104 Molen Äthylenoxid und 1 Mol Soda-Katalysator (Beisp. 1k)

140 g/l Trimethylolmelamintrimethyläther (80 %ig)

220 g/l einer 40 %igen Kunststoffdispersion aus Äthylacrylat/Acrylnitril/N-Methylolacrylamid im Verhältnis 6:3:1

5 g/l Ammoniumchlorid.

Der Abquetscheffekt beträgt 105 %. Im Anschluß wird 25 Minuten bei 135°C getrocknet bzw. kondensiert.

Der Nadelfilz ist sehr gut permanent flammhemmend ausgerüstet. Der Griff ist elastisch, leicht gefüllt, aber nicht verhärtet.

Beispiel 9

Eine Tufting-Teppichware mit einem Quadratmetergewicht von 650 g/m², die aus einem 6 mm hohen Polyesterflor besteht, getuftet auf einem Trägermaterial aus vernadeltem Polypropylenvlies (100 g/m²) wird mit einem Vorstrich folgender Zusammensetzung ausgerüstet:

280 Teile eines Umsetzungsproduktes aus 12 Molen Propanphosphonsäureanhydrid, 1 Mol Pentaerythrit und 12,8 Molen Äthylenoxid (Beisp. 1m)

140 Teile Trimethylolmelamintrimethyläther (80 %ig)

160 Teile einer 50 %igen Butadien-Styrol-Dispersion (60:40)

300 Teile einer 2,7 %igen Methyl-hydroxyäthylcelluloselösung

300 Teile Wasser

5 Teile Ammoniumchlorid

400 Teile Kreide.

Der Vorstrich wird mit Hilfe einer Handrakel aufgebracht und 10 Minuten bei 145°C getrocknet. Die Trockenauflage beträgt ca. 750 g/m².

BAD ORIGINAL

Der so behandelte Tufting-Teppich zeigt einen flexiblen Griff und eine sehr gute Formstabilität. Die Florfäden sind im Grundgewebe sehr gut verfestigt.
Im Anschluß wird wie im Beispiel 2 im Schäumverfahren eine Teppichrückenbeschichtung mit einer Gummituchrakel aufgebracht und die Weiterverarbeitung wie im Beispiel 2 durchgeführt.
Der so behandelte Tufting-Teppich erfüllt die Prüfnorm DIN 54333. Nach Wegnahme der Prüfflamme brennt der Teppich nur 20 Sekunden nach. Die Flamme erreicht nicht die Prüfstrecke.
Prüft man nach DIN 54 332 (Bestimmung des Brennverhaltens von textilen Fußbodenbelägen) bei einer Beflammungszeit von 15, 30 und 60 Sekunden, so brennt bei Wegnahme der Prüfflamme der Teppich nicht weiter. Der nicht flammhemmend ausgerüstete Schaumrücken ist nicht in Mitleidenschaft gezogen. Er ist unversehrt.

Beispiel 10

Eine Nadelfilzauslegeware aus Polypropylenfasern, wie im Beispiel 4 beschrieben, wird mit einer Imprägnierlösung folgender Zusammensetzung behandelt:
220 g/l eines Umsetzungsproduktes von 1 Mol Pentaerythrit, 8 Mol 1,6-Hexan-bis-(methylphosphinsäure)-anhydrid und 10 Molen Äthylencarbonat, das 21,0 % P enthält (Beisp. 4 g),
100 g/l Trimethylolmelamintrimethyläther (80 %ig)
200 g/l einer 40 %igen Kunststoffdispersion aus Äthylacrylat/Acrylnitril/N-Methylolacrylamid (6:3:1)
4 g/l Ammoniumchlorid.
Der Nadelfilz wird auf einem 2-Walzenfoulard behandelt und abgequetscht. 100 % Naßauflage.
Anschließend wird 25 Minuten bei 135°C getrocknet.

Der Nadelfilz zeigt einen ausgezeichneten Flammschutzeffekt nach der US-Sicherheitsnorm für Kraftfahrzeuge No. 302 (US-MVSS 302). Nach Wegnahme der Prüfflamme brannte der Nadelfilz nur 5 Sekunden nach.
Der Nadelfilz ist elastisch und formstabil.

Beispiel 11

Der im Beispiel 1 beschriebene Nadelfilz, der aus einem Polyesterfaserkern und aus einer Polyamidlauffläche besteht, wird mit einer Imprägnierlösung behandelt, die folgende Zusammensetzung hat:

200 g/l eines Umsetzungsproduktes aus 1 Mol 1,6-Hexandiol, 8 Molen Methan-bis-methylphosphinsäure-anhydrid (Beisp. 4 b) und 12 Molen Äthylenoxid. Der Phosphorgehalt beträgt 27,5 % (Beisp. 4 b),

150 g/l Trimethylolmelamintrimethyläther (80 %ig)

200 g/l einer ca. 45 %igen Styrol/Butylacrylat/Acrylnitril/Methacrylsäure/Acrylamid/Dispersion (Verhältnis 16:61:25:2:1),

20 g/l einer 40 %igen 2-Amino-2-methyl-propanol-hydrochloridlösung.

Der Nadelfilz wird auf einem Zweiwalzenfoulard abgequetscht. Flottenaufnahme 105 %. Im Anschluß wird 25 Minuten bei 140°C getrocknet bzw. kondensiert.

Der Nadelfilz ist leicht gefüllt und elastisch. Der Nadelfilz zeigt außerdem einen sehr guten Flammschutzeffekt, der mehrere Shampoonierungen übersteht. Die Flammschutzprüfung erfolgt nach DIN 54 333 "Bestimmung der Flammausbreitungsgeschwindigkeit von Textilien". Nach der Beflammung brennt der Nadelfilz 45 Sek. nach, ohne die Prüfstrecke zu erreichen. Nach 3 Shampoonierungen brennt der Nadelfilz 60 Sek. nach Wegnahme der Prüfflamme nach.

Beispiel 12

Der im Beispiel 2 beschriebene Tufting-Teppich wird mit nachstehender Vorstrich-Imprägnierlösung mit Hilfe einer Gummituchrakel behandelt:

220 Teile eines Umsetzungsproduktes von 1 Mol Glykol, 4 Molen Äthan-1,2-bis-(methyl-phosphinsäure-anhydrid) und 4,2 Molen Äthylenoxid. Der Phosphorgehalt beträgt 26,6 % (Beisp. 4d).

100 Teile einer 80 %igen Trimethylolmelamintrimethylätherlösung

300 Teile einer 3,5 %igen Methyl-hydroxyäthylcelluloselösung

150 Teile einer 50 %igen Butadien-Styrol-Dispersion (60:40)

5 Teile Ammoniumchlorid

225 Teile Wasser.

Nach dem Rakelauftrag wird 20 Minuten bei 140°C getrocknet.

Der Rakelauftrag wird so gesteuert, daß die Trockenauflage ca. 750 g/m² beträgt.
Der mit dem oben beschriebenen Vorstrich versehene Tufting-Teppich zeigt nach der Trocknung einen flexiblen Griff und eine sehr gute Formstabilität. Die Imprägnierlösung ist nicht in die Florfäden eingedrungen.
Die Florfäden haben ihre volle Beweglichkeit behalten und sind zur Begehseite hin nicht verklebt.

Der so ausgerüstete Tufting-Teppich ist sehr gut permanent flammhemmend ausgerüstet. Die Flammschutzprüfung erfolgt nach DIN 54 333, "Bestimmung der Flammausbreitungsgeschwindigkeit". Nach Wegnahme der Prüfflamme brennt der Tufting-Teppich 50 Sekunden nach. Nach einer dreimaligen Naßbehandlung mit 2 g/l eines handelsüblichen Feinwaschmittels 10 Min. bei 40°C brennt der Tufting-Teppich nach Wegnahme der Prüfflamme 55 Sek. nach, ohne die Prüfstrecke zu erreichen.

Beispiel 13 - 32:

Der im Beispiel 2 beschriebene Tufting-Teppich mit einem Quadratmetergewicht von 650 g, bestehend aus einem Polyamid-Flor von 6 mm, getufted auf Polypropylenvlies (ca. 100 g/m²) wird mit einem Vorstrich mit Hilfe einer Laborrakes versehen. Der Auftrag muß so gesteuert werden, daß die Trockenauflage ca. 780 - 800 g/m² beträgt. Nach der Rakelbehandlung wird 12 - 15 Minuten bei 145° C getrocknet. Die Vorstrich-Impränierlösung ist ähnlich aufgebaut wie in Beispiel 2 beschrieben:

x Teile der phosphororganischen Verbindung (Tabelle)
$\frac{x}{2}$ Teile einer 80 %igen Trimethylolmelamintrimethylolätherlösung
150 Teile einer 50 %igen Butadien-Styrol-Dispersion (60:40)
400 Teile einer 3,5 %igen Methyl-hydroxyäthylcelluloselösung
y Teile Wasser (Gesamtansatz ca. 1495 Teile)
5 Teile Kreide
(Alle Teile sind Gewichts-Teile)

| Beispiel Nr. | Gewichts-Teile | P-organische Verbindungen | DIN 54 332 (60") | DIN 54 333 |
|---|---|---|---|---|
| 5b | 250 | 1 Pentaerythrit + 4 Meta-1,2-Äthanphosphonsäure-diäthylester + 5,72 AeO | brennt 15" nach | brennt 35" nach (außerhalb d. Prüfstrecke) |
| 3b | 265 | 1 1,6-Hexandiol + (1,33 Methan-di-phosphonsäure-tetraäthylester + 1,33 $P_2O_5$) + 4,58 AeO | brennt 45" nach | brennt 3' nach |
| 4f | 210 | 1 1,6-Hexandiol + 5 Äthan-bis-(methylphosphinsäure)-anhydrid + 6 PyO | brennt nicht nach | brennt 60" nach |
| 9 | 240 | 1 Pentaerythrit + (1,33 $P_2O_5$ + 2,66 Methylen-diphosphonsäuretetraäthylester) + 5,49 AeO | brennt 35" nach | brennt 1'20" nach |
| 6b | 270 | 1,6 Hexandiol + (2,4 Mole Äthanphosphonsäure-diäthylester + 2 Mole $P_2O_5$) + 7,2 AeO | brennt nicht nach | brennt 2' nach |
| 6k | 250 | 1 Pentaerythrit + (5,44 Propanphosphonsäure-dimethylester t 5,08 $P_2O_5$) + 18,3 AeO | brennt nicht nach | brennt 2' nach |
| 6 1 | 300 | 1 Triäthanolamin + (2 Propanphosphonsäure-dimethylester + 2 $P_2O_5$) + 7,04 AeO | brennt 20" nach | brennt 30" nach |
| 6n | 360 | 1 $CH_2{=}C(CH_3)-CO-O-C_2H_4OH$ + (0,66 Propanphosphonsäuredimethylester + 0,66 $P_2O_5$) + 3,18 AeO | brennt nicht nach | brennt 3' 2 cm in die Prüfstrecke ein |
| 7 | 240 | 1 Hexandiol + (2,0 Äthan-bis-(methylphosphinsäure-n-butylester) + 1,67 $P_2O_5$) + 8 AeO | brennt 10" nach | brennt 45" nach |
| 2f | 400 | $(HO-C_2H_4-O-$ 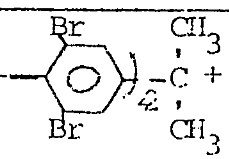 + (2 Propanphosphonsäuredimethylester+2 $P_2O_5$) + 6,6 AeO | brennt nicht nach | brennt 20" nach |

| Beispiel Nr. | Gewichts-Teile | Mole P-organische Verbindungen | DIN 54 332 (60") | DIN 54 333 |
|---|---|---|---|---|
| 8f | 250 | 1 Pentaerythrit + (5,35 $P_2O_5$ + 10,7 Triäthylphosphat) + 14,9 AeO | - | brennt 1' nach |
| 6s | 300 | [5,4 $C_2H_5-P(O)(OCH_2-CHBr-CH_2Br)_2$ + 4,5 $P_2O_5$] 1 Glyzerin + 17,2 AeO | brennt nicht nach | brennt 40" nach |
| 10a | 250 | [1 Propanphosphonsäure + 5 Propanphosphonsäureanhydrid] + 7,1 AeO | brennt 1'40" nach | brennt 50" nach |
| 10b | 280 | 1 Glyzerin + 9 Propanphosphonsäureanhydrid + 11,2 AeO | brennt nicht nach | brennt 10" nach |
| 11 | 330 | (11,2 Äthan-bis(methyl-phosphinsäure)+ 10 Propanphosphonsäureanhydrid) + 15 Äthylencarbonat | brennt nicht nach | brennt 10" nach |
| 12 | 260 | 1 [$(HO-P(O)(C_3H_7)-)_2O$ + 10 1,10-Dekan-bis-methylphosphinsäure-anhydrid] + 15,7 AeO | brennt 1'10" nach | brennt 1' nach |
| 14 | 250 | [$(HO)_2P(O)-C_4H_8-P(OH)-)_2O$ + 18 Äthanphosphonsäureanhydrid] + 27,2 AeO | brennt 1'10" nach | brennt 35" nach |
| 17 | 270 | 1 $H_3PO_4$ + (2 $P_2O_5$ + 2,07 Propanphosphonsäurediäthylester) + 10,3 AeO | brennt nicht nach | brennt 2' nach |
| 19c | 280 | $H_3PO_4$ + (1,33 $P_2O_5$ + 1,46 Triäthylphosphat) + 2 Phospholan + 9,8 AeO | - | brennt 50' nach |
| 18 | 260 | Propanphosphonsäure + (1,67 $P_2O_5$ + 1,72 Trimethylphosphat) + 8,4 AeO | - | brennt 1' nach |

"brennt nach", bedeutet es wird bei DIN 54 333 von den Flammen nicht die 1. Marke der Prüfstrecke erreicht. (Sehr gute Werte!)

Für DIN 54 332, bedeutet "es brennt nach": Nach Wegnahme · Prüfflamme brennt der Prüfling z.B. 10", 1' etc. nach und erlischt dann.

BAD ORIGINAL

Patentansprüche:

1. Gemische von oligomeren Phosphorverbindungen der allgemeinen Formeln $I_Z$, $I_A$, $I_K$ und $I_{bo}$.

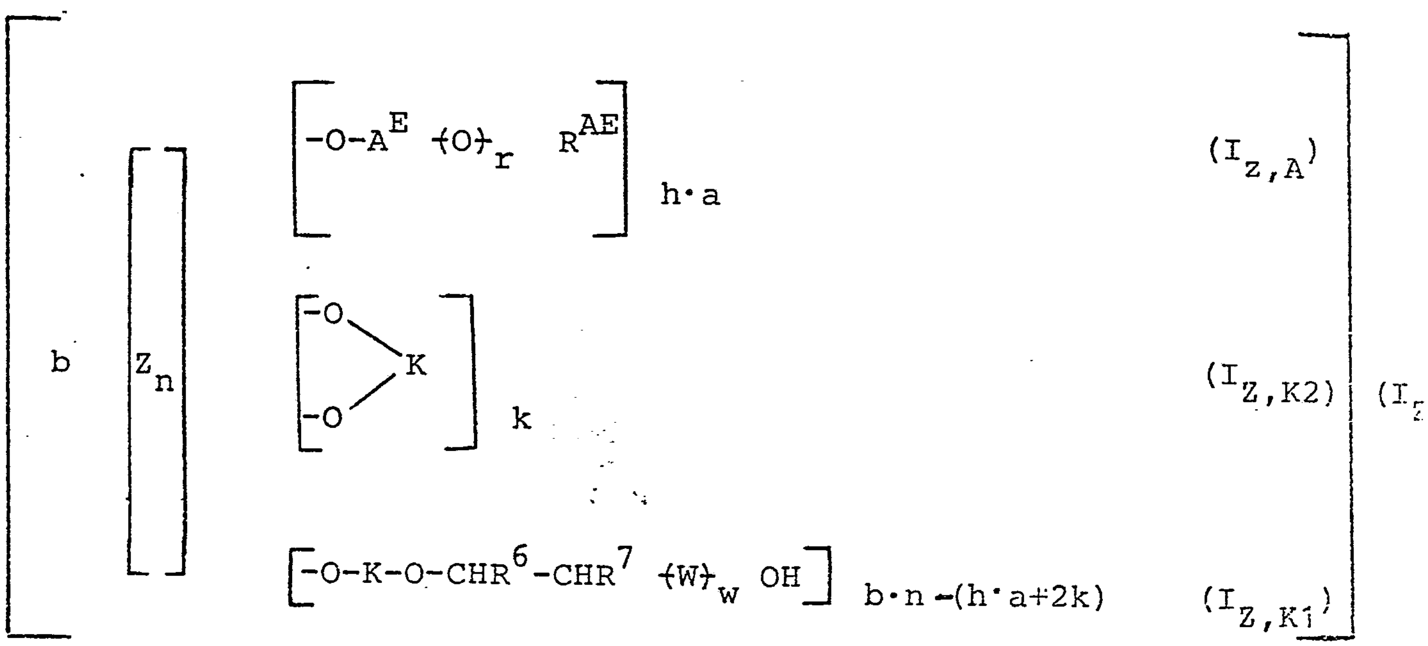

$(I_{Z,A})$ $(I_{Z,K2})$ $(I_{Z,K1})$ $(I_Z)$

$$+\ h\cdot(2-a)\quad R^{AE}(O)_r\ A^E-O-CHR^6-CHR^7(W)_w\ OH \qquad (I_A)$$

$$+\ k + \frac{h\cdot a}{2}\quad K\ (O-CHR^6-CHR^7(W)_w\ OH)_2 \qquad (I_K)$$

$$+\ j\quad R^{AE}(O)_r\ A^E-O-CHR^6-CHR^7-O-K-O-CHR^6-CHR^7(W)_w\ OH \qquad (I_{bo})$$

wobei $A^E$, K, W, w, $R^1$, $R^{SE}$, $R^{AE}$, $R^{SB}$, $R^{AB}$, $R^3$, $R^4$, $R^5$, $R^6$, $R^7$, $R^{12}$, m, n, q, b, f, g, h, i, r, s, a, j, k und $Z_n$ die in der Beschreibung angegebenen Bedeutungen haben.

2. Gemische von oligomeren Phosphorverbindungen gemäß Anspruch 1, gekennzeichnet durch die allgemeine Formel

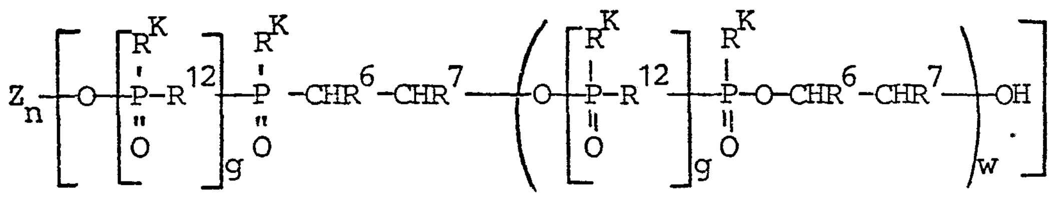

wobei $R^K$, $R^6$, $R^7$, $R^{12}$, g, w, n und $Z_n$ die in der Beschreibung angegebenen Bedeutungen haben.

3. Gemische von oligomeren Phosphorverbindungen nach Anspruch 1, gekennzeichnet durch die allgemeine Formel

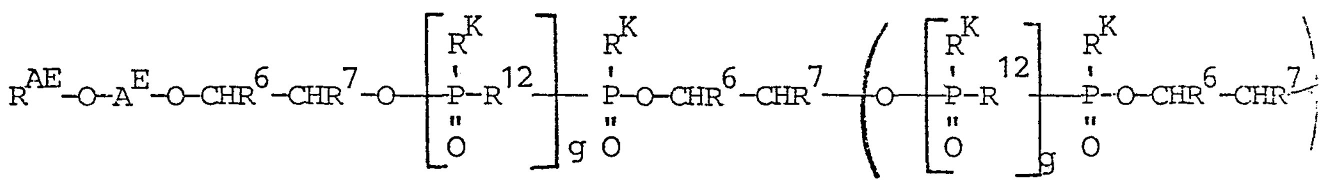

wobei $R^{AE}$, $A^E$, $R^6$, $R^7$, $R^{12}$, $R^K$, g und w die in der Beschreibung aufgeführten Bedeutungen haben.

4. Verfahren zur Herstellung der oligomeren Phosphorverbindungen nach Anspruch 1 bis 3, dadurch gekennzeichnet, daß man, wenn $b > 0$ ist, b Mole eines n-wertigen Alkohols der Formel

$$Z_n\ (-O-H)_n \qquad (II)$$

nach einem Mehr-Stufen-Verfahren (MSV) mit etwa $b \cdot n+e$ Anhydrid-Äquivalenten an organischen Phosphor-Anhydriden (III) der allgemeinen Formel

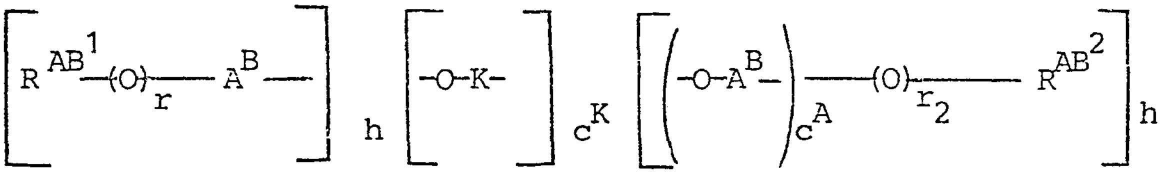 III

vermischt, wobei e die Zahl der freien Säurereste in den organischen Phosphoranhydriden (III) ist und Zahlen von 0 bis 6, vorzugsweise 2 - 4, wenn b = 0 oder 1 ist und 0, wenn b = 2 bis 6 ist, darstellt,

$A^B$ eine Gruppe der Formeln

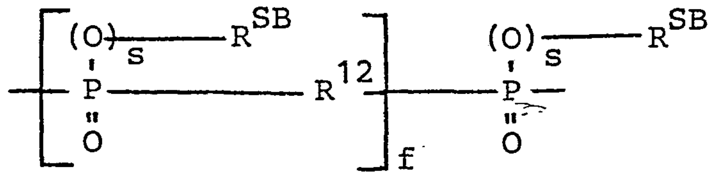

oder 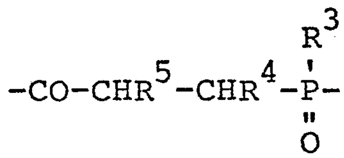

$R^{AB1}$ das selbe wie $R^{SB}$ und
$R^{AB2}$ das selbe wie $R^{SB}$ und,

bei $r_1 = 0$, auch $CN-C_2H_4-$
K 1 bis $c^K$ mal eine Gruppe der Formel

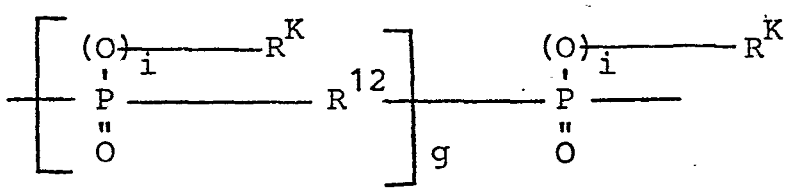

$(=K^P)$ oder

0 bis $c^k-1$ mal eine Gruppe der Formel

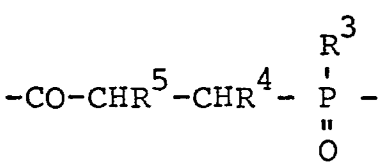

$(=K^{PL})$

h das selbe wie oben,
$R^K$ das selbe wie $R^1$ und zusätzlich, wenn i=0 ist auch $CN-C_2H_4-$,
$r_1$ und $r_2$ das selbe wie r,
b das selbe wie oben,
f das selbe wie oben,
$c^A$ 0 oder 1,
$c^K$ das selbe wie oben, und
c die Gesamtzahl aller möglichen Anhydrid-Äquivalente in III,

gemäß $c = c^A + c^K = (m + 1 + q) \cdot (b \cdot n + e)$ 2 bis 1201 bedeuten, das Gemisch bei Temperaturen bon 0° C bis 180° C, vorzugsweise 80° C bis 150° C, zu einem sauren Gemisch (SR) von Phosphor enthaltenden Säuren bzw. Estern der allgemein möglichen Zusammensetzung

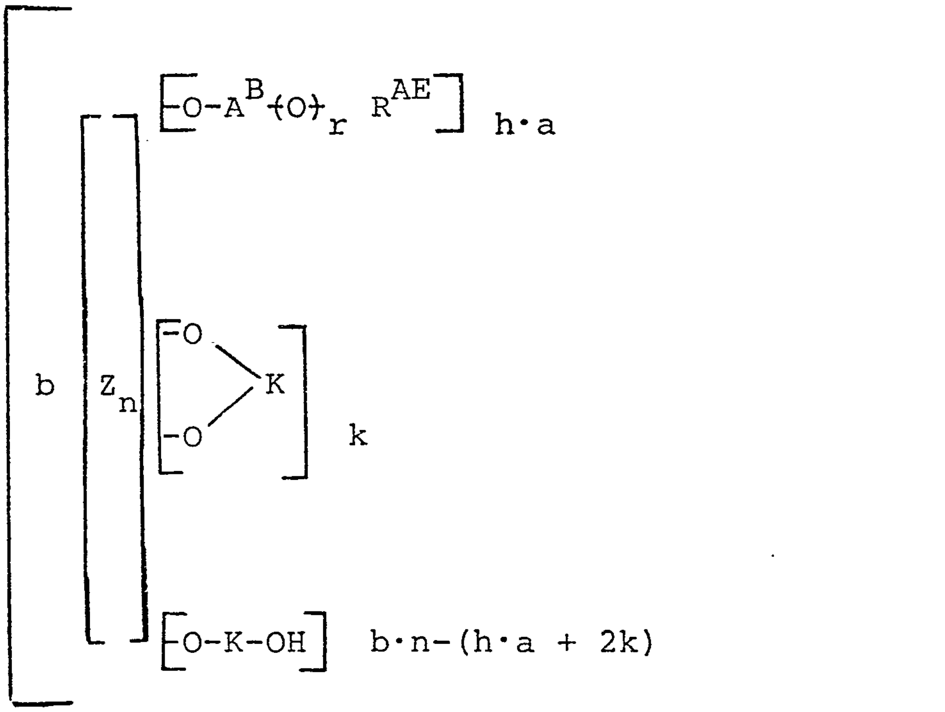

$(SB_{Z,A})$ $(SR_{Z,K2})$ $(SR_{Z,K1})$ $(SR_Z)$

$h \cdot (2-a)$ $\quad R^{AB}(O)_r\ A^B\text{-}OH \quad (SR_{A1})$

und $k + \frac{h \cdot a}{2} \quad K(OH)_2 \quad (SR_K)$

umsetzt und nach beendeter Umsetzung, kenntlich durch das Verschwinden der Anhydrid-Banden, das entstandene saure Reaktionsprodukt (SR), in dem q = 1 ist, mit der $b \cdot n{+}e$-fach molaren Menge eines Oxalkylierungsmittels der Formel

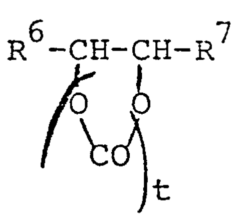

(IV), wobei t = 0 (Alkylenoxide $(IV_o)$) oder 1 (Alkylencarbonate $(IV_1)$) bedeutet, vermischt, sie für t = 0 bei Temperaturen von 20° C bis 240° C,

bevorzugt 60° - 180° C und für $t = 1$ von 80° bis 240° C, bevorzugt 150° bis 220° C, zum entsprechenden neutralen Hydroxyalkyl-Ester-Gemisch (ES), in dem $m = 0$ und $q = 0$ sind, bestehend insgesamt aus folgenden Estern

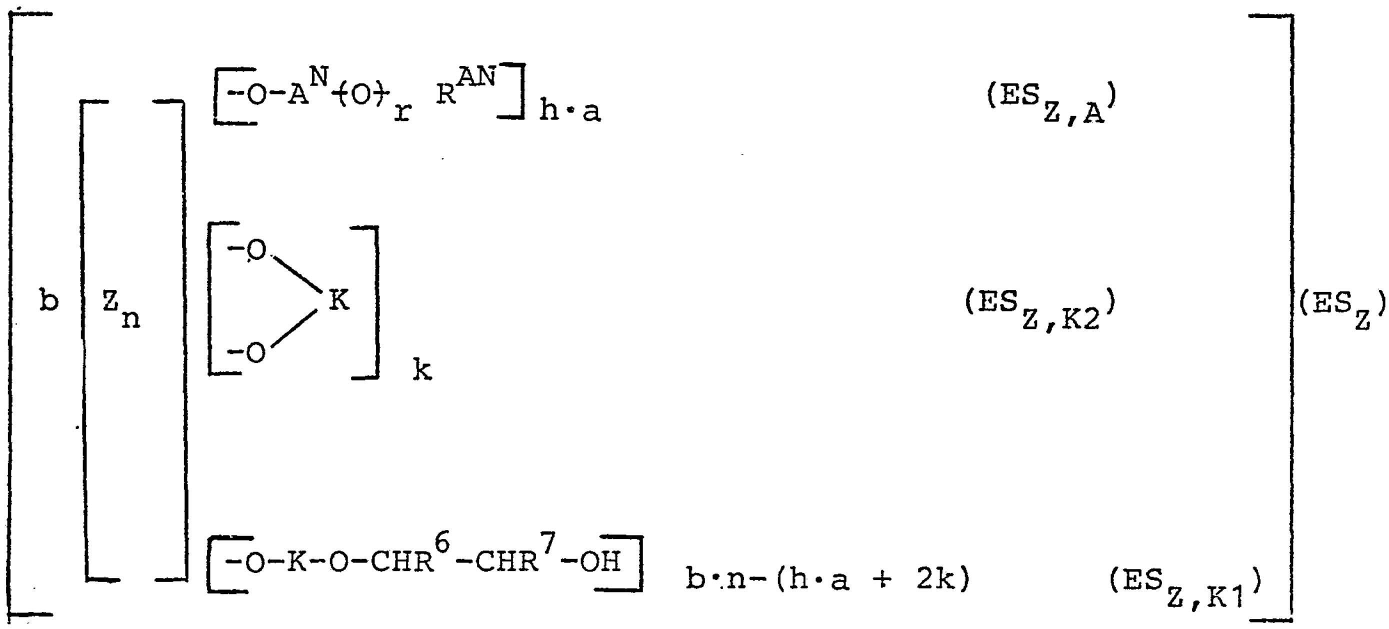

$(ES_{Z,A})$

$(ES_{Z,K2})$

$(ES_{Z,K1})$

$(ES_Z)$

$h\cdot(2-a)$ $R^{AN}(O)_r\ A^N-O-CHR^6-CHR^7-OH$ $(ES_A)$ und

$k + \frac{h\cdot a}{2}$ $K(O-CHR^6-CHR^7-OH)_2$ $(ES_K)$ ,

wobei $A^N$

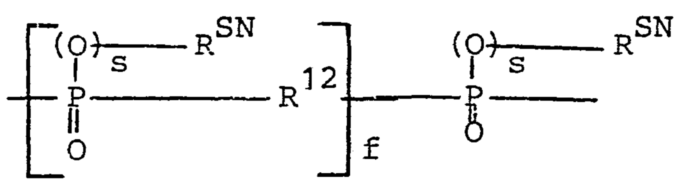

oder

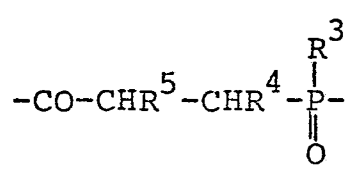

und

$R^{SN}$ das selbe wie $R^1$ und zusätzlich, wenn $s = 1$ und $R^{SB}$ Wasserstoff war, auch $-CHR^6-CHR^7-OH$,

$R^{AN}$ das selbe wie $R^{SN}$ und zusätzlich für $r = 0$ auch $CN-C_2H_4-$ und

N hochgestellt "neutralisiert"

bedeuten,

umsetzt, und nach beendeter Umsetzung, kenntlich durch Verschwinden der Säurezahl und bei t = 1 auch der $CO_2$-Entwicklung, bei obigen Reaktionstemperaturen die Zugabe von $b \cdot_{n+e}$ Anhydrid-Äquivalenten (m + q)fach und danach die Oxalkylierung der jeweiligen sauren Zwischenprodukte - insgesamt m fach - wiederholt.

5. Verfahren nach Anspruch 4, dadurch gekennzeichnet, daß man einen Alkohol der Formel II mit insgesamt $c = (b \cdot n+e) \cdot (m+1+q)$ Anhydrid-Äquivalenten von organischen Phosphor-Anhydriden der Formel III und gegebenenfalls einem schwerflüchtigen Oxalkylierungsmittel (IV) bei Temperaturen von 80° C bis 180° C, vorzugsweise 100° bis 150° C, vermischt und nach Abklingen der Reaktionswärme mit der etwa $u = (b \cdot n+e) \cdot (m+1)$fach molaren Menge eines Oxalkylierungsmittels der Formel IV wobei u deren Gesamt-Molzahl bedeutet, bevorzugt unter Rühren, bei den jeweiligen Oxalkylierungstemperaturen umsetzt, bis die Umsetzung - kenntlich am Verschwinden der Anhydrid-Banden und für t = 1 auch der $CO_2$-Entwicklung und für q = 0 auch der Säurezahl - beendet ist.

6. Verfahren zur Herstellung der oligomeren Phosphorverbindungen nach Anspruch 1 bis 3 dadurch gekennzeichnet, daß man $c = e \cdot (m+1+q)$ Anhydrid-Äquivalente der Phosphor-Anhydride der Formel III mit e sauren End- oder Seitengruppen mit etwa c Molen der Oxalkylierungsmittel (IV) bei den jeweiligen Oxalkylierungstemperaturen bis zur Entstehung noch saurer End-Reaktions-Verbindungen des Typs $I_{bo}$ (mit q = 1) oder mit mindestens etwa 2+c Molen von IV bis zur Entstehung neutraler 2-Hydroxyalkyl-Ester des Typs I (mit q = 0) umsetzt.

7. Verwendung der oligomeren Phosphorverbindungen nach Anspruch 1 bis 3 zur flammhemmenden Ausrüstung von Textimaterial.

Europäisches Patentamt

# EUROPÄISCHER RECHERCHENBERICHT

0000024

Nummer der Anmeldung
EP 78 10 003

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| XD | FR - A - 2 325 658 (HOECHST)<br>* Patentansprüche; Beispiel 63; Seite 51 *<br>-- | 1-7 |
| | DE - B - 1 156 563 (HOECHST)<br>* Patentanspruch 1 *<br>-- | 1-6 |
| X | US - A - 3 764 640 (W.KLOSE)<br>* Spalte 2, Zeilen 28 bis 54 *<br>-- | 1-7 |
| A | US - A - 4 012 463 (E.N.WALSH u.a.)<br>* Anspruch 1 *<br>-- | 1-6 |
| | GB - A - 1 080 938 (KUHLMANN)<br>* Seite 3, Zeilen 14-26; Beispiel 1; Seite 4 *<br>-- | 1-6 |
| A | US - A - 3 657 145 (F.E.MANGE u.a.)<br>* Spalte 2, Zeilen 24,44,60 *<br>---- | 1-6 |

KLASSIFIKATION DER ANMELDUNG (Int.Cl.²)

C 08 G 79/04
C 08 K 5/53
C 07 F 9/28
C 07 F 9/32
C 07 F 9/40
D 06 M 15/62

RECHERCHIERTE SACHGEBIETE (Int. Cl.²)

C 08 G 79/04
C 07 F 9/28
C 07 F 9/32
C 07 F 9/40

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.